# EUROPEAN PATENT APPLICATION

(11) **EP 3 611 949 A1**
(43) Date of publication of application: **19.02.2020**
(21) Application number: 17909068.3
(22) Date of filing: 31.07.2017
(51) Int. Cl.: H04W 12/02, H04W 12/04

(54) **KEY CONFIGURATION METHOD, APPARATUS AND SYSTEM**

(30) Priority: 06.05.2017 CN 201710314224; 03.07.2017 WO PCT/CN2017/091511
(71) Applicant: Huawei Technologies Co., Ltd., Longgang District Shenzhen, Guangdong 518129 (CN)
(72) Inventor: ZHANG, Bo, Shenzhen, Guangdong 518129 (CN); WU, Rong, Shenzhen, Guangdong 518129 (CN); GAN, Lu, Shenzhen, Guangdong 518129 (CN); LI, Yan, Shenzhen, Guangdong 518129 (CN)
(74) Representative: Epping - Hermann - Fischer
(86) International application number: PCT/CN2017/095301
(87) International publication number: WO 2018/205427

(57) **Abstract**

Embodiments of the present invention disclose a key configuration method, an apparatus, and a system. The method includes: receiving, by a policy function network element, a request for communication between user equipment and a network device; determining a user plane protection mechanism based on the request, UE registration information, subscription service data, and a service security requirement; and when the network device is a CN device, sending, by the policy function network element, the user plane protection mechanism to an algorithm network element, where the algorithm network element determines a security protection algorithm based on the user plane protection mechanism, generates a first user plane protection key based on the security protection algorithm, sends the first user plane protection key to the CN device, and sends the security protection algorithm to the user equipment, and the user equipment generates a second user plane protection key based on the security protection algorithm. Through implementation of the embodiments of the present invention, the user equipment and the network device can separately configure the user plane protection keys in 5G communication, thereby improving security of user plane data transmission and implementing network security protection.

## Description

### TECHNICAL FIELD

The present invention relates to the communications field, and in particular, to a key configuration method, an apparatus, and a system.

### BACKGROUND

In an existing network security architecture, data security is protected in a hop-by-hop manner, that is, security is protected segment by segment. In an example of data transmission on a link "terminal device->base station->serving gateway->PDN gateway", security protection is performed once between the terminal device and the base station, security protection is performed once between the base station and the serving gateway, and security protection is performed once between the serving gateway and the PDN gateway. In a data transmission process, data may leak if a problem occurs in an intermediate node.

In addition, in the existing network security architecture, a PDCD air interface protection mechanism is used between the terminal device and the base station. The PDCD air interface protection mechanism supports only one set of user data protection mechanisms. To be specific, even if a plurality of types of service data are transmitted between the terminal device and the base station, security protection for the plurality of types of service data can be performed by using only one encryption algorithm and integrity protection algorithm. It can be learned that in the prior art, differentiated security protection is not supported, and uniform security protection is required for all service data on a base station side.

In addition, in future 5G planning, network elements in a 5G network are required to support service-based security policy negotiation. However, existing security algorithm negotiation in LTE is used only for user plane or control plane security algorithm negotiation, but does not support service-based security policy negotiation. Therefore, an existing LTE negotiation mechanism cannot be directly applied to future 5G communication.

### SUMMARY

Embodiments of the present invention disclose a key configuration method, an apparatus, and a system, so that user equipment and a network device can separately configure user plane protection keys in 5G communication, thereby improving security of user plane data transmission and implementing network security protection.

According to a first aspect, an embodiment of the present invention provides a key configuration method, applied to a policy function network element side in a communications system, where the method includes:
receiving, by a policy function network element, a request for communication between user equipment and a network device, where the request includes a session identifier, a user equipment identifier, and security requirement indication information, and the security requirement indication information is used to indicate a user equipment security requirement and/or a service security requirement;
determining, by the policy function network element, a user plane protection mechanism based on the request and at least one of UE registration information fed back by a unified data manager UDM, subscription service data fed back by the UDM, and a service security requirement fed back by an application function AF, where the user plane protection mechanism is used to indicate whether encryption and/or integrity protection are/is required for user plane data transmitted between the user equipment and the network device; and
when the network device is an access network AN device, sending, by the policy function network element, the user plane protection mechanism to the AN device, where the AN device is configured to determine a security protection algorithm based on the user plane protection mechanism, and generate a first user plane protection key based on the security protection algorithm, and the AN device is further configured to send the security protection algorithm to the user equipment, so that the user equipment generates a second user plane protection key based on the security protection algorithm; or
when the network device is a core network CN device, sending, by the policy function network element, the user plane protection mechanism to an algorithm network element, where the algorithm network element is configured to determine a security protection algorithm based on the user plane protection mechanism, generate a first user plane protection key based on the security protection algorithm, and send the first user plane protection key to the CN device, and the algorithm network element is further configured to send the security protection algorithm to the user equipment, so that the user equipment generates a second user plane protection key based on the security protection algorithm.

When the first user plane protection key is used to perform security protection on the user plane data, the second user plane protection key is used to restore the user plane data; or when the second user plane protection key is used to perform security protection on the user plane data, the first user plane protection key is used to restore the user plane data, where the security protection is encryption and/or integrity protection, and whether encryption and/or integrity protection are/is to be performed is indicated by the user plane protection mechanism.

With reference to the first aspect, in a possible implementation, the request further includes at least one of a service identifier, a user equipment service identifier, a data network name DNN, and a user equipment security capability.

The request is an attach request, the attach request is initiated by the user equipment to an authentication server function AUSF, and the attach request is used to perform bidirectional authentication between the network device and the AUSF, and is further used to trigger the policy function network element to determine the user plane protection mechanism; or
the request is a session request, the session request is initiated by the user equipment to a session management function SMF, or is initiated by an access and mobility management function AMF to the SMF, and the session request is used to create a session between the network device and the SMF, and is further used to trigger the policy function network element to determine the user plane protection mechanism; or
the request is a policy request, the policy request is initiated by the SMF to the policy function network element, and the policy request is used to trigger the policy function network element to determine the user plane protection mechanism.

With reference to the first aspect, in a possible implementation, the user plane protection mechanism is further used to indicate at least one of a security protection algorithm, a key length, and a key update period that need to be used for the user plane data transmitted between the user equipment and the network device.

The policy function network element includes one of a policy control function PCF, the authentication server function AUSF, the access and mobility management function AMF, the session management function SMF, and the CN device.

The CN device is a user plane function UPF, and the algorithm network element includes at least one of the PCF, the AUSF, the AMF, the SMF, and the AN device.

With reference to the first aspect, in a possible implementation, that the AN device is configured to determine a security protection algorithm based on the user plane protection mechanism includes:
if the user plane protection mechanism includes no security protection algorithm, determining the security protection algorithm based on at least one of the user plane protection mechanism, the user equipment security capability, and an algorithm priority list supported by the AN device; or if the user plane protection mechanism includes a security protection algorithm, directly obtaining the security protection algorithm in the user plane protection mechanism.

With reference to the first aspect, in a possible implementation, that the algorithm network element is configured to determine a security protection algorithm based on the user plane protection mechanism includes:
if the user plane protection mechanism includes no security protection algorithm, determining the security protection algorithm based on at least one of the user plane protection mechanism, the user equipment security capability, and an algorithm priority list supported by the CN device; or if the user plane protection mechanism includes a security protection algorithm, directly obtaining the security protection algorithm in the user plane protection mechanism.

With reference to the first aspect, in a possible implementation, when the network device is an AN device, the generating a first user plane protection key based on the security protection algorithm includes:
first user plane protection key = KDF(K_AN, UP algorithm ID), where K_AN is a base station key derived, after authentication succeeds, by the AMF based on a base key obtained after the authentication or a key derived again after the authentication, and the AN device obtains K_AN from the AMF; or
when the network device is a CN device, the generating a first user plane protection key based on the security protection algorithm includes:
   first user plane protection key = KDF(K_algorithm network element, UP algorithm ID), where K_algorithm network element is a base station key derived, after authentication succeeds, by the AMF or the AUSF based on a base key obtained after the authentication or a key derived again after the authentication, and the algorithm network element obtains K algorithm network element from the AMF or the AUSF, where
   UP algorithm ID is an identifier of an encryption algorithm or an identifier of an integrity protection algorithm, and KDF is a key derivation function.

With reference to the first aspect, in a possible implementation, the user plane data is carried on a quality of service flow QoS flow transport channel;
before the determining a user plane protection mechanism, the method includes: determining a quality of service flow identifier QoS flow ID corresponding to the QoS flow transport channel; and
the determining a user plane protection mechanism includes: determining a user plane protection mechanism corresponding to the QoS flow ID, where there is a mapping relationship between the QoS flow ID and the user plane protection mechanism.

With reference to the first aspect, in a possible implementation, the determining a QoS flow ID corresponding to the QoS flow transport channel includes:
selecting, based on a security requirement and/or a QoS requirement, a QoS flow ID corresponding to a preset QoS flow transport channel; or
newly creating a QoS flow transport channel based on a security requirement and/or a QoS requirement, and generating a QoS flow ID corresponding to the QoS flow transport channel, where
the security requirement is a security requirement indicated by at least one of the indication information, the UE registration information, the subscription service data, and the service security requirement fed back by the AF, and the QoS requirement is a requirement for a quality of service parameter in a communications network.

With reference to the first aspect, in a possible implementation, the user plane data is carried on a data radio bearer DRB transport channel;
before the determining a user plane protection mechanism, the method includes: determining a data radio bearer identifier DRB ID corresponding to the DRB transport channel; and
the determining a user plane protection mechanism includes: determining a user plane protection mechanism corresponding to the DRB ID, where there is a mapping relationship between the DRB ID and the user plane protection mechanism.

With reference to the first aspect, in a possible implementation, the determining a DRB ID corresponding to the DRB transport channel includes:
selecting, based on the security requirement and/or the QoS requirement, a DRB ID corresponding to a preset DRB transport channel; or
newly creating a DRB transport channel based on the security requirement and/or the QoS requirement, and generating a DRB ID corresponding to the DRB transport channel, where
the security requirement is a security requirement indicated by at least one of the indication information, the UE registration information, the subscription service data, and the service security requirement fed back by the AF, and the QoS requirement is a requirement for a quality of service parameter in a communications network.

With reference to the first aspect, in a possible implementation, the user plane data is carried on a session session transport channel;
before the determining a user plane protection mechanism, the method includes: determining a session identifier session ID corresponding to the session transport channel; and
the determining a user plane protection mechanism includes: determining a user plane protection mechanism corresponding to the session ID, where there is a mapping relationship between the session ID and the user plane protection mechanism.

In a possible embodiment, the determining a user plane protection mechanism further includes:
establishing a mapping from the session ID and the QoS flow ID to the DRB ID, so that QoS flows with a same user plane protection mechanism are mapped to a same DRB.

With reference to the first aspect, in a possible implementation, when the network device is an AN device, the generating a first user plane protection key based on the security protection algorithm includes:
first user plane protection key = KDF(K_AN, UP algorithm ID); or
first user plane protection key = KDF(K_AN, UP algorithm ID, flow ID); or
first user plane protection key = KDF(K_AN, UP algorithm ID, session ID); or
first user plane protection key = KDF(K AN, UP algorithm ID, DRB ID); or
when the network device is a CN device, the generating a first user plane protection key based on the security protection algorithm includes:
   first user plane protection key = KDF(K_algorithm network element, UP algorithm ID); or
   first user plane protection key = KDF(K_algorithm network element, UP algorithm ID, flow ID); or
   first user plane protection key = KDF(K_algorithm network element, UP algorithm ID, session ID); or first user plane protection key = KDF(K algorithm network element, UP algorithm ID, DRB ID).

With reference to the first aspect, in a possible implementation, before the determining a user plane protection mechanism, the method further includes:
performing, by the user equipment, secondary authentication with a data network DN based on the session request, and feeding back an authentication result to the policy function network element, so that the policy function network element determines the user plane protection mechanism based on the authentication result.

According to a second aspect, an embodiment of the present invention provides a policy function network element, configured to implement the method according to the first aspect, where the policy function network element includes a receiving module, a policy module, and a sending module, where
the receiving module is configured to receive a request for communication between user equipment and a network device, where the request includes a session identifier, a user equipment identifier, and security requirement indication information, and the security requirement indication information is used to indicate a user equipment security requirement and/or a service security requirement;
the policy module is configured to determine a user plane protection mechanism based on the request and at least one of UE registration information fed back by a unified data manager UDM, subscription service data fed back by the UDM, and a service security requirement fed back by an application function AF, where the user plane protection mechanism is used to indicate whether encryption, integrity protection, or both encryption and integrity protection are required for user plane data transmitted between the user equipment and the network device;
the sending module is configured to: when the network device is an access network AN device, send the user plane protection mechanism to the AN device, where the AN device is configured to determine a security protection algorithm based on the user plane protection mechanism, and generate a first user plane protection key based on the security protection algorithm, and the AN device is further configured to send the security protection algorithm to the user equipment, so that the user equipment generates a second user plane protection key based on the security protection algorithm; and
the sending module is further configured to: when the network device is a core network CN device, send the user plane protection mechanism to an algorithm network element, where the algorithm network element is configured to determine a security protection algorithm based on the user plane protection mechanism, generate a first user plane protection key based on the security protection algorithm, and send the first user plane protection key to the CN device, and the algorithm network element is further configured to send the security protection algorithm to the user equipment, so that the user equipment generates a second user plane protection key based on the security protection algorithm.

According to a third aspect, an embodiment of the present invention provides another policy function network element, where the policy function network element includes a processor, a memory, a transmitter, and a receiver, and the processor, the memory, the transmitter, and the receiver are connected each other (for example, are connected to each other by using a bus), where the processor is configured to read program code stored in the memory, to perform the following steps:
receiving a request for communication between user equipment and a network device by using the receiver, where the request includes a session identifier, a user equipment identifier, and security requirement indication information, and the security requirement indication information is used to indicate a user equipment security requirement and/or a service security requirement;
determining, by the processor, a user plane protection mechanism based on the request and at least one of UE registration information fed back by a unified data manager UDM, subscription service data fed back by the UDM, and a service security requirement fed back by an application function AF, where the user plane protection mechanism is used to indicate whether encryption, integrity protection, or both encryption and integrity protection are required for user plane data transmitted between the user equipment and the network device; and
when the network device is an access network AN device, sending the user plane protection mechanism to the AN device by using the transmitter, where the AN device is configured to determine a security protection algorithm based on the user plane protection mechanism, and generate a first user plane protection key based on the security protection algorithm, and the AN device is further configured to send the security protection algorithm to the user equipment, so that the user equipment generates a second user plane protection key based on the security protection algorithm; or
when the network device is a core network CN device, sending the user plane protection mechanism to an algorithm network element by using the transmitter, where the algorithm network element is configured to determine a security protection algorithm based on the user plane protection mechanism, generate a first user plane protection key based on the security protection algorithm, and send the first user plane protection key to the CN device, and the algorithm network element is further configured to send the security protection algorithm to the user equipment, so that the user equipment generates a second user plane protection key based on the security protection algorithm.

With reference to the third aspect, in a possible embodiment, the request further includes at least one of a service identifier, a user equipment service identifier, a data network name DNN, and a user equipment security capability.

With reference to the third aspect, in a possible embodiment, the request is an attach request, the attach request is initiated by the user equipment to an authentication server function AUSF, and the attach request is used to perform bidirectional authentication between the network device and the AUSF, and is further used to trigger the policy function network element to determine the user plane protection mechanism.

With reference to the third aspect, in a possible embodiment, the request is a session request, the session request is initiated by the user equipment to a session management function SMF, or is initiated by an access and mobility management function AMF to the SMF, and the session request is used to create a session between the network device and the SMF, and is further used to trigger the policy function network element to determine the user plane protection mechanism.

With reference to the third aspect, in a possible embodiment, the request is a policy request, the policy request is initiated by the SMF to the policy function network element, and the policy request is used to trigger the policy function network element to determine the user plane protection mechanism.

With reference to the third aspect, in a possible embodiment, the user plane protection mechanism is further used to indicate at least one of a security protection algorithm, a key length, and a key update period that need to be used for the user plane data transmitted between the user equipment and the network device.

With reference to the third aspect, in a possible embodiment, the user plane protection mechanism is further used to indicate a list of security protection algorithms, with priorities, that may be used for the user plane data transmitted between the user equipment and the network device.

With reference to the third aspect, in a possible embodiment, the policy function network element includes one of a policy control function PCF, the authentication server function AUSF, the access and mobility management function AMF, the session management function SMF, and the AN device.

The CN device is a user plane function UPF, and the algorithm network element includes at least one of the PCF, the AUSF, the AMF, the SMF, and the AN device.

With reference to the third aspect, in a possible embodiment, that the AN device is configured to determine a security protection algorithm based on the user plane protection mechanism includes:
if the user plane protection mechanism includes no security protection algorithm, determining the security protection algorithm based on at least one of the user plane protection mechanism, the user equipment security capability, and an algorithm priority list supported by the AN device; or if the user plane protection mechanism includes a security protection algorithm, directly obtaining the security protection algorithm in the user plane protection mechanism.

With reference to the third aspect, in a possible embodiment, that the algorithm network element is configured to determine a security protection algorithm based on the user plane protection mechanism includes:
if the user plane protection mechanism includes no security protection algorithm, determining the security protection algorithm based on at least one of the user plane protection mechanism, the user equipment security capability, and an algorithm priority list supported by the CN device; or if the user plane protection mechanism includes a security protection algorithm, directly obtaining the security protection algorithm in the user plane protection mechanism.

With reference to the third aspect, in a possible embodiment, when the network device is an AN device, the generating a first user plane protection key based on the security protection algorithm includes:
first user plane protection key = KDF(K_AN, UP algorithm ID), where K_AN is a base station key derived, after authentication succeeds, by the AMF based on a base key obtained after the authentication or a key derived again after the authentication, and the AN device obtains K_AN from the AMF; or
when the network device is a CN device, the generating a first user plane protection key based on the security protection algorithm includes:
   first user plane protection key = KDF(K_algorithm network element, UP algorithm ID), where K_algorithm network element is a base station key derived, after authentication succeeds, by the AMF or the AUSF based on a base key obtained after the authentication or a key derived again after the authentication, and the algorithm network element obtains K algorithm network element from the AMF or the AUSF, where
   UP algorithm ID is an identifier of an encryption algorithm or an identifier of an integrity protection algorithm, and KDF is a key derivation function.

With reference to the third aspect, in a possible embodiment, the method includes: the user plane data is carried on a quality of service flow QoS flow transport channel; and
if a quality of service flow identifier QoS flow ID corresponding to the QoS flow transport channel exists, and a QoS flow corresponding to the QoS flow ID meets a user plane protection mechanism or a QoS requirement or both a user plane protection mechanism and a QoS requirement, selecting the QoS flow transport channel to transmit the user plane data; otherwise, newly creating a QoS flow transport channel, and generating a QoS flow ID corresponding to the QoS flow transport channel; or if a QoS flow ID corresponding to the QoS flow transport channel exists, and a QoS flow corresponding to the QoS flow ID meets a user plane protection mechanism, selecting the QoS flow transport channel to transmit the user plane data; otherwise, newly creating a QoS flow transport channel, and generating a QoS flow ID corresponding to the QoS flow transport channel, where
the QoS requirement is a requirement for a quality of service parameter in a communications network.

With reference to the third aspect, in a possible embodiment, the method includes: the user plane data is carried on a data radio bearer DRB transport channel; and
if a data radio bearer identifier DRB ID corresponding to the DRB transport channel exists, and a DRB corresponding to the DRB ID meets a user plane protection mechanism or a QoS requirement or both a user plane protection mechanism and a QoS requirement, selecting the DRB transport channel to transmit the user data; otherwise, newly creating a DRB transport channel, and generating a DRB ID corresponding to the DRB transport channel; or if a DRB ID corresponding to the DRB transport channel exists, and a DRB corresponding to the DRB ID meets a user plane protection mechanism, selecting the DRB transport channel to transmit the user data; otherwise, newly creating a DRB transport channel, and generating a DRB ID corresponding to the DRB transport channel, where
there is a mapping relationship between the DRB ID and the user plane protection mechanism.

Optionally, the method includes: the user plane data is carried on a session session transport channel; and
if a session identifier session ID corresponding to the session transport channel exists, and a session corresponding to the session ID meets a user plane protection mechanism or a QoS requirement or both a user plane protection mechanism and a QoS requirement, selecting the session transport channel to transmit the user data; otherwise, newly creating a session transport channel, and generating a session ID corresponding to the session transport channel; or if a session ID corresponding to the session transport channel exists, and a session corresponding to the session ID meets a user plane protection mechanism, selecting the session transport channel to transmit the user data; otherwise, newly creating a session transport channel, and generating a session ID corresponding to the session transport channel, where
there is a mapping relationship between the session ID and the user plane protection mechanism.

With reference to the third aspect, in a possible embodiment, a mapping from the session ID and the QoS flow ID to the DRB ID is established, so that QoS flows with a same user plane protection mechanism are mapped to a same DRB.

With reference to the third aspect, in a possible embodiment, when the network device is an AN device, the generating a first user plane protection key based on the security protection algorithm includes:
first user plane protection key = KDF(K_AN, UP algorithm ID); or
first user plane protection key = KDF(K_AN, UP algorithm ID, flow ID); or
first user plane protection key = KDF(K_AN, UP algorithm ID, session ID); or
first user plane protection key = KDF(K AN, UP algorithm ID, DRB ID).

With reference to the third aspect, in a possible embodiment, when the network device is a CN device, the generating a first user plane protection key based on the security protection algorithm includes:
first user plane protection key = KDF(K_algorithm network element, UP algorithm ID); or
first user plane protection key = KDF(K_algorithm network element, UP algorithm ID, flow ID); or
first user plane protection key = KDF(K_algorithm network element, UP algorithm ID, session ID); or first user plane protection key = KDF(K algorithm network element, UP algorithm ID, DRB ID).

According to a fourth aspect, an embodiment of the present invention provides a communications system, where the communications system includes user equipment, a policy function network element, a network device, a unified data manager UDM, an application function AF, and an algorithm network element, the policy function network element is connected to the user equipment and the network device, the policy function network element is further connected to the UDM and the AF, and the algorithm network element is connected to the policy function network element and the network device, where
the policy function network element is configured to receive a request for communication between the user equipment and the network device, where the request includes a session identifier, a user equipment identifier, and security requirement indication information, and the security requirement indication information is used to indicate a user equipment security requirement and/or a service security requirement;
the policy function network element is further configured to determine a user plane protection mechanism based on the request and at least one of UE registration information fed back by the UDM, subscription service data fed back by the UDM, and a service security requirement fed back by the AF, where the user plane protection mechanism is used to indicate whether encryption, integrity protection, or both encryption and integrity protection are required for user plane data transmitted between the user equipment and the network device;
when the network device is an access network AN device, the policy function network element is further configured to send the user plane protection mechanism to the AN device, where the AN device is configured to determine a security protection algorithm based on the user plane protection mechanism, the AN device is further configured to generate a first user plane protection key based on the security protection algorithm and send the security protection algorithm to the user equipment, and the user equipment is configured to generate a second user plane protection key based on the security protection algorithm; and
when the network device is a core network CN device, the policy function network element is configured to send the user plane protection mechanism to the algorithm network element, where the algorithm network element is further configured to determine a security protection algorithm based on the user plane protection mechanism, the algorithm network element is further configured to generate a first user plane protection key based on the security protection algorithm, send the first user plane protection key to the CN device, and send the security protection algorithm to the user equipment, and the user equipment is configured to generate a second user plane protection key based on the security protection algorithm.

According to a fifth aspect, an embodiment of the present invention provides a key configuration method, including:
sending, by user equipment, a request, where the request includes a user equipment identifier;
receiving, by the user equipment, a response, where the response carries a security protection algorithm, the security protection algorithm is determined by using a user plane protection mechanism, the user plane protection mechanism is determined by a policy function network element based on the request and at least one of UE registration information fed back by a unified data manager UDM, subscription service data fed back by the UDM, and a service security requirement fed back by an application function AF, and the user plane protection mechanism is used to indicate whether encryption, integrity protection, or both encryption and integrity protection are required for user plane data transmitted between the user equipment and a network device; and
determining, by the user equipment, a user plane protection key based on the security protection algorithm, where the user plane protection key is used to perform security protection on the user plane data transmitted between the user equipment and the network device.

Optionally, the request further includes at least one of a service identifier, a user equipment service identifier, a data network name DNN, and a user equipment security capability.

Optionally, the request is an attach request, the attach request is initiated by the user equipment to an authentication server function AUSF, and the attach request is used to perform bidirectional authentication between the network device and the AUSF, and is further used to trigger the policy function network element to determine the user plane protection mechanism; or
the request is a session request, the session request is initiated by the user equipment to a session management function SMF, or is initiated by an access and mobility management function AMF to the SMF, and the session request is used to create a session between the network device and the SMF, and is further used to trigger the policy function network element to determine the user plane protection mechanism; or
the request is a policy request, the policy request is initiated by the SMF to the policy function network element, and the policy request is used to trigger the policy function network element to determine the user plane protection mechanism.

Optionally, the method according to any one of claims 40 to 42,the user plane protection mechanism is further used to indicate at least one of a security protection algorithm, a key length, and a key update period that need to be used for the user plane data transmitted between the user equipment and the network device.

Optionally, the method according to any one of claims 40 to 43,
the user plane protection mechanism is further used to indicate a list of security protection algorithms, with priorities, that may be used for the user plane data transmitted between the user equipment and the network device.

Optionally, the policy function network element includes one of a policy control function PCF, the authentication server function AUSF, the access and mobility management function AMF, the session management function SMF, and an AN device.

Optionally, the method according to any one of claims 40 to 45,
the determining, by the user equipment, a user plane protection key based on the security protection algorithm includes:
user plane protection key = KDF(K_AN, UP algorithm ID), where K_AN is a base station key derived, after authentication succeeds, by the AMF based on a base key obtained after the authentication or a key derived again after the authentication, and the AN device obtains K_AN from the AMF; or
when the network device is a CN device, the generating a first user plane protection key based on the security protection algorithm includes:
   user plane protection key = KDF(K algorithm network element, UP algorithm ID), where K_algorithm network element is a base station key derived, after authentication succeeds, by the user equipment based on a base key obtained after the authentication or a key derived again after the authentication, where
   UP algorithm ID is an identifier of an encryption algorithm or an identifier of an integrity protection algorithm, and KDF is a key derivation function.

Optionally, the network device is an access network AN device or a user plane function UPF.

According to a sixth aspect, an embodiment of the present invention provides a key configuration method, including:
receiving, by a user plane function, a response, where the response carries a security protection algorithm, the security protection algorithm is determined by using a user plane protection mechanism, the user plane protection mechanism is determined by a policy function network element based on the request and at least one of UE registration information fed back by a unified data manager UDM, subscription service data fed back by the UDM, and a service security requirement fed back by an application function AF, and the user plane protection mechanism is used to indicate whether encryption, integrity protection, or both encryption and integrity protection are required for user plane data transmitted between user equipment and the user plane function; and
determining, by the user plane function, a user plane protection key based on the security protection algorithm, where the user plane protection key is used to perform security protection on the user plane data transmitted between the user equipment and the user plane function.

Optionally, the user plane protection mechanism is further used to indicate at least one of a security protection algorithm, a key length, and a key update period that need to be used for the user plane data transmitted between the user equipment and the network device.

Optionally, the user plane protection mechanism is further used to indicate a list of security protection algorithms, with priorities, that may be used for the user plane data transmitted between the user equipment and the network device.

Optionally, the policy function network element includes one of a policy control function PCF, an authentication server function AUSF, an access and mobility management function AMF, a session management function SMF, and an AN device.

According to a seventh aspect, an embodiment of the present invention provides a key configuration method, including:
receiving, by an access network device, a user plane protection mechanism, where the user plane protection mechanism is determined by a policy function network element based on the request and at least one of UE registration information fed back by a unified data manager UDM, subscription service data fed back by the UDM, and a service security requirement fed back by an application function AF, and the user plane protection mechanism is used to indicate whether encryption, integrity protection, or both encryption and integrity protection are required for user plane data transmitted between the user equipment and a network device;
determining, by the access network device, a security protection algorithm based on the user plane protection mechanism, and generating a first user plane protection key based on the security protection algorithm; and
sending, by the access network device, the security protection algorithm to the user equipment, so that the user equipment generates a second user plane protection key based on the security protection algorithm.

Optionally, the user plane protection mechanism is further used to indicate at least one of a security protection algorithm, a key length, and a key update period that need to be used for the user plane data transmitted between the user equipment and the network device.

Optionally, the user plane protection mechanism is further used to indicate a list of security protection algorithms, with priorities, that may be used for the user plane data transmitted between the user equipment and the network device.

Optionally, the policy function network element includes one of a policy control function PCF, an authentication server function AUSF, an access and mobility management function AMF, a session management function SMF, and an AN device.

Optionally, that the access network device is configured to determine a security protection algorithm based on the user plane protection mechanism includes:
if the user plane protection mechanism includes no security protection algorithm, determining the security protection algorithm based on at least one of the user plane protection mechanism and an algorithm priority list supported by the access network device; or if the user plane protection mechanism includes a security protection algorithm, directly obtaining the security protection algorithm in the user plane protection mechanism.

Optionally, the generating a first user plane protection key based on the security protection algorithm includes:
first user plane protection key = KDF(K_AN, UP algorithm ID), where K_AN is a base station key derived, after authentication succeeds, by the AMF based on a base key obtained after the authentication or a key derived again after the authentication, and the access network device obtains K_AN from the AMF, where
UP algorithm ID is an identifier of an encryption algorithm or an identifier of an integrity protection algorithm, and KDF is a key derivation function.

According to an eighth aspect, an embodiment of the present invention provides a key configuration method, including:
receiving, by a session management function, a request for communication between user equipment and a network device, where the request includes a session identifier, a user equipment identifier, and security requirement indication information, and the security requirement indication information is used to indicate a user equipment security requirement and/or a service security requirement;
determining, by the session management function, a user plane protection mechanism based on the request and at least one of UE registration information fed back by a unified data manager UDM, subscription service data fed back by the UDM, and a service security requirement fed back by an application function AF, where the user plane protection mechanism is used to indicate whether encryption, integrity protection, or both encryption and integrity protection are required for user plane data transmitted between the user equipment and the network device; and
when the network device is an access network AN device, sending, by the session management function, the user plane protection mechanism to the AN device, where the AN device is configured to determine a security protection algorithm based on the user plane protection mechanism, and generate a first user plane protection key based on the security protection algorithm, and the AN device is further configured to send the security protection algorithm to the user equipment, so that the user equipment generates a second user plane protection key based on the security protection algorithm; or
when the network device is a core network CN device, sending, by the session management function, the user plane protection mechanism to an algorithm network element, where the algorithm network element is configured to determine a security protection algorithm based on the user plane protection mechanism, generate a first user plane protection key based on the security protection algorithm, and send the first user plane protection key to the CN device, and the algorithm network element is further configured to send the security protection algorithm to the user equipment, so that the user equipment generates a second user plane protection key based on the security protection algorithm.

Optionally, the request further includes at least one of a service identifier, a user equipment service identifier, a data network name DNN, and a user equipment security capability.

Optionally, the request is an attach request, the attach request is initiated by the user equipment to an authentication server function AUSF, and the attach request is used to perform bidirectional authentication between the network device and the AUSF, and is further used to trigger the policy function network element to determine the user plane protection mechanism; or
the request is a session request, the session request is initiated by the user equipment to a session management function SMF, or is initiated by an access and mobility management function AMF to the SMF, and the session request is used to create a session between the network device and the SMF, and is further used to trigger the policy function network element to determine the user plane protection mechanism; or
the request is a policy request, the policy request is initiated by the SMF to the policy function network element, and the policy request is used to trigger the policy function network element to determine the user plane protection mechanism.

Optionally, the user plane protection mechanism is further used to indicate at least one of a security protection algorithm, a key length, and a key update period that need to be used for the user plane data transmitted between the user equipment and the network device.

Optionally, the user plane protection mechanism is further used to indicate a list of security protection algorithms, with priorities, that may be used for the user plane data transmitted between the user equipment and the network device.

Optionally, the session management function determines that the user plane data is carried on a quality of service flow QoS flow transport channel; and
if a quality of service flow identifier QoS flow ID corresponding to the QoS flow transport channel exists, and a QoS flow corresponding to the QoS flow ID meets a user plane protection mechanism or a QoS requirement or both a user plane protection mechanism and a QoS requirement, selects the QoS flow transport channel to transmit the user plane data; otherwise, newly creates a QoS flow transport channel, and generates a QoS flow ID corresponding to the QoS flow transport channel; or
if a QoS flow ID corresponding to the QoS flow transport channel exists, and a QoS flow corresponding to the QoS flow ID meets a user plane protection mechanism, selects the QoS flow transport channel to transmit the user plane data; otherwise, newly creates a QoS flow transport channel, and generates a QoS flow ID corresponding to the QoS flow transport channel, where
the QoS requirement is a requirement for a quality of service parameter in a communications network.

Optionally, the session management function determines that the user plane data is carried on a data radio bearer DRB transport channel; and
if a data radio bearer identifier DRB ID corresponding to the DRB transport channel exists, and a DRB corresponding to the DRB ID meets a user plane protection mechanism or a QoS requirement or both a user plane protection mechanism and a QoS requirement, selects the DRB transport channel to transmit the user data; otherwise, newly creates a DRB transport channel, and generates a DRB ID corresponding to the DRB transport channel; or
if a DRB ID corresponding to the DRB transport channel exists, and a DRB corresponding to the DRB ID meets a user plane protection mechanism, selects the DRB transport channel to transmit the user data; otherwise, newly creates a DRB transport channel, and generates a DRB ID corresponding to the DRB transport channel, where
there is a mapping relationship between the DRB ID and the user plane protection mechanism.

Optionally, the session management function determines that the user plane data is carried on a session session transport channel; and
if a session identifier session ID corresponding to the session transport channel exists, and a session corresponding to the session ID meets a user plane protection mechanism or a QoS requirement or both a user plane protection mechanism and a QoS requirement, selects the session transport channel to transmit the user data; otherwise, newly creates a session transport channel, and generates a session ID corresponding to the session transport channel; or
if a session ID corresponding to the session transport channel exists, and a session corresponding to the session ID meets a user plane protection mechanism, selects the session transport channel to transmit the user data; otherwise, newly creates a session transport channel, and generates a session ID corresponding to the session transport channel, where
there is a mapping relationship between the session ID and the user plane protection mechanism.

According to a ninth aspect, an embodiment of the present invention provides a readable non-volatile storage medium for storing a computer instruction, including a computer instruction, where the computer instruction is executed to implement the method described in the first aspect.

According to a tenth aspect, an embodiment of the present invention provides a readable non-volatile storage medium for storing a computer instruction, including a computer instruction, where the computer instruction is executed to implement the method described in the fifth aspect.

According to an eleventh aspect, an embodiment of the present invention provides a readable non-volatile storage medium for storing a computer instruction, including a computer instruction, where the computer instruction is executed to implement the method described in the sixth aspect.

According to a twelfth aspect, an embodiment of the present invention provides a readable non-volatile storage medium for storing a computer instruction, including a computer instruction, where the computer instruction is executed to implement the method described in the seventh aspect.

According to a thirteenth aspect, an embodiment of the present invention provides a readable non-volatile storage medium for storing a computer instruction, including a computer instruction, where the computer instruction is executed to implement the method described in the eighth aspect.

According to a fourteenth aspect, an embodiment of the present invention provides a computer program product, where when the computer program product is run on a computer, the method described in the first aspect, the fifth aspect, the sixth aspect, the seventh aspect, or the eighth aspect is implemented.

Through implementation of the embodiments of the present invention, based on a future 5G communication architecture, in communication between the user equipment and the network device (an access network device or a core network device), when the user plane data needs to be transmitted, the user equipment and the network device can complete policy negotiation, and after the user plane protection mechanism is determined, the user equipment and the network device can separately configure the user plane protection keys, so that security protection for the user plane data is implemented. Through implementation of the embodiments of the present invention, network security protection based on a granularity of a QoS flow, a DRB, or a session can be implemented, so that a disadvantage of a hop-by-hop segment-based protection manner is avoided, and security of user plane data transmission is improved.

### BRIEF DESCRIPTION OF DRAWINGS

The following briefly describes the accompanying drawings required for the background or the embodiments.
FIG. 1 is a schematic diagram of a mobile communications network architecture according to an embodiment of the present invention;
FIG. 2 is a schematic diagram of a data transport channel according to an embodiment of the present invention;
FIG. 3 to FIG. 18 are schematic flowcharts of key configuration methods according to embodiments of the present invention;
FIG. 19 is a schematic structural diagram of a policy function network element according to an embodiment of the present invention; and
FIG. 20 is a schematic structural diagram of another policy function network element according to an embodiment of the present invention.

### DESCRIPTION OF EMBODIMENTS

The following describes the technical solutions in the embodiments of the present invention with reference to the accompanying drawings in the embodiments of the present invention.

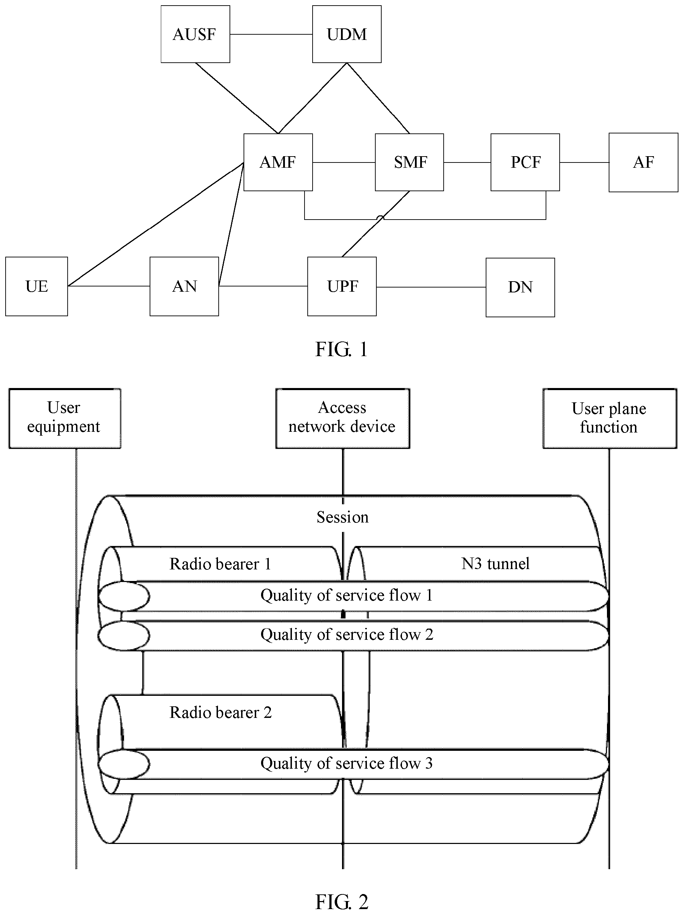

For ease of understanding the solutions, a network architecture to which the solutions of the embodiments of this application may be applied is first described by using an example with reference to a related accompanying drawing. FIG. 1 shows a future mobile communications network architecture. The network architecture includes user equipment and an operator network. The operator network includes a core network and a data network, and the user equipment accesses the carrier network by using an access network. Details are as follows:

The user equipment (User Equipment, UE) is a logical entity. Specifically, the UE may be any one of a terminal device (Terminal Equipment), a communications device (Communication Device), and an internet of things (Internet of Things, IoT) device. The terminal device may be a smartphone (smart phone), a smartwatch (smart watch), a smart tablet (smart tablet), or the like. The communications device may be a server, a gateway (Gateway, GW), a controller, or the like. The internet of things device may be a sensor, an electricity meter, a water meter, or the like.

An access network (access network, AN) is responsible for access of the user equipment. The AN may be a wireless access point, for example, a base station, a wireless fidelity (Wireless Fidelity, Wi-Fi) access point, or a Bluetooth access point; or may be a wired access point, for example, a gateway, a modem, fiber access, or IP access.

The data network (Data network, DN) may be an external network of an operator, or may be a network controlled by an operator, and is configured to serve a user.

Serving as a bearer network, the core network (core network, CN) provides an interface to the DN, and provides a communication connection, authentication, management, policy control, data service bearing, and the like for the UE. The CN includes an access and mobility management function, a session management function, an authentication server function, a policy control function, an application function, a user plane function, and the like. Related descriptions are specifically as follows:

The access and mobility management function (Access and Mobility Management Function, AMF) is configured to manage access and mobility of the UE.

The session management function (Session Management Function, SMF) is configured to perform session management, and create and manage a session (session), a flow (flow), or a bearer (bearer).

The authentication server function (Authentication Server Function, AUSF) is a node for performing bidirectional authentication between the UE and the operator network. The AUSF may be deployed separately as an independent logical functional entity, or may be integrated into a device such as the AMF/SMF.

The unified data manager (Unified Data Manager, UDM) is configured to store UE registration information, and may also store subscription service data.

A policy control function is deployed in the policy control function (Policy control Function, PCF), and the policy control function is a function of completing negotiation of a user plane protection mechanism based on a security requirement and determining the user plane protection mechanism in a network. It should be noted that the PCF may serve as an independent logical functional entity, or may be integrated into another network element. In other words, in specific implementation, the policy control function may be deployed in the PCF, or may be deployed in another network element, for example, deployed in a network element such as a mobility management (Mobility Management, MM) network element, the session management (Session Management, SM) function, the authentication server function (Authentication Server Function, AUSF), a policy charging and rules function (Policy charging and rules function, PCRF), a mobility management entity (Mobility Management Entity, MME), a home subscriber server (Home Subscriber Server, HSS), an authentication center (Authentication Center, AuC), an authentication credential repository and processing function (Authentication Credential Repository and Processing Function, ARPF), a security context management function (Security Context Management Function, SCMF), the access and mobility management function (Access and Mobility management Function, AMF), the session management function (Session Management Function, SMF), the access network (Access network, AN), or the user plane function (User plane function, UPF). In this embodiment of the present invention, a network element (for example, the PCF) in which the policy control function is deployed may interact with an AAA server (an external AAA server), an APP server, or a service server of a DN to obtain a security requirement on a DN side.

The application function (Application Function, AF) is configured to store a service security requirement, and provide policy determining information for the PCF.

The user plane function (User Plane Function, UPF) may be a gateway, a server, a controller, a user plane function network element, or the like. The UPF may be disposed inside the operator network, or may be disposed outside the operator network.

It should be further noted that logical relationships between various network elements are reflected in FIG. 1, but actually, some network elements may be deployed separately, or every two or more network elements may be integrated into one entity for deployment. For example, the AMF and the SMF may be deployed in one entity, or the AMF and the SMF may be deployed in different entities.

Based on the foregoing mobile communications network architecture, a data transport channel in a communication process is analyzed in the following.

From a longitudinal perspective, when user equipment needs to communicate with an operator network, at least two aspects of communication are included: (1) communication between the user equipment and an access network, and (2) communication between the user equipment and a core network. The communication between the user equipment and the access network is referred to as UE-AN communication for short. The UE-AN communication belongs to direct communication, and the UE makes a communication connection to the AN over an air interface. A user plane protection mechanism needs to be established between the UE and the AN to implement security of the UE-AN communication. The communication between the user equipment and the core network is referred to as UE-CN communication for short. The UE-CN communication belongs to indirect communication, and the UE makes a communication connection to the CN by using the access network. In this process, the access network has a function of transparent transmission or forwarding. A user plane protection mechanism needs to be established between the UE and the CN to implement security of the UE-CN communication.

From a horizontal perspective, a hardware infrastructure in a communications network may be sliced into a plurality of virtual end-to-end networks referred to as network slices, and the network slices are logically isolated in a process from the user equipment to the access network and then to the core network, so as to adapt to different requirements of various types of services. One network slice may include one or more sessions. In a data transmission process, different bearers may be used for different types of services. When the user equipment makes a communication connection to the access network or the core network, a plurality of bearers may exist in a same communication connection. The bearer is a logical transport channel provided between the UE and the AN or the UE and the CN, and each bearer is associated with a quality of service (Quality of Service, QoS) parameter set, for example, a bit rate, a latency, or an error rate, describing an attribute of the transport channel. The transport channel includes a session (for example, a PDU session), a radio bearer (for example, a data radio bearer), a flow (for example, a QoS flow), or the like. For ease of description, the following uses the PDU session, the data radio bearer, and the QoS flow as examples for description.

FIG. 2 is a simple schematic diagram of a data transport channel according to an embodiment of the present invention. As shown in FIG. 2, UE may make a communication connection to an AN, and the UE may also make a communication connection to a UPF in a core network. A network slice in the communication connection has a plurality of transport channels, including one PDU session and one or more QoS flows that are logically set between the UE and the UPF, one or more radio bearers that are logically set between the UE and the AN, and one N3 tunnel that is logically set between the AN and the UPF. Specific descriptions are as follows:

The PDU session is a coarse-grained data transport channel between the UE and the UPF. The PDU session includes a radio bearer (Radio Bearer) segment and an N3 tunnel segment, and the PDU session further includes a finer-grained QoS flow. In FIG. 2, the PUD session includes the N3 tunnel, a plurality of radio bearers (a radio bearer 1 and a radio bearer 2), and a plurality of QoS flows (a QoS flow 1, a QoS flow 2, and a QoS flow 3).

The radio bearer is a bearer channel between the UE and the AN. The radio bearer supports a signaling radio bearer and a data radio bearer (Data radio bearer, DRB). Different radio bearers may include different QoS flows. In FIG. 2, the radio bearer 1 includes the QoS flow 1 and the QoS flow 2, and the radio bearer 2 includes only the QoS flow 3.

The N3 tunnel is a data transport channel between the AN and the UPF, and may be used to transmit QoS flow data of the user equipment. In FIG. 2, the N3 tunnel includes the QoS flow 1, the QoS flow 2, and the QoS flow 3.

The QoS flow is a fine-grained data transport channel between the UE and the UPF. QoS flows have a uniform QoS requirement, and different QoS flows have different QoS flow identifiers (QFI ID).

To overcome a disadvantage in the prior art, based on the network architecture shown in FIG. 1 and the data transport channel architecture shown in FIG. 2, an embodiment of the present invention provides a key configuration method. The method is briefly described as follows:
1. A policy function network element receives a request for communication between user equipment and a network device.
   The policy function network element is one of a policy control function PCF, an authentication server function AUSF, an access and mobility management function AMF, a session management function SMF, and a CN device.
   The request is an attach request; or the request is a session request; or the request is a policy request.
   The request includes a session identifier, a user equipment identifier, and security requirement indication information, and the security requirement indication information is used to indicate a user equipment security requirement and/or a service security requirement. The request may further include at least one of a service identifier, a user equipment service identifier, a data network name DNN, and a user equipment security capability.
2. The policy function network element determines a user plane protection mechanism based on the request and at least one of UE registration information fed back by a unified data manager UDM, subscription service data fed back by the UDM, and a service security requirement fed back by an application function AF.
   The user plane protection mechanism is used to indicate whether encryption and/or integrity protection are/is required for user plane data transmitted between the user equipment and the network device. The user plane protection mechanism is further used to indicate at least one of a security protection algorithm, a key length, and a key update period that need to be used for the user plane data transmitted between the user equipment and the network device.
3. When the network device is an access network AN device, the policy function network element sends the user plane protection mechanism to the AN device, where
   the AN device is configured to determine a security protection algorithm based on the user plane protection mechanism;
   the AN device generates a first user plane protection key based on the security protection algorithm;
   the AN device sends the security protection algorithm to the user equipment; and
   the user equipment generates a second user plane protection key based on the security protection algorithm.
4. When the network device is a core network CN device (for example, a user plane function UPF), the policy function network element sends the user plane protection mechanism to an algorithm network element, where
   the algorithm network element is one of the PCF, the AUSF, the AMF, the SMF, and the AN device;
   the algorithm network element determines a security protection algorithm based on the user plane protection mechanism;
   the algorithm network element generates a first user plane protection key based on the security protection algorithm;
   the algorithm network element sends the first user plane protection key to the CN device;
   the algorithm network element sends the security protection algorithm to the user equipment; and
   the user equipment generates a second user plane protection key based on the security protection algorithm.

It may be understood that after the foregoing policy negotiation and key configuration procedure is completed, when uplink transmission needs to be performed on the user plane data, the user equipment performs security protection on the user plane data by using the second user plane protection key, to obtain protected user plane data, and then sends the protected user plane data to the network device; and the network device may restore the protected user plane data to the user plane data based on the first user plane protection key.

When downlink transmission needs to be performed on the user plane data, the network device performs security protection on the user plane data by using the first user plane protection key, to obtain protected user plane data, and then sends the protected user plane data to the user equipment; and the user equipment restores the protected user plane data to the user plane data based on the second user plane protection key.

In the embodiments of the present invention, based on the network architecture in FIG. 1 and separately based on UE-AN and UE-CN, the following describes, from a granularity-independent perspective and a granularity-dependent perspective, the key configuration method provided in the embodiments of the present invention.

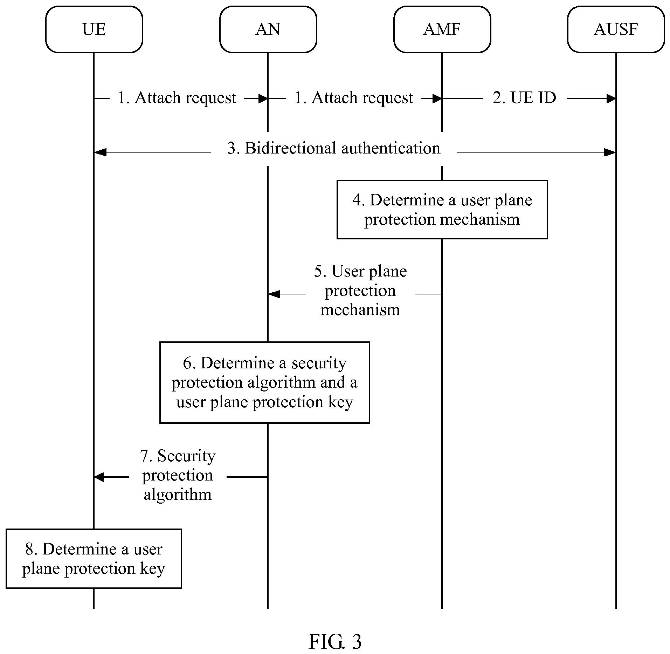

A key configuration method provided in an embodiment of the present invention is first described based on UE-AN from a granularity-independent perspective. As shown in FIG. 3, the key configuration method provided in this embodiment of the present invention includes the following steps.
1. In a network attach process, UE sends an attach request (attach request) to an AN, and then the AN sends the attach request to an AMF.

In this embodiment of the present invention, the attach request includes a user equipment identifier (UE ID), a user equipment security capability, and security requirement indication information (indicator), and the security requirement indication information is used to indicate the device security requirement and/or a service security requirement. In addition, the attach request may further include a service ID and a UE service ID. The attach request may further include a data network name (Data Network Name, DNN), and the DNN represents a name of a data network that the UE expects to access.

Specifically, the user equipment identifier (UE ID) is used to represent an identity of the user equipment that sends the attach request. For example, the UE ID may be one or more of a media access control (Media Access Control, MAC) address, an Internet protocol (Internet Protocol, IP) address, a mobile phone number, an international mobile equipment identity (International Mobile Equipment Identity, IMEI), an international mobile subscriber identity (International Mobile Subscriber Identity, IMSI), an IP multimedia private identity (IP Multimedia Private Identity, IMPI), a temporary mobile subscriber identity (Temporary Mobile Subscriber Identity, TMSI), an IP multimedia public identity (IP Multimedia Public Identity, IMPU), and a globally unique temporary UE identity (Globally Unique Temporary UE Identity, GUTI).

Specifically, the user equipment security capability is used to represent a security protection algorithm, a key length, a key update period, and the like that can be supported by the user equipment. It may be understood that because different user equipments have different storage capacities and operation speeds, different user equipments support different security protection algorithms, key lengths, and key update periods. For example, an internet of things (Internet of Things, IoT) device cannot support a security protection algorithm with relatively high complexity because the IoT device has a small storage capacity and a low operation speed, and a smartphone can support a security protection algorithm with relatively high complexity because the smartphone has a large storage capacity and a relatively high operation speed. Therefore, the user equipment needs to notify the AMF of the user equipment security capability, so that the AMF determines a user plane protection mechanism based on the user equipment security capability.

In this embodiment of the present invention, the security protection algorithm includes an encryption algorithm and an integrity protection algorithm. For example, the security protection algorithm may be any one of null, AES, Snow 3G, ZUC, and another algorithm, where null represents a null algorithm. The key length may be any one of 64 bits, 96 bits, 128 bits, 192 bits, 256 bits, and another length. The key update time may be any one of 6 hours, 12 hours, 24 hours, 48 hours, and another time. The security algorithm, the key length, and the key update time are used merely as examples for description, and should not constitute a limitation to this application.

Specifically, the device security requirement is used to indicate a security requirement on the user equipment side, in other words, the device security requirement is used to indicate a user plane protection mechanism required by the UE to the AMF. In this embodiment of the present invention, the user plane protection mechanism is used to indicate a user plane data transmission protection manner, for example, indicate whether the UE needs to perform encryption and/or integrity protection on user plane data. The user plane protection mechanism may be "encryption required + no integrity protection required", "encryption required + no integrity protection required", or "encryption required + integrity protection required". The encryption means that the user plane data becomes an unreadable ciphertext after being processed by using an encryption algorithm, so that the data is prevented from being illegally thieved and read. The integrity protection means that after the user plane data is processed by using an integrity protection algorithm, the data is not illegally added, deleted, replaced, or the like in a transmission process. In addition, in a possible embodiment of the present invention, the user plane protection mechanism may be further used to indicate a security protection algorithm, a key length acceptable to the UE, a key update period acceptable to the UE, and the like.

For example, the user plane protection mechanism may be further used to indicate a security protection algorithm, including indicating an encryption algorithm and indicating an integrity protection algorithm. The indicating an encryption algorithm is specifically specifying an encryption algorithm, including but not limited to null (a null algorithm, indicating that no encryption is to be performed), AES, Snow 3G, and ZUC, that is to be used to perform encryption protection on the user plane data. The indicating an integrity protection algorithm is specifically specifying an integrity protection algorithm, including but not limited to null (a null algorithm, indicating that no integrity protection is to be performed), AES, Snow 3G, ZUC, HMAC, and CMAC, that is to be used to perform integrity protection on the user plane data. A security protection algorithm in one security requirement may include a plurality of encryption algorithms and/or a plurality of integrity protection algorithms. In this case, the security requirement further includes algorithm priorities to indicate an algorithm that is to be preferentially used.

For another example, the key length that is acceptable to the UE and that is indicated by the user plane protection mechanism includes 64 bits, 128 bits, 256 bits, 512 bits, or the like. For another example, the key update period that is acceptable to the UE and that is indicated by the user plane protection mechanism may be 6 hours, 12 hours, 24 hours, 48 hours, or the like.

Specifically, the service security requirement is used to represent at least one of a security algorithm, a key length, and a key update period that are acceptable to a service. It may be understood that different services have different requirements on the security algorithm, the key length, and the key update period. For example, a financial service has a relatively high requirement on the security algorithm, but a video download service has a relatively low requirement on the security algorithm. Therefore, a first device needs to notify the AMF of the service security requirement, so that the AMF generates the user plane protection mechanism based on the service security requirement.

Specifically, the service ID is used to represent a service supported by the UE. For example, if the service is WeChat, the service ID is a WeChat identifier (WeChat ID).

Specifically, the UE service ID is used to represent an identifier of a service that the UE specifically needs to transmit in the service supported by the UE. For example, if the service is WeChat, the UE service ID is a WeChat user identifier (WeChat user ID).

In a communication architecture, before performing actual service transmission, the UE first needs to attach (attach) to a subscribed network to obtain a grant of the subscribed network. In a specific application scenario, the UE may trigger an attach process when the UE is powered on, and send an attach request to the AN; or after being totally disconnected from the network for a period of time, the UE may re-trigger an attach process and send an attach request to the AN when the UE needs to be connected to the network. After receiving the attach request, the AN forwards the attach request to the AMF.
2. The AMF sends the UE ID to an AUSF.
   In a specific embodiment, the AMF identifies the UE ID in the attach request, and sends the UE ID to the AUSF. In another specific embodiment, the AMF directly sends an authentication request to the AUSF, and after receiving the authentication request, the AUSF identifies the UE ID in the authentication request.
3. The UE performs bidirectional authentication with the AUSF.
   The AUSF performs authentication with the UE based on the UE ID, and determines that the UE is an authorized user.
4. The AMF determines the user plane protection mechanism.
   In this embodiment of the present invention, a policy control function is deployed in the AMF, and the AMF may determine the user plane protection mechanism in a plurality of manners.
   Manner 1: The AMF may determine the user plane protection mechanism based on the indicator. Manner 1 includes: (1) The AMF obtains the security requirement on the user equipment side (namely, the user equipment security requirement) based on the indicator, and the AMF may determine the user plane protection mechanism based on the user equipment security requirement. (2) The AMF obtains the service security requirement (the service security requirement) based on the indicator, and the AMF may determine the user plane protection mechanism based on the service security requirement.
   Manner 2: The AMF may determine the user plane protection mechanism based on UE registration information. The UE registration information is obtained by the AMF from a UDM. Specifically, after receiving the attach request of the UE, the AMF sends the UE ID to the UDM, to obtain the UE registration information from the UDM or obtain the UE registration information from the UDM by using the AUSF. The registration information is preset on the UDM, and the UE registration information includes a preset UE security requirement. The UE security requirement is used to indicate whether the UE needs to perform encryption, integrity protection, or both encryption and integrity protection.
   Manner 3: The AMF may determine the user plane protection mechanism based on subscription service data. Specifically, the AMF sends the service ID to a UDM, or sends the data network name (DNN) to a UDM. The UDM determines, based on the service ID or the DNN, the subscription service data preset on the UDM, and sends the related subscription service data to the AMF. The subscription service data includes a preset service security requirement, and the preset service security requirement is used to indicate a user plane protection mechanism required by a service, for example, indicate whether encryption, integrity protection, or both encryption and integrity protection are required for the service.
   Manner 4: The AMF may determine the user plane protection mechanism based on a service security requirement fed back by an AF. Specifically, a PCF sends a request to the AF, and the AF feeds back the service security requirement to the PCF based on the request. The request may include at least one of the UE ID, the service ID, the service UE ID, or the DNN. The PCF sends the service security requirement to the AMF, and further, the AMF obtains the service security requirement. The service security requirement is used to indicate a user plane protection mechanism required by a service, for example, indicate whether encryption, integrity protection, or both encryption and integrity protection are required for the service.

   In a specific embodiment of the present invention, the AMF may determine the user plane protection mechanism based on at least one of the indicator (the user equipment security requirement and/or the service security requirement), the UE registration information, the subscription service data, and the service security requirement fed back by the AF. In other words, the AMF may comprehensively determine the user plane protection mechanism based on the security requirement required on the user equipment side and a preset security requirement on a network side or the service security requirement.
5. The AMF sends the user plane protection mechanism to the AN, and correspondingly, the AN receives the user plane protection mechanism.
6. The AN determines a security protection algorithm and a user plane protection key.
   In a specific embodiment, after obtaining the user plane protection mechanism, the AN determines that the user plane protection mechanism between the UE and the AN is whether encryption is required and whether integrity protection is required. Then the AN determines the security protection algorithm based on the UE security capability and an algorithm priority list supported by the AN. For example, when the user plane protection mechanism is "encryption required + integrity protection required", the AN determines, based on the UE security capability and the algorithm priority list supported by the AN, that an encryption algorithm is AES and an integrity protection algorithm is AES.
   In another specific embodiment, a security protection algorithm is directly specified in the user plane protection mechanism, and the AN may directly obtain the security protection algorithm from the user plane protection mechanism. In step 5, after determining the user plane protection mechanism, the AMF may obtain an algorithm priority list supported by the AN, and determine an air interface protection algorithm based on the algorithm priority list supported by the AN, an algorithm supported by the UE, and the user equipment security capability. For example, in a user plane protection mechanism of "encryption required + integrity protection required", the AMF further determines that an encryption algorithm is AES and an integrity protection algorithm is AES, and adds the security protection algorithm to the user plane protection mechanism. In this case, because the encryption algorithm and the integrity protection algorithm are directly specified in the user plane protection mechanism, after obtaining the user plane protection mechanism, the AN may directly obtain the encryption algorithm and the integrity protection algorithm from the user plane protection mechanism.
   In addition, in a process of implementing the user plane protection mechanism in a specific application scenario, when the user plane protection mechanism includes "encryption required + integrity protection required", encryption and integrity protection are performed on the user plane data by using a same security protection algorithm, a same key length, and a same key update time, or encryption and integrity protection may be performed on the user plane data by using different security protection algorithms, different key lengths, and different key update times. For example, in a specific embodiment, during protection of confidentiality and integrity of a session, for the confidentiality, a used security protection algorithm is the Snow 3G algorithm, a key length is 64 bits, and a key update time is 6 hours; and for the integrity, a used security protection algorithm is the Snow 3G algorithm, a key length is 64 bits, and a key update time is 6 hours. In another specific embodiment, during protection of confidentiality and integrity of a session, for the confidentiality, a used security protection algorithm is the Snow 3G algorithm, a key length is 64 bits, and a key update time is 6 hours; and for the integrity, a security protection algorithm used by the AN/UE is the ZUC algorithm, a key length is 128 bits, and a key update time is 12 hours.
   In this embodiment of the present invention, the AN may generate the user plane protection key based on the security protection algorithm. Specifically, the AN calculates, based on the determined encryption algorithm, a key used for encryption protection, to obtain an air interface user plane encryption key; or the AN calculates, based on the determined integrity protection algorithm, a key used for integrity protection, to obtain an air interface user plane integrity protection key. The air interface user plane encryption key and the air interface user plane integrity protection key may be collectively referred to as a first air interface user plane protection key.
   In specific implementation, first air interface user plane protection key = KDF (K AN, UP algorithm ID). K AN is a base station key derived, after authentication succeeds, by the AMF based on a base key obtained after the authentication or a key derived again after the authentication (K AN may also be referred to as an intermediate key), and K AN is directly sent by the AMF to the AN, or K AN is carried in the user plane protection mechanism and is sent by the AMF to the AN. UP algorithm ID may be an identifier of the encryption algorithm, or may be an identifier of the integrity protection algorithm. KDF is a key derivation function (Key Derivation Function, KDF), and includes but is not limited to the following password derivation functions: HMAC (for example, HMAC-SHA256 or HMAC-SHA1), NMAC, CMAC, OMAC, CBC-MAC, PMAC, UMAC, VMAC, and HASH algorithms, and the like. In addition, user plane protection mechanisms have different security requirements. For example, if a user plane protection mechanism 1 requires a protection key length of 256 bits, and a user plane protection mechanism 2 requires a protection key length of 128 bits, the first device may use different key derivation algorithms to meet requirements of different user plane protection mechanisms for different protection key lengths (for example, HMAC-SHA1 is used to generate a 128-bit protection key, and HMAC-SHA256 is used to generate a 256-bit protection key).
7. The AN sends the security protection algorithm to the UE, and correspondingly, the UE receives the user plane security protection algorithm.
   In a specific embodiment, the AN determines the security protection algorithm in step 6. In this case, the AN directly sends the security protection algorithm to the UE.
   In another specific embodiment, the user plane protection mechanism may include the security protection algorithm. In this case, the AN may send the user plane protection mechanism to the UE. After receiving the user plane protection mechanism, the UE obtains the security protection algorithm from the user plane protection mechanism.
8. The UE generates a user plane protection key based on the user plane security algorithm and K AN.

In this embodiment of the present invention, the UE may generate the user plane protection key based on the security protection algorithm. Specifically, the UE calculates, based on the received encryption algorithm, a key used for encryption protection, to obtain an air interface user plane encryption key; or the UE calculates, based on the received integrity protection algorithm, a key used for integrity protection, to obtain an air interface user plane integrity protection key. The air interface user plane encryption key and the air interface user plane integrity protection key may be collectively referred to as a second air interface user plane protection key.

In specific implementation, second air interface user plane protection key = KDF(K_AN, UP algorithm ID). K_AN is a base station key derived by the UE based on a base key obtained after authentication or a key derived again after authentication. UP algorithm ID may be the identifier of the encryption algorithm, or may be the identifier of the integrity protection algorithm. KDF is a key derivation function (Key Derivation Function, KDF), and includes but is not limited to the following password derivation functions: HMAC (for example, HMAC-SHA256 or HMAC-SHA1), NMAC, CMAC, OMAC, CBC-MAC, PMAC, UMAC, VMAC, and HASH algorithms, and the like.

It may be understood that in a process of implementing the user plane protection mechanism in a specific application scenario, the first air interface user plane protection key and the second air interface user plane protection key may be a same key. In uplink transmission, the UE may perform encryption protection and/or integrity protection on the user plane data based on the second air interface user plane protection key, and after receiving the user plane data sent by the UE, the AN performs decryption and/or integrity check on the user plane data based on the first air interface user plane protection key. In downlink transmission, the AN performs encryption protection and/or integrity protection on the user plane data based on the first air interface user plane protection key, and after receiving the user plane data sent by the AN, the UE performs decryption and/or integrity check on the user plane data based on the second air interface user plane protection key.

It should be noted that there may be the following implementations in the foregoing method procedure of this embodiment:
Possibility 1: If the AMF does not need the indicator information in the process of determining the user plane protection mechanism, the UE may not send the indicator to the network side (or the attach request may not include the indicator).
Possibility 2: A sequence of the foregoing procedure steps is not limited in this embodiment. For example, the AMF may determine the user plane protection mechanism before the bidirectional authentication (that is, step 4 may be performed before step 3).

It should be further noted that the embodiment in FIG. 3 is merely an example, and should not be considered as a limitation on the present invention.

It can be learned that through implementation of this embodiment of the present invention, based on a future 5G communication architecture, in the network attach process, the UE and the AN can complete policy negotiation, the AMF can determine the user plane protection mechanism based on the security requirement required on the user equipment side (including security requirements of different services) and the preset security requirement on the network side, and the UE and the AN can separately determine the security protection algorithm and the keys, so that security protection for the user plane data is implemented.

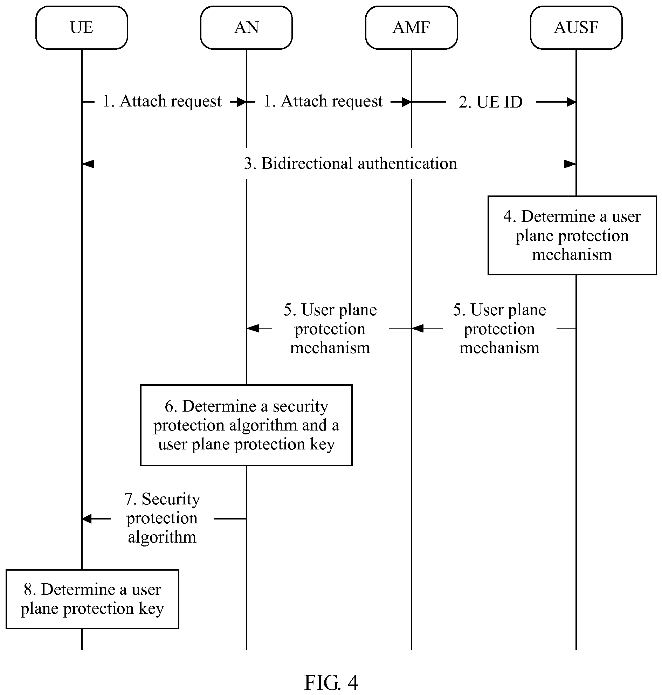

Another key configuration method provided in an embodiment of the present invention is described below based on UE-AN from a granularity-independent perspective. As shown in FIG. 4, the key configuration method provided in this embodiment of the present invention includes the following steps.
1-3. In a network attach process, UE sends an attach request (attach request) to an AN, then the AN sends the attach request to an AMF, and then the AMF sends a UE ID to an AUSF.
   In this embodiment of the present invention, the attach request includes the user equipment identifier (UE ID), a user equipment security capability, and security requirement indication information (indicator). In addition, the attach request may further include a service ID, a UE service ID, and a DNN. For detailed content of the UE ID, the user equipment security capability, the indicator, the service ID, the UE service ID, and the DNN, refer to related descriptions in the embodiment in FIG. 3. Details are not described herein again.
   In a specific embodiment, the AMF identifies the UE ID in the attach request, and sends the UE ID to the AUSF. In another specific embodiment, the AMF directly sends an authentication request to the AUSF, and after receiving the authentication request, the AUSF identifies the UE ID in the authentication request. The authentication request includes the UE ID.
   In addition, in a possible embodiment, based on a requirement of the AUSF, the AMF may send the user equipment security capability, the security requirement indication information (indicator), the service ID, the UE service ID, and the DNN to the AUSF; or the AMF directly further forwards content of the attach request to the AUSF.
   The AUSF performs authentication with the UE based on the UE ID, and determines that the UE is an authorized user.
4. The AUSF determines a user plane protection mechanism.
   In a specific embodiment of the present invention, the AUSF may determine the user plane protection mechanism based on at least one of the indicator (a user equipment security requirement and/or a service security requirement), UE registration information, subscription service data, and a service security requirement fed back by an AF. In other words, the AUSF may comprehensively determine the user plane protection mechanism based on a security requirement required on a user equipment side and a preset security requirement on a network side or the service security requirement. For detailed content of determining the user plane protection mechanism by the AUSF, similarly refer to related content descriptions of determining the user plane protection mechanism by the AMF in the embodiment in FIG. 3. Details are not described herein again.
5. The AUSF sends the user plane protection mechanism to the AMF, and then the AMF sends the user plane protection mechanism to the AN. Correspondingly, the AN receives the user plane protection mechanism.
6. The AN determines a security protection algorithm and a user plane protection key.
   For a detailed case, refer to descriptions of step 6 in the embodiment in FIG. 3. Details are not described herein again.
7. The AN sends the security protection algorithm to the UE, and correspondingly, the UE receives the user plane security protection algorithm.
8. The UE generates a user plane protection key based on the user plane security algorithm and K AN.
   For a detailed case, refer to descriptions of step 8 in the embodiment in FIG. 3. Details are not described herein again.
   It should be noted that there may be the following implementations in the foregoing method procedure of this embodiment:
   Possibility 1: If the AUSF does not need the indicator information in the process of determining the user plane protection mechanism, the UE may not send the indicator to the network side (or the attach request may not include the indicator).
   Possibility 2: A sequence of the foregoing procedure steps is not limited in this embodiment. For example, the AUSF may determine the user plane protection mechanism before the bidirectional authentication.

It should be further noted that for a part that is not described in detail in the embodiment in FIG. 4, reference may be made to related descriptions in the embodiment in FIG. 3. The embodiment in FIG. 4 is merely an example, and should not be considered as a limitation on the present invention.

It can be learned that a main difference between the embodiment in FIG. 4 and the embodiment in FIG. 3 lies in that in the network attach process, the AUSF determines the user plane protection mechanism based on the security requirement required on the user equipment side (including security requirements of different services) and the preset security requirement on the network side.

Through implementation of this embodiment of the present invention, based on a future 5G communication architecture, in the network attach process, the UE and the AN can complete policy negotiation, the AUSF can determine the user plane protection mechanism, and then the UE and the AN can separately determine the security protection algorithm and the keys, so that security protection for user plane data is implemented.

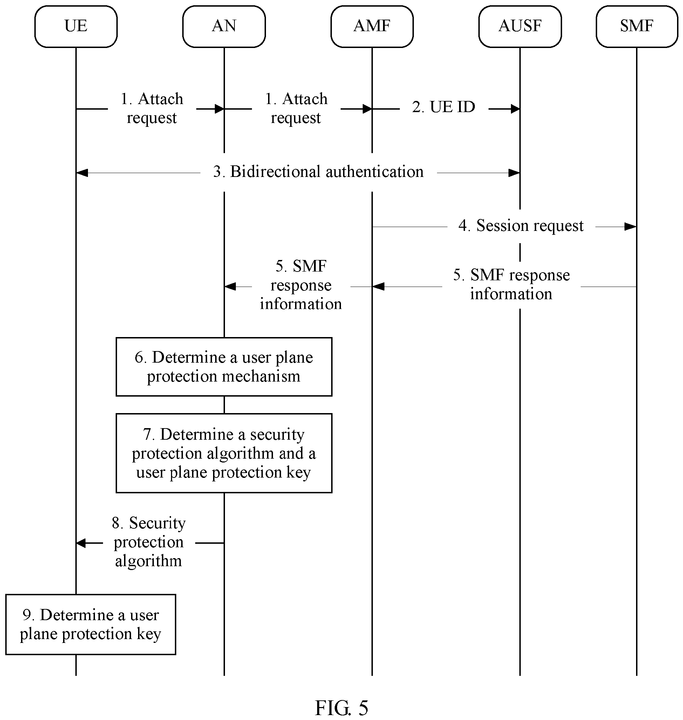

Another key configuration method provided in an embodiment of the present invention is described below based on UE-AN from a granularity-independent perspective. As shown in FIG. 5, the key configuration method provided in this embodiment of the present invention includes the following steps.
1-3. In a network attach process, UE sends an attach request (attach request) to an AN, then the AN sends the attach request to an AMF, and then the AMF sends a UE ID to an AUSF.
   In this embodiment of the present invention, the attach request includes the user equipment identifier (UE ID), a user equipment security capability, and security requirement indication information (indicator). In addition, the attach request may further include a service ID, a UE service ID, and a DNN.
   In a specific embodiment, the AMF identifies the UE ID in the attach request, and sends the UE ID to the AUSF. In another specific embodiment, the AMF directly sends an authentication request to the AUSF, and after receiving the authentication request, the AUSF identifies the UE ID in the authentication request. The authentication request includes the UE ID.
   The AUSF performs authentication with the UE based on the UE ID, and determines that the UE is an authorized user.
4. The AMF sends a session request to an SMF, and correspondingly, the SMF receives the session request.
   The session request is used to request to create a session between the AMF and the SMF. For example, if a session is to be created by using a session create protocol, the session request is session create request signaling.
   The session request includes at least a session identifier (session ID).
5. The SMF sends SMF response information to the AMF, and then the AMF sends the SMF response information to the AN. Correspondingly, the AN receives the SMF response information.
   The SMF response information may include a preset security requirement on a network side, for example, include UE registration information fed back by a UDM, subscription service data fed back by a UDM, or a service security requirement fed back by an AF. In addition, the SMF response information may further include an authentication result of secondary authentication between the UE and a data network DN. For example, based on the session request, after the UE performs secondary authentication with the data network DN by using the SMF, the SMF writes the authentication result into the SMF response information, and then sends the SMF response information to the AN. After the AN learns the authentication result, if the AN finds that the authentication result is "correct" (in other words, the authentication succeeds), the AN performs a subsequent procedure of determining a user plane protection mechanism; or if the AN finds that the authentication result is "incorrect" (in other words, the authentication succeeds), the AN does not perform a subsequent procedure of determining a user plane protection mechanism.
6. The AN determines a user plane protection mechanism.
   In a specific embodiment of the present invention, the AN may determine the user plane protection mechanism based on at least one of the indicator (a user equipment security requirement and/or a service security requirement), the UE registration information, the subscription service data, and the service security requirement fed back by the AF. In other words, the AN may comprehensively determine the user plane protection mechanism based on a security requirement required on a user equipment side and the preset security requirement on the network side or the service security requirement. For detailed content of determining the user plane protection mechanism by the AN, similarly refer to related content descriptions of determining the user plane protection mechanism by the AMF in the embodiment in FIG. 3. Details are not described herein again.
7. The AN determines a security protection algorithm and a user plane protection key.
   For a detailed case, refer to descriptions of step 6 in the embodiment in FIG. 3. Details are not described herein again.
8. The AN sends the security protection algorithm to the UE, and correspondingly, the UE receives the user plane security protection algorithm.
9. The UE generates a user plane protection key based on the user plane security algorithm and K AN.

For a detailed case, refer to descriptions of step 8 in the embodiment in FIG. 3. Details are not described herein again.

It should be noted that there may be the following implementations in the foregoing method procedure of this embodiment:
Possibility 1: If the AN does not need the indicator information in the process of determining the user plane protection mechanism, the UE may not send the indicator to the network side (or the attach request may not include the indicator).
Possibility 2: A sequence of the foregoing procedure steps is not limited in this embodiment. For example, the AN may determine the user plane protection mechanism before step 4 (the AMF sends the session request to the SMF).
Possibility 3: In step 4, a session create procedure may alternatively be initiated by the UE, in other words, the UE sends the session request to the SMF by using the AMF.

It should be further noted that for a part that is not described in detail in the embodiment in FIG. 5, reference may be made to related descriptions in the embodiment in FIG. 3. The embodiment in FIG. 5 is merely an example, and should not be considered as a limitation on the present invention.

It can be learned that a main difference between the embodiment in FIG. 5 and the embodiment in FIG. 3 lies in that in a procedure related to session creation, the AN determines the user plane protection mechanism based on the security requirement required on the user equipment side (including security requirements of different services) and the preset security requirement on the network side.

Through implementation of this embodiment of the present invention, based on a future 5G communication architecture, in the session create procedure, the UE and the AN complete policy negotiation, the AN determines the user plane protection mechanism, and then the UE and the AN separately determine the security protection algorithm and the keys, so that security protection for user plane data is implemented.

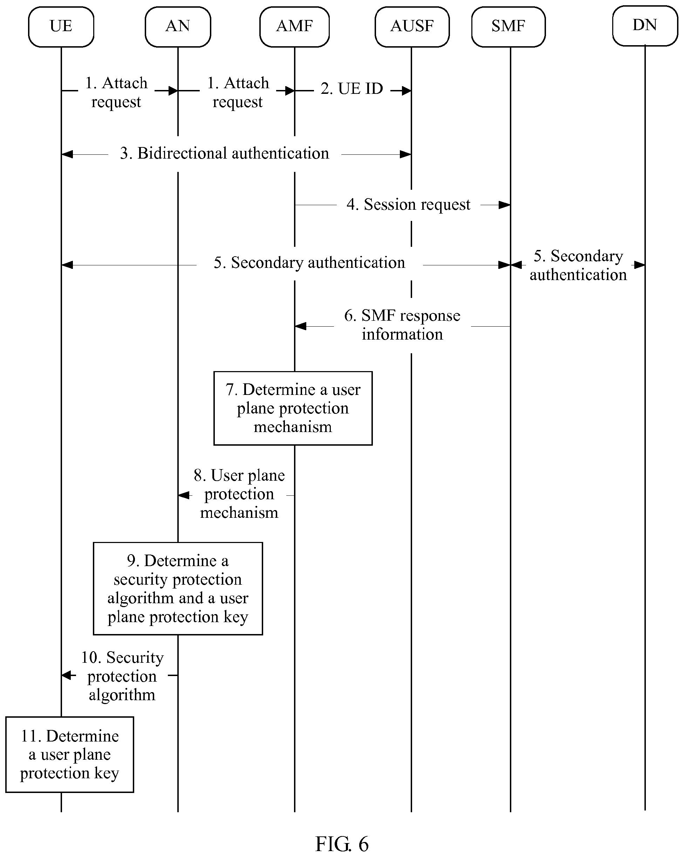

Another key configuration method provided in an embodiment of the present invention is described below based on UE-AN from a granularity-independent perspective. As shown in FIG. 6, the key configuration method provided in this embodiment of the present invention includes the following steps.
1-3. In a network attach process, UE sends an attach request (attach request) to an AN, then the AN sends the attach request to an AMF, and then the AMF sends a UE ID to an AUSF.
   In this embodiment of the present invention, the attach request includes the user equipment identifier (UE ID), a user equipment security capability, and security requirement indication information (indicator). In addition, the attach request may further include a service ID, a UE service ID, and a DNN.
   In a specific embodiment, the AMF identifies the UE ID in the attach request, and sends the UE ID to the AUSF. In another specific embodiment, the AMF directly sends an authentication request to the AUSF, and after receiving the authentication request, the AUSF identifies the UE ID in the authentication request. The authentication request includes the UE ID.
   The AUSF performs authentication with the UE based on the UE ID, and determines that the UE is an authorized user.
4. The AMF sends a session request to an SMF, and correspondingly, the SMF receives the session request.
   The session request is used to request to create a session between the AMF and the SMF. For example, if a session is to be created by using a session create protocol, the session request is session create request signaling.
   The session request includes at least a session identifier (session ID).
5. The UE performs secondary authentication with a DN.
   Specifically, based on the session request, the UE performs secondary authentication with the DN by using the SMF. If the authentication succeeds, an authentication result is "correct"; or if the authentication fails, an authentication result is "incorrect". The SMF may obtain the authentication result.
   It should be noted that this step is an optional step.
6. The SMF sends SMF response information to the AMF.
   Specifically, the SMF generates the SMF response information.
   The SMF response information may include a preset security requirement on a network side, for example, include UE registration information fed back by a UDM, subscription service data fed back by a UDM, or a service security requirement fed back by an AF, so that after obtaining the SMF response information, the AMF can further determine a user plane protection mechanism based on the security requirement in the SMF response information.
   In addition, the SMF response information may further include the authentication result of secondary authentication between the UE and the data network DN. For example, based on the session request, after the UE performs secondary authentication with the data network DN by using the SMF, the SMF writes the authentication result into the SMF response information, and then sends the SMF response information to the AMF. After the AMF learns the authentication result, if the AMF finds that the authentication result is "correct" (in other words, the authentication succeeds), the AMF performs a subsequent procedure of determining the user plane protection mechanism; or if the AMF finds that the authentication result is "incorrect" (in other words, the authentication succeeds), the AMF does not perform a subsequent procedure of determining the user plane protection mechanism.
7. The AMF determines a user plane protection mechanism.
   In a specific embodiment of the present invention, the AMF may determine the user plane protection mechanism based on at least one of the indicator (a user equipment security requirement and/or a service security requirement), the UE registration information, the subscription service data, and the service security requirement fed back by the AF. In other words, the AMF may comprehensively determine the user plane protection mechanism based on a security requirement required on a user equipment side and the preset security requirement on the network side or a service security requirement. In addition, the AMF may also determine, based on the SMF response information (including the authentication result), whether the user plane protection mechanism may be determined based on a related security requirement (for example, service security fed back by the AF), determine whether to perform the step of determining the user plane protection mechanism, and the like. For detailed content of determining the user plane protection mechanism by the AMF in this embodiment, further refer to related content descriptions of determining the user plane protection mechanism by the AMF in the embodiment in FIG. 3. Details are not described herein again.
8. The AMF sends the user plane protection mechanism to the AN.
9. The AN determines a security protection algorithm and a user plane protection key.
   For a detailed case, refer to descriptions of step 6 in the embodiment in FIG. 3. Details are not described herein again.
10. The AN sends the security protection algorithm to the UE, and correspondingly, the UE receives the user plane security protection algorithm.
11. The UE generates a user plane protection key based on the user plane security algorithm and K AN.

For a detailed case, refer to descriptions of step 8 in the embodiment in FIG. 3. Details are not described herein again.

It should be noted that there may be the following implementations in the foregoing method procedure of this embodiment:
Possibility 1: If the AMF does not need the indicator information in the process of determining the user plane protection mechanism, the UE may not send the indicator to the network side (or the attach request may not include the indicator).
Possibility 2: A sequence of the foregoing procedure steps is not limited in this embodiment. For example, the AMF may determine the user plane protection mechanism before step 4.
Possibility 3: In step 4, a session create procedure may alternatively be initiated by the UE, in other words, the UE sends the session request to the SMF by using the AMF.

It should be further noted that for a part that is not described in detail in the embodiment in FIG. 6, reference may be made to related descriptions in the embodiment in FIG. 3. The embodiment in FIG. 4 is merely an example, and should not be considered as a limitation on the present invention.

It can be learned that a main difference between the embodiment in FIG. 6 and the embodiment in FIG. 3 lies in that in a procedure related to session creation, the AMF determines the user plane protection mechanism based on the security requirement required on the user equipment side (including security requirements of different services) and the preset security requirement on the network side.

Through implementation of this embodiment of the present invention, based on a future 5G communication architecture, in the session create procedure, the UE and the AN can complete policy negotiation, the AMF can determine the user plane protection mechanism, and then the UE and the AN can separately determine the security protection algorithm and the keys, so that security protection for user plane data is implemented.

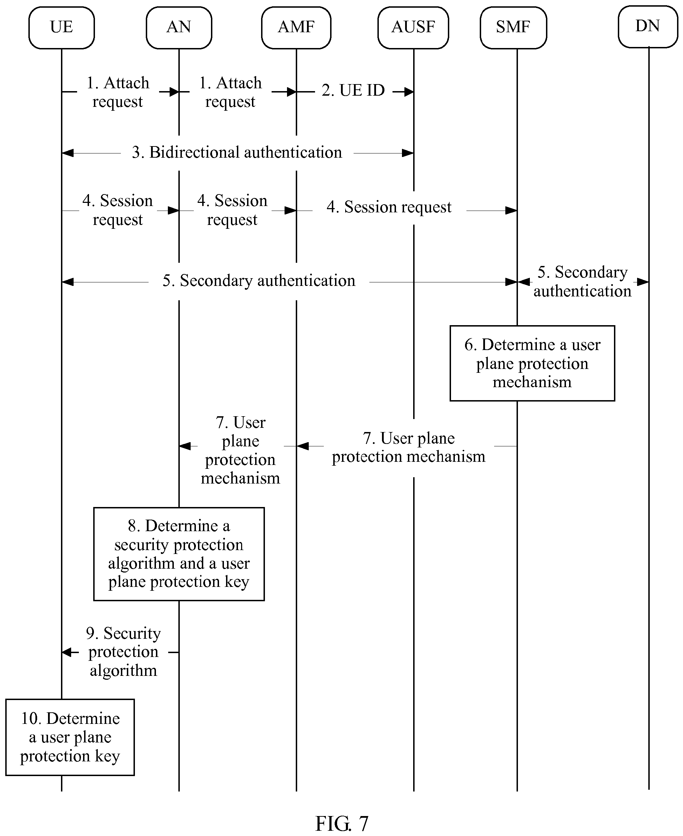

Another key configuration method provided in an embodiment of the present invention is described below based on UE-AN from a granularity-independent perspective. As shown in FIG. 7, the key configuration method provided in this embodiment of the present invention includes the following steps.
1-3. In a network attach process, UE sends an attach request (attach request) to an AN, then the AN sends the attach request to an AMF, and then the AMF sends a UE ID to an AUSF.
   In this embodiment of the present invention, the attach request includes the user equipment identifier (UE ID), a user equipment security capability, and security requirement indication information (indicator). In addition, the attach request may further include a service ID, a UE service ID, and a DNN.
   In a specific embodiment, the AMF identifies the UE ID in the attach request, and sends the UE ID to the AUSF. In another specific embodiment, the AMF directly sends an authentication request to the AUSF, and after receiving the authentication request, the AUSF identifies the UE ID in the authentication request. The authentication request includes the UE ID.
   The AUSF performs authentication with the UE based on the UE ID, and determines that the UE is an authorized user.
4. The UE sends a session request to an SMF by using the AN and the AMF, and correspondingly, the SMF receives the session request.
   The session request is used to request to create a session between the UE and the SMF. For example, if a session is to be created by using a session create protocol, the session request is session create request signaling.
   The session request includes at least a session identifier (session ID). Optionally, the session request may further include the user equipment identifier (UE ID), the security requirement indication information (indicator), the DNN, the service ID, the UE service ID, or the like. The user equipment identifier (UE ID), the security requirement indication information (indicator), the DNN, the service ID, or the UE service ID may be carried in the session request when the UE creates a session.
5. Optionally, the UE performs secondary authentication with a DN.
6. The SMF determines a user plane protection mechanism.
   In a specific embodiment of the present invention, the SMF may determine the user plane protection mechanism based on at least one, two, three, or all of the indicator (a user equipment security requirement and/or a service security requirement), UE registration information, subscription service data, and a service security requirement fed back by an AF. In other words, the SMF may comprehensively determine the user plane protection mechanism based on a security requirement required on a user equipment side and a preset security requirement on a network side or the service security requirement. Specifically, the SMF may send at least one of the UE ID, the service ID, the service UE ID, or the DNN to a UDM, to obtain the UE registration information from the UDM. The SMF may send at least one of the UE ID, the service ID, the service UE ID, or the DNN to a UDM, to obtain the subscription service data from the UDM. The SMF sends a request to a PCF, the PCF sends the request to the AF, and the AF feeds back the service security requirement to the PCF based on the request. The request may include at least one of the UE ID, the service ID, the service UE ID, or the DNN. The PCF sends the service security requirement to the SMF, and further, the SMF obtains the service security requirement. The service security requirement is used to indicate a user plane protection mechanism required by a service, for example, indicate whether encryption, integrity protection, or both encryption and integrity protection are required for the service.
7. The SMF sends the user plane protection mechanism to the AMF, and the AMF sends the user plane protection mechanism to the AN. Correspondingly, the AN receives the user plane protection mechanism.
8. The AN determines a security protection algorithm and a user plane protection key.
   For a detailed case, refer to descriptions of step 6 in the embodiment in FIG. 3. Details are not described herein again.
9. The AN sends the security protection algorithm to the UE, and correspondingly, the UE receives the user plane security protection algorithm.
10. The UE generates a user plane protection key based on the user plane security algorithm and K AN.

For a detailed case, refer to descriptions of step 8 in the embodiment in FIG. 3. Details are not described herein again.

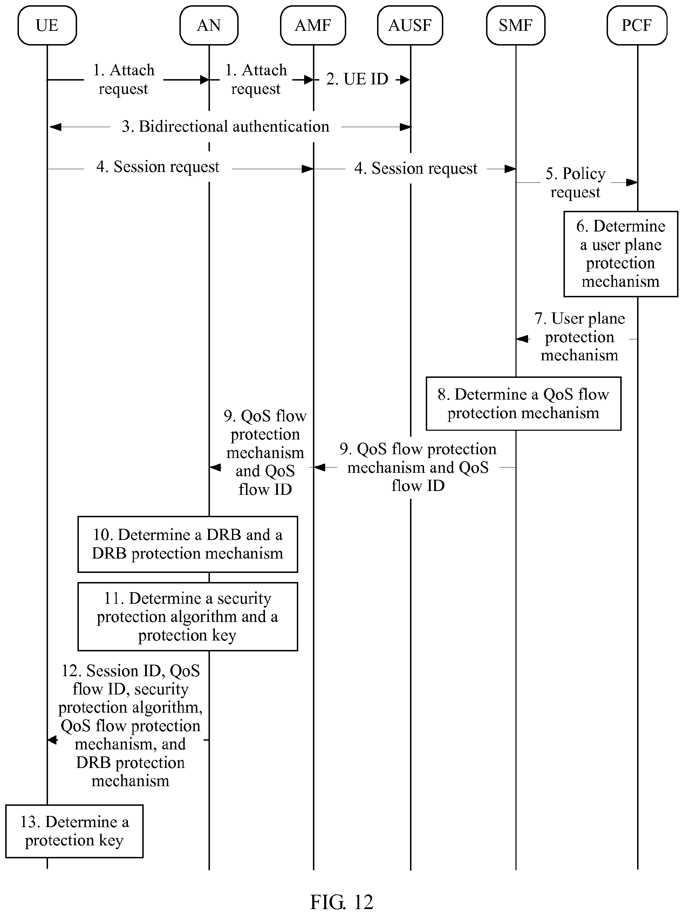

It should be noted that there may be the following implementations in the foregoing method procedure of this embodiment:
Possibility 1: If the SMF does not need the indicator information in the process of determining the user plane protection mechanism, the UE may not send the indicator to the network side (or the attach request may not include the indicator).
Possibility 2: A sequence of the foregoing procedure steps is not limited in this embodiment. For example, the SMF may determine the user plane protection mechanism before step 5.
Possibility 3: In step 4, a session create procedure may alternatively be initiated by the AMF, in other words, the AMF sends the session request to the SMF. In this case, the session request includes at least the session identifier (session ID). Optionally, the session request may further include the user equipment identifier (UE ID), the security requirement indication information (indicator), the DNN, the service ID, the UE service ID, or the like. The user equipment identifier (UE ID), the security requirement indication information (indicator), the DNN, the service ID, or the UE service ID may be obtained by the AMF from the received attach request, and the attach request carries the foregoing information.
Possibility 4: For a method for determining the user plane protection mechanism by the SMF, refer to the method for determining the user plane protection mechanism by the AMF in the embodiment in FIG. 3.
Possibility 5: Methods for deriving the user plane protection keys by the AN and the UE may be based on a method in FIG. 12, including a method based on a session ID, a slice ID, a flow ID, or a DRB ID. The DRB ID is selected by the AN and sent by the AN to the UE.

It should be further noted that for a part that is not described in detail in the embodiment in FIG. 7, reference may be made to related descriptions in the embodiment in FIG. 3. The embodiment in FIG. 7 is merely an example, and should not be considered as a limitation on the present invention.

It can be learned that a main difference between the embodiment in FIG. 7 and the embodiment in FIG. 3 lies in that in the session create procedure, the SMF determines the user plane protection mechanism based on the security requirement required on the user equipment side (including security requirements of different services) and the preset security requirement on the network side.

Through implementation of this embodiment of the present invention, based on a future 5G communication architecture, in the session create procedure, the UE and the AN can complete policy negotiation, the SMF can determine the user plane protection mechanism, and then the UE and the AN can separately determine the security protection algorithm and the keys, so that security protection for user plane data is implemented.

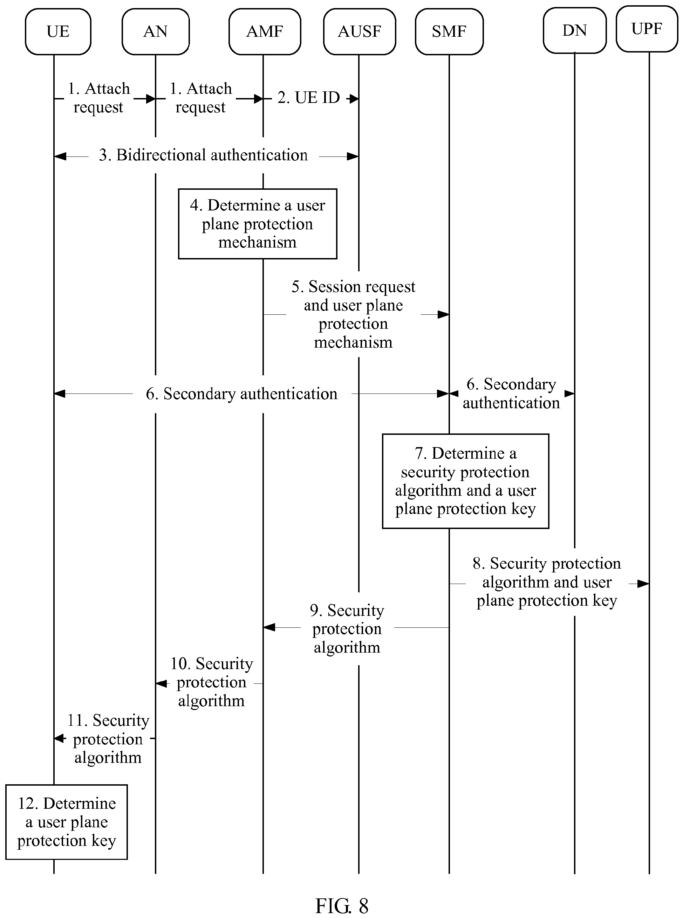

A key configuration method provided in an embodiment of the present invention is described below based on UE-CN from a granularity-independent perspective. As shown in FIG. 8, the key configuration method provided in this embodiment of the present invention includes the following steps.
1-3. In a network attach process, UE sends an attach request (attach request) to an AN, then the AN sends the attach request to an AMF, and then the AMF sends a UE ID to an AUSF.
   In this embodiment of the present invention, the attach request includes the user equipment identifier (UE ID), a user equipment security capability, and security requirement indication information (indicator). In addition, the attach request may further include a service ID, a UE service ID, and a DNN.
   In a specific embodiment, the AMF identifies the UE ID in the attach request, and sends the UE ID to the AUSF. In another specific embodiment, the AMF directly sends an authentication request to the AUSF, and after receiving the authentication request, the AUSF identifies the UE ID in the authentication request. The authentication request includes the UE ID.
   The AUSF performs authentication with the UE based on the UE ID in the attach request, and determines that the UE is an authorized user.
4. The AMF determines a user plane protection mechanism.
   In a specific embodiment of the present invention, the AMF may determine the user plane protection mechanism based on at least one of the indicator (a user equipment security requirement and/or a service security requirement), UE registration information, subscription service data, and a service security requirement fed back by an AF. In other words, the AMF may comprehensively determine the user plane protection mechanism based on a security requirement required on a user equipment side and a preset security requirement on a network side or the service security requirement. For detailed content of determining the user plane protection mechanism by the AMF in this embodiment, refer to related content descriptions of determining the user plane protection mechanism by the AMF in the embodiment in FIG. 3. Details are not described herein again.
5. The AMF sends a session request and the user plane protection mechanism to an SMF, and correspondingly, the SMF receives the session request and the user plane protection mechanism.
   The session request is used to request to create a session between the AMF and the SMF. For example, if a session is to be created by using a session create protocol, the session request is session create request signaling. The session request includes at least a session identifier (session ID).
   In specific implementation, in an embodiment, the user plane protection mechanism is carried in the session request, in other words, the AMF sends the session request to the SMF, and the session request includes the user plane protection mechanism.
   In another embodiment, the AMF separately sends the session request and the user plane protection mechanism to the SMF.
6. The UE performs secondary authentication with a DN.
7. The SMF determines a security protection algorithm and a user plane protection key.
   In a specific embodiment, if the user plane protection mechanism includes only a description about whether to perform encryption/integrity protection, the SMF determines that the user plane protection mechanism between the UE and a CN is whether encryption is required and whether integrity protection is required. Then the SMF determines the security protection algorithm based on the received UE security capability and an algorithm priority list supported by a UPF. The algorithm priority list supported by the UPF may be preset on the SMF, or may be preset on the UPF, and the SMF obtains the algorithm priority list supported by the UPF from the UPF. For example, when the user plane protection mechanism is "encryption required + integrity protection required", the SMF determines, based on the UE security capability, the algorithm priority list supported by the UPF, and an algorithm supported by the UE, that an encryption algorithm is AES and an integrity protection algorithm is AES.
   In another specific embodiment, a security protection algorithm is directly specified in the user plane protection mechanism, and the SMF may directly obtain the security protection algorithm from the user plane protection mechanism. In step 4, after determining the user plane protection mechanism, the AMF may determine an air interface protection algorithm based on an algorithm priority list supported by a UPF, an algorithm supported by the UE, and the user equipment security capability. The algorithm priority list supported by the UPF may be preset on the AMF, or may be preset on the UPF, and the AMF obtains the algorithm priority list supported by the UPF from the UPF. For example, in a user plane protection mechanism of "encryption required + integrity protection required", the AMF further determines that an encryption algorithm is AES and an integrity protection algorithm is AES, and adds the security protection algorithm to the user plane protection mechanism. In this case, because the encryption algorithm and the integrity protection algorithm are directly specified in the user plane protection mechanism, after obtaining the user plane protection mechanism, the SMF may directly obtain the encryption algorithm and the integrity protection algorithm from the user plane protection mechanism.
   In a possible embodiment, after determining the security protection algorithm, the SMF may further determine the user plane protection key. Details are as follows:
   user plane protection key = KDF(K_SMF, UP algorithm ID); or
   user plane protection key = KDF(K_SMF, UP algorithm ID, flow ID); or
   user plane protection key = KDF(K_SMF, UP algorithm ID, session ID); or
   user plane protection key = KDF(K_SMF, UP algorithm ID, DRB ID).

   K SMF is a key derived, after authentication succeeds, by the AMF based on a key obtained after the authentication or a key derived again after the authentication. Specifically, the AMF sends K_SMF to the SMF. Alternatively, K_SMF is a key derived, after authentication succeeds, by the AUSF based on a key obtained after the authentication or a key derived again after the authentication. The AUSF sends K SMF to the SMF. UP algorithm ID may be an ID of the encryption algorithm, or may be an ID of the integrity protection algorithm.
8. The SMF sends the security protection algorithm or the user plane protection key to the UPF, and correspondingly, the UPF receives the security protection algorithm or the user plane protection key.
   In a possible embodiment, if the UPF receives only the security protection algorithm and does not receive the user plane protection key, the UPF may calculate the user plane protection key based on the security protection algorithm and K_SMF (refer to the foregoing related descriptions). The user plane protection key is a user plane protection key of the UPF. K SMF is a key derived, after authentication succeeds, by the AMF based on a key obtained after the authentication or a key derived again after the authentication. Specifically, the AMF sends K SMF to the UPF. Alternatively, K SMF is a key derived, after authentication succeeds, by the AUSF based on a key obtained after the authentication or a key derived again after the authentication, and the AUSF sends K SMF to the UPF.
   In a possible embodiment, if the UPF receives the user plane protection key, the UPF uses the user plane protection key as a user plane protection key of the UPF.
9. The SMF sends the security protection algorithm to the AMF.
   It should be noted that if the security protection algorithm is determined by the SMF based on the received UE security capability, the algorithm priority list supported by the UPF, and the like, the SMF sends the security protection algorithm to the AMF.
   Optionally, that the SMF sends the security protection algorithm to the AMF is specifically that the SMF sends a session response to the AMF, where the session response carries the security protection algorithm.
   It should be noted that if the security protection algorithm is determined by the AMF based on the algorithm priority list supported by the UPF, the algorithm supported by the UE, the user equipment security capability, and the like, the SMF does not need to send the security protection algorithm to the AMF.
10. The AMF sends the security protection algorithm and the user plane protection mechanism to the AN, where the user plane protection mechanism is optional.
11. The AN sends the security protection algorithm and the user plane protection mechanism to the UE, where the user plane protection mechanism is optional.
12. The UE generates a user plane protection key based on the user plane security algorithm, the user plane protection mechanism, and K_SMF; or the UE generates a user plane protection key based on the user plane security algorithm and K SMF.

In a possible embodiment, after receiving the security protection algorithm, the UE may further determine the user plane protection key. The user plane protection key is a user plane protection key of the UE. Details are as follows:
user plane protection key = KDF(K_SMF, UP algorithm ID); or
user plane protection key = KDF(K_SMF, UP algorithm ID, flow ID); or
user plane protection key = KDF(K_SMF, UP algorithm ID, session ID); or
user plane protection key = KDF(K_SMF, UP algorithm ID, DRB ID).

Alternatively, a user plane protection mechanism parameter is added to the foregoing derivation function input. K SMF is a key derived, after authentication succeeds, by the UE based on a key obtained after the authentication or a key derived again after the authentication. Specifically, the AMF sends K_SMF to the UE. Alternatively, K_SMF is a key derived, after authentication succeeds, by the AUSF based on a key obtained after the authentication or a key derived again after the authentication, and the AUSF sends K SMF to the UE. UP algorithm ID may be the ID of the encryption algorithm, or may be the ID of the integrity protection algorithm.

It should be noted that there may be the following implementations in the foregoing method procedure of this embodiment:
Possibility 1: If the AMF does not need the indicator information in the process of determining the user plane protection mechanism, the UE may not send the indicator to the network side (or the attach request may not include the indicator).
Possibility 2: A sequence of the foregoing procedure steps is not limited in this embodiment. For example, step 8 and step 9 may be performed simultaneously, or step 8 may be performed before or after step 9.
Possibility 3: In step 4, a session create procedure may alternatively be initiated by the UE, in other words, the UE sends the session request to the SMF by using the AMF.
Possibility 4: If the user plane protection mechanism includes a specific security protection algorithm, the AMF may send the user plane protection mechanism to the UPF by using the SMF, and the UPF obtains the security protection algorithm from the user plane protection mechanism.
Possibility 5: If the user plane protection mechanism includes no security protection algorithm, security protection may be implemented in step 7 to step 12 in the following manner:
   (Replace step 7 and step 8) The SMF calculates first K_UP, where K_UP = KDF(K_SMF, session ID), or K_UP = KDF(K_SMF, QoS flow ID).
   (Replace step 9) The SMF sends a session ID, a QFI, and the user plane protection mechanism to the AMF.
   (Replace step 10) The AMF sends the session ID, the QFI, and the user plane protection mechanism to the AN.
   (Replace step 11) The AN sends the session ID, the QFI, and the user plane protection mechanism to the UE.
   (Replace step 12) The UE generates second K_UP based on K_SMF. K_SMF is a key derived, after authentication succeeds, by the UE based on a key obtained after the authentication or a key derived again after the authentication.
   (Add step 13) A UPF and the UE negotiate about a security protection algorithm based on the session ID, the QFI, and the user plane protection mechanism, and then generate a user plane protection key of the UPF and a user plane protection key of the UE based on the first K_UP and the second K UP respectively.

It should be further noted that for a part that is not described in detail in the embodiment in FIG. 8, reference may be made to related descriptions in the embodiment in FIG. 3. The embodiment in FIG. 8 is merely an example, and should not be considered as a limitation on the present invention.

It can be learned that a main difference between the embodiment in FIG. 8 and the embodiment in FIG. 3 lies in that in a UE-CN application scenario, the AMF determines the user plane protection mechanism based on the security requirement required on the user equipment side (including security requirements of different services) and the preset security requirement on the network side.

Through implementation of this embodiment of the present invention, based on a future 5G communication architecture, in the session create procedure, the UE and the CN can complete policy negotiation, the AMF can determine the user plane protection mechanism, and then the UE and the CN can separately determine the user plane protection keys, so that security protection for user plane data is implemented. Through implementation of this embodiment of the present invention, network security protection between the UE and the core network can be implemented, so that a disadvantage of a hop-by-hop segment-based protection manner is avoided, and security of user plane data transmission is improved.

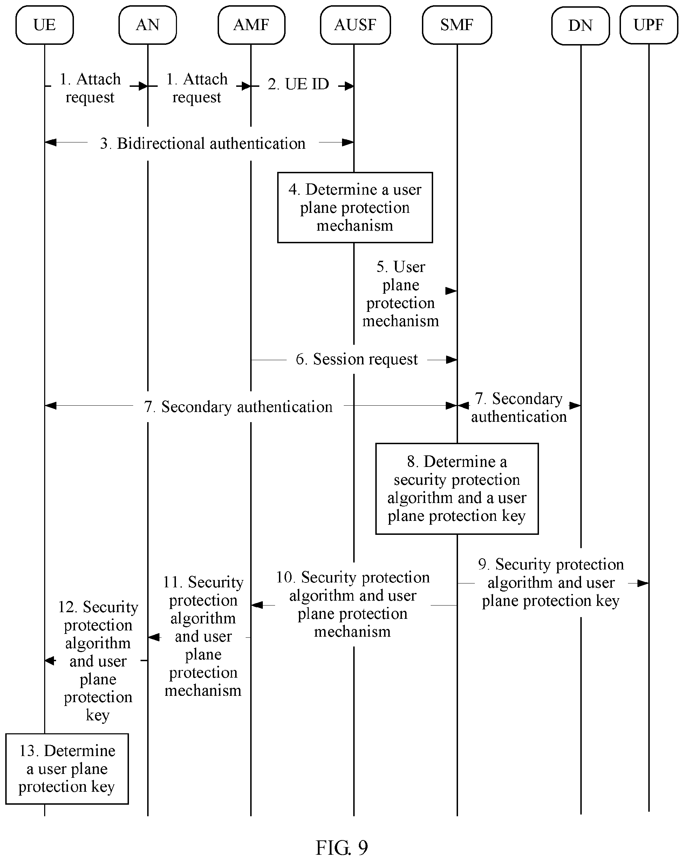

A key configuration method provided in an embodiment of the present invention is described below based on UE-CN from a granularity-independent perspective. As shown in FIG. 9, the key configuration method provided in this embodiment of the present invention includes the following steps.
1-3. In a network attach process, UE sends an attach request (attach request) to an AN, then the AN sends the attach request to an AMF, and then the AMF sends a UE ID to an AUSF.
   In this embodiment of the present invention, the attach request includes the user equipment identifier (UE ID), a user equipment security capability, and security requirement indication information (indicator). In addition, the attach request may further include a service ID, a UE service ID, and a DNN.
   In a specific embodiment, the AMF identifies the UE ID in the attach request, and sends the UE ID to the AUSF. In another specific embodiment, the AMF directly sends an authentication request to the AUSF, and after receiving the authentication request, the AUSF identifies the UE ID in the authentication request. The authentication request includes the UE ID.
   The AUSF performs authentication with the UE based on the UE ID in the attach request, and determines that the UE is an authorized user.
4. The AUSF determines a user plane protection mechanism.
   In a specific embodiment of the present invention, the AUSF may determine the user plane protection mechanism based on at least one of the indicator (a user equipment security requirement and/or a service security requirement), UE registration information, subscription service data, and a service security requirement fed back by an AF. In other words, the AUSF may comprehensively determine the user plane protection mechanism based on a security requirement required on a user equipment side and a preset security requirement on a network side or the service security requirement. For detailed content of determining the user plane protection mechanism by the AUSF in this embodiment, refer to related content descriptions of determining the user plane protection mechanism by the AMF in the embodiment in FIG. 3. Details are not described herein again.
5. The AUSF sends the user plane protection mechanism to an SMF, and correspondingly, the SMF receives the user plane protection mechanism.
6. The AMF sends a session request to the SMF, and correspondingly, the SMF receives the session request.
   The session request is used to request to create a session between the AMF and the SMF. For example, if a session is to be created by using a session create protocol, the session request is session create request signaling. The session request includes at least a session identifier (session ID).
7. Optionally, the UE performs secondary authentication with a DN.
8. The SMF determines a security protection algorithm and a user plane protection key.
   For detailed content, refer to related descriptions of step 7 in the embodiment in FIG. 8.
9. The SMF sends the security protection algorithm and the user plane protection key to a UPF, and correspondingly, the UPF receives the security protection algorithm and the user plane protection key. The security protection algorithm is optional.
10. The SMF sends the security protection algorithm and the user plane protection mechanism to the AMF. The user plane protection mechanism is optional.
11. The AMF sends the security protection algorithm and the user plane protection mechanism to the AN. The user plane protection mechanism is optional.
12. The AN sends the security protection algorithm and the user plane protection mechanism to the UE. The user plane protection mechanism is optional.
13. The UE generates a user plane protection key based on the user plane security algorithm, the user plane protection mechanism, and K_SMF; or the UE generates a user plane protection key based on the user plane security algorithm and K SMF.

For a part that is not described in detail in this embodiment, refer to related descriptions in the embodiment in FIG. 8.

It should be noted that there may be the following implementations in the foregoing method procedure of this embodiment:
Possibility 1: If the AMF does not need the indicator information in the process of determining the user plane protection mechanism, the UE may not send the indicator to the network side (or the attach request may not include the indicator).
Possibility 2: A sequence of the foregoing procedure steps is not limited in this embodiment. For example, step 9 and step 10 may be performed simultaneously, or step 8 may be performed before or after step 9.
Possibility 3: In step 4, a session create procedure may be initiated by the UE, in other words, the UE sends the session request to the SMF by using the AMF.
Possibility 4: If the user plane protection mechanism includes a specific security protection algorithm, the AUSF may send the user plane protection mechanism to the UPF by using the SMF, and the UPF obtains the security protection algorithm from the user plane protection mechanism.
Possibility 5: If the user plane protection mechanism includes no security protection algorithm, security protection may be implemented in step 7 to step 12 in the following manner:
   (Replace step 8 and step 9) The SMF sends a session ID, a QFI, and a user plane protection key to a UPF, and in addition, the UPF further obtains first K_SMF. The first K_SMF is a key derived, after authentication succeeds, by the AMF based on a key obtained after the authentication or a key derived again after the authentication. Specifically, the AMF sends K SMF to the UPF. Alternatively, K SMF is a key derived, after authentication succeeds, by the AUSF based on a key obtained after the authentication or a key derived again after the authentication. The AUSF sends K SMF to the UPF.
   (Replace step 10) The SMF sends the session ID, the QFI, and the user plane protection mechanism to the AMF.
   (Replace step 11) The AMF sends the session ID, the QFI, and the user plane protection mechanism to the AN.
   (Replace step 12) The AN sends the session ID, the QFI, and the user plane protection mechanism to the UE.
   (Replace step 13) The UPF and the UE negotiate about a security protection algorithm based on the session ID, the QFI, and the user plane protection mechanism, and then generate a user plane protection key of the UPF and a user plane protection key of the UE based on the first K SMF and second K SMF respectively. The second K SMF is a key derived, after authentication succeeds, by the AMF based on a key obtained after the authentication or a key derived again after the authentication. Specifically, the AMF sends K SMF to the UE. Alternatively, K SMF is a key derived, after authentication succeeds, by the AUSF based on a key obtained after the authentication or a key derived again after the authentication. The AUSF sends K SMF to the UE.

It should be further noted that for a part that is not described in detail in the embodiment in FIG. 8, reference may be made to related descriptions in the embodiment in FIG. 3. The embodiment in FIG. 8 is merely an example, and should not be considered as a limitation on the present invention.

It can be learned that a main difference between the embodiment in FIG. 9 and the embodiment in FIG. 8 lies in that in a procedure related to session creation, the AUSF determines the user plane protection mechanism based on the security requirement required on the user equipment side (including security requirements of different services) and the preset security requirement on the network side.

Through implementation of this embodiment of the present invention, based on a future 5G communication architecture, in the session create procedure, the UE and a CN can complete policy negotiation, the AUSF can determine the user plane protection mechanism, and then the UE and the CN can separately determine the user plane protection keys, so that security protection for user plane data is implemented. Through implementation of this embodiment of the present invention, network security protection between the UE and the core network can be implemented, so that a disadvantage of a hop-by-hop segment-based protection manner is avoided, and security of user plane data transmission is improved.

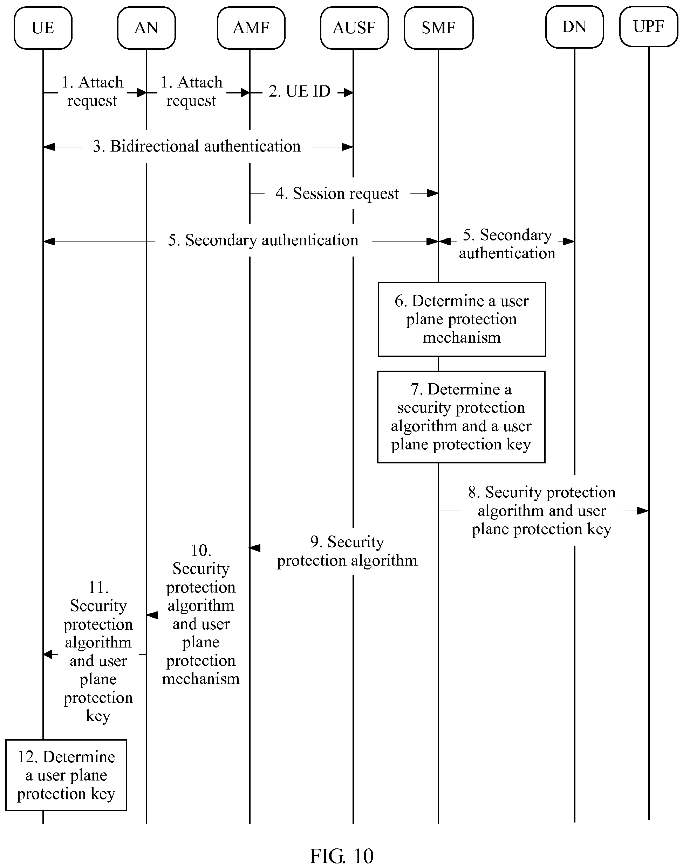

A key configuration method provided in an embodiment of the present invention is described below based on UE-CN from a granularity-independent perspective. As shown in FIG. 10, the key configuration method provided in this embodiment of the present invention includes the following steps.
1-3. In a network attach process, UE sends an attach request (attach request) to an AN, then the AN sends the attach request to an AMF, and then the AMF sends a UE ID to an AUSF.
   In this embodiment of the present invention, the attach request includes the user equipment identifier (UE ID), a user equipment security capability, and security requirement indication information (indicator). In addition, the attach request may further include a service ID, a UE service ID, and a DNN.
   In a specific embodiment, the AMF identifies the UE ID in the attach request, and sends the UE ID to the AUSF. In another specific embodiment, the AMF directly sends an authentication request to the AUSF, and after receiving the authentication request, the AUSF identifies the UE ID in the authentication request. The authentication request includes the UE ID.
   The AUSF performs authentication with the UE based on the UE ID in the attach request, and determines that the UE is an authorized user.
4. The AMF sends a session request to an SMF, and correspondingly, the SMF receives the session request.
   The session request is used to request to create a session between the UE and the SMF. For example, if a session is to be created by using a session create protocol, the session request is session create request signaling.
   The session request includes at least a session identifier (session ID). Optionally, the session request may further include the user equipment identifier (UE ID), the security requirement indication information (indicator), the DNN, the service ID, the UE service ID, or the like. The user equipment identifier (UE ID), the security requirement indication information (indicator), the DNN, the service ID, or the UE service ID may be carried in the session request when the UE creates a session.
5. Optionally, the UE performs secondary authentication with a DN.
6. The SMF determines a user plane protection mechanism.
   In a specific embodiment of the present invention, the SMF may determine the user plane protection mechanism based on at least one of the indicator (a user equipment security requirement and/or a service security requirement), UE registration information, subscription service data, and a service security requirement fed back by an AF. In other words, the SMF may comprehensively determine the user plane protection mechanism based on a security requirement required on a user equipment side and a preset security requirement on a network side or the service security requirement. For detailed content of determining the user plane protection mechanism by the SMF, similarly refer to related content descriptions of determining the user plane protection mechanism by the AMF in the embodiment in FIG. 3. Details are not described herein again.
7. The SMF determines a security protection algorithm and a user plane protection key.
   For detailed content, refer to descriptions of step 7 in the embodiment in FIG. 8.
8. The SMF sends the security protection algorithm or the user plane protection key to a UPF, and correspondingly, the UPF receives the security protection algorithm or the user plane protection key.
9. The SMF sends the security protection algorithm to the AMF.
10. The AMF sends the security protection algorithm and the user plane protection mechanism to the AN. The user plane protection mechanism is optional.
11. The AN sends the security protection algorithm and the user plane protection mechanism to the UE. The user plane protection mechanism is optional.
12. The UE generates a user plane protection key based on the user plane security algorithm, the user plane protection mechanism, and K_SMF; or the UE generates a user plane protection key based on the user plane security algorithm and K SMF.

It should be noted that for a part that is not described in detail in this embodiment, reference may be made to related descriptions in the embodiment in FIG. 8.

It should be further noted that there may be the following implementations in the foregoing method procedure of this embodiment:
Possibility 1: If the SMF does not need the indicator information in the process of determining the user plane protection mechanism, the UE may not send the indicator to the network side (or the attach request may not include the indicator).
Possibility 2: A sequence of the foregoing procedure steps is not limited in this embodiment. For example, the SMF may determine the user plane protection mechanism before step 5. For example, step 8 and step 9 may be performed simultaneously, or step 8 may be performed before or after step 9.
Possibility 3: In step 4, a session create procedure may alternatively be initiated by the UE, in other words, the UE sends the session request to the SMF by using the AMF.
Possibility 4: If the user plane protection mechanism includes a specific security protection algorithm, the SMF may send the user plane protection mechanism to the UPF, and further, the UPF obtains the security protection algorithm from the user plane protection mechanism.

The embodiment in FIG. 10 is merely an example and should not be considered as a limitation on the present invention.

It can be learned that a main difference between the embodiment in FIG. 10 and the embodiment in FIG. 8 lies in that in a procedure related to session creation, the SMF determines the user plane protection mechanism based on the security requirement required on the user equipment side (including security requirements of different services) and the preset security requirement on the network side.

Through implementation of this embodiment of the present invention, based on a future 5G communication architecture, in the session create procedure, the UE and a CN can complete policy negotiation, the SMF can determine the user plane protection mechanism, and then the UE and the CN can separately determine the user plane protection keys, so that security protection for user plane data is implemented. Through implementation of this embodiment of the present invention, network security protection between the UE and the core network can be implemented, so that a disadvantage of a hop-by-hop segment-based protection manner is avoided, and security of user plane data transmission is improved.

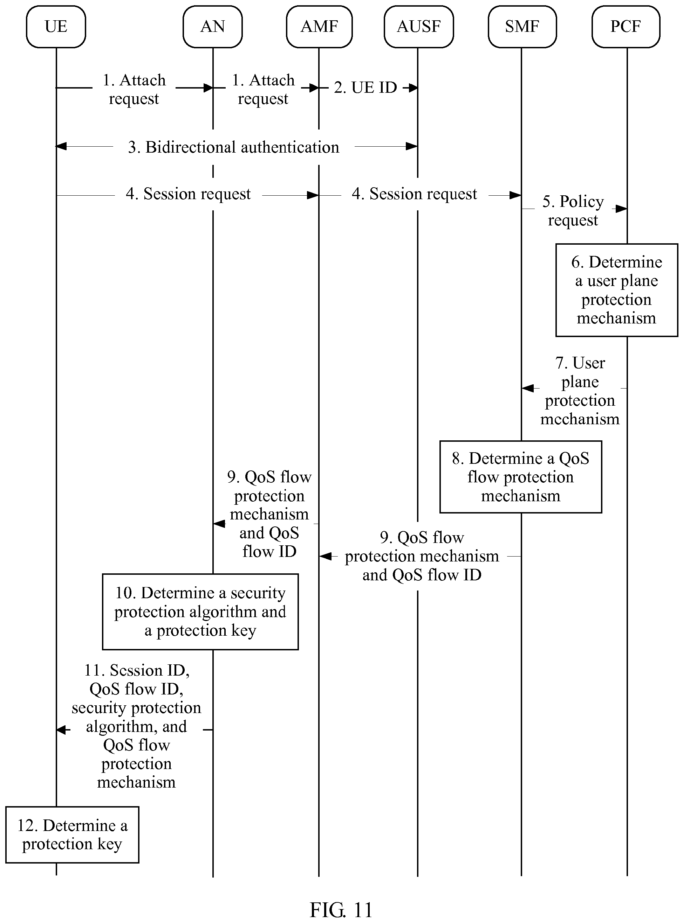

A flow-based key configuration method provided in an embodiment of the present invention is described below based on UE-AN from a granularity-dependent perspective. As shown in FIG. 11, the key configuration method provided in this embodiment of the present invention includes the following steps.
1-3. In a network attach process, UE sends an attach request to an AUSF by using an AN and an AMF.
   The AUSF performs authentication with the UE based on a UE ID, and determines that the UE is an authorized user.
4. The UE sends a session request to an SMF by using the AMF, and correspondingly, the SMF receives the session request.
   The session request is used to request to create a session between the UE and the SMF. For example, if a session is to be created by using a session create protocol, the session request is session create request signaling.
5. The SMF sends a policy request to a PCF.

In this embodiment of the present invention, a policy control function is deployed in the PCF, and the SMF sends the policy request to the PCF, so that the PCF determines a corresponding user plane protection mechanism based on the policy request. Specifically, the policy request includes at least a session identifier (session ID), and may further include the user equipment identifier (UE ID), security requirement indication information (indicator), a user equipment security capability, a service ID, a UE service ID, and a DNN. The security requirement indication information (indicator) is used to indicate the device security requirement and/or a service security requirement, and the session ID, the UE ID, the indicator, the user equipment security capability, the service ID, the UE service ID, and the DNN may be obtained by the SMF from the received session request.

Specifically, the session identifier (session ID) is used to identify an identity of a session, and the session has a unique session identifier. Optionally, the session identifier may be generated by any one of the UE, the AN, the AMF, and the SMF. When the session identifier is generated by the UE, the session identifier is generated when the UE prepares to newly create a session. When the session identifier is generated by any one of the AN, the AMF, and the SMF, the session identifier is generated when the any one of the AN, the AMF, and the SMF receives a request sent by another network element. For example, when receiving the session request sent from the AN, the SMF generates the session ID based on the session request.

In addition, the session identifier may be a new identifier, or may be another identifier that is reused, for example, any one of an existing session identifier, an air interface identifier, a radio bearer identifier, a slice identifier, an air interface resource identifier, a permanent device identifier, a temporary device identifier, a permanent user identifier, a temporary user identifier, and the like.

Specifically, the user equipment identifier (UE ID) is used to represent an identity of the user equipment that sends the session request. For example, the UE ID may be one or more of a media access control (Media Access Control, MAC) address, an Internet protocol (Internet Protocol, IP) address, a mobile phone number, an international mobile equipment identity (International Mobile Equipment Identity, IMEI), an international mobile subscriber identity (International Mobile Subscriber Identity, IMSI), an IP multimedia private identity (IP Multimedia Private Identity, IMPI), a temporary mobile subscriber identity (Temporary Mobile Subscriber Identity, TMSI), an IP multimedia public identity (IP Multimedia Public Identity, IMPU), and a globally unique temporary UE identity (Globally Unique Temporary UE Identity, GUTI).

Specifically, the user equipment security capability is used to represent a security protection algorithm, a key length, a key update period, and the like that can be supported by the user equipment. It may be understood that because different user equipments have different storage capacities and operation speeds, different user equipments support different security protection algorithms, key lengths, and key update periods. For example, an internet of things (Internet of Things, IoT) device cannot support a security protection algorithm with relatively high complexity because the IoT device has a small storage capacity and a low operation speed, and a smartphone can support a security protection algorithm with relatively high complexity because the smartphone has a large storage capacity and a relatively high operation speed. Therefore, the user equipment needs to notify the PCF of the user equipment security capability, so that the PCF determines a user plane protection mechanism based on the user equipment security capability.

Specifically, the device security requirement is used to indicate a security requirement required by the user equipment, in other words, the device security requirement is used to indicate a user plane protection mechanism required by the UE to the PCF, for example, indicate "encryption required + no integrity protection required", "encryption required + no integrity protection required", or "encryption required + integrity protection required", or may indicate a security protection algorithm required by the UE, a key length acceptable to the UE, a key update period acceptable to the UE, and the like.

Specifically, the service security requirement is used to represent at least one of a security algorithm, a key length, and a key update period that are acceptable to a service. It may be understood that different services have different requirements on the security algorithm, the key length, and the key update period. For example, a financial service has a relatively high requirement on the security algorithm, but a video download service has a relatively low requirement on the security algorithm. Therefore, a first device needs to notify the PCF of the service security requirement, so that the PCF generates a user plane protection mechanism based on the service security requirement.
6. The PCF determines a user plane protection mechanism.

In a specific embodiment of the present invention, the PCF may determine the user plane protection mechanism in a plurality of manners. Specifically, the PCF may determine the user plane protection mechanism based on at least one of the policy request, UE registration information, subscription service data, and a service security requirement fed back by an AF, that is, the PCF may determine the user plane protection mechanism based on at least one of the indicator, the service security requirement, the UE registration information, the subscription service data, and the service security requirement fed back by the AF.

The registration information is preset on a UDM, and the PCF obtains the UE registration information from the UDM. For example, the PCF sends the UE ID in the policy request to the UDM, to obtain the UE registration information from the UDM. The UE registration information includes a preset UE security requirement. The UE security requirement is used to indicate whether the UE needs to perform encryption, integrity protection, or both encryption and integrity protection. Alternatively, the SMF may send the UE registration information to the PCF. In this case, the SMF sends the UE ID to the UDM, to obtain the UE registration information.

The subscription service data is preset on the UDM, and the PCF obtains the subscription service data from the UDM. For example, the PC sends the service ID in the policy request to the UDM, or sends the DNN in the policy request to the UDM; and the UDM determines, based on the service ID or the DNN, the subscription service data preset on the UDM, and sends the related subscription service data to the PCF. Alternatively, the PCF sends the UE ID and the service ID in the policy request to the UDM, or sends the UE ID and the DNN in the policy request to the UDM; and the UDM determines, based on the UE ID and the service ID or the UE ID and the DNN, the subscription service data preset on the UDM, and sends the related subscription service data to the PCF. On the foregoing basis, the PCF may also send the service UE ID to the UDM, so that the UDM performs determining. The subscription service data includes a preset service security requirement, and the preset service security requirement is used to indicate a user plane protection mechanism required by a service, for example, indicate whether encryption, integrity protection, or both encryption and integrity protection are required for the service.

The service security requirement fed back by the AF is preset on the AF. Specifically, the PCF sends a request to the AF, and the AF feeds back the service security requirement to the PCF based on the request. The request may include at least one of the UE ID, the service ID, the service UE ID, or the DNN. The service security requirement fed back by the AF is used to indicate a user plane protection mechanism required by a service, for example, indicate whether encryption, integrity protection, or both encryption and integrity protection are required for the service.

In this embodiment of the present invention, the user plane protection mechanism is used to indicate a user plane data transmission protection manner, for example, indicate whether the UE needs to perform encryption and/or integrity protection on user plane data. The user plane protection mechanism may be "encryption required + no integrity protection required", "encryption required + no integrity protection required", or "encryption required + integrity protection required". In addition, in a specific embodiment of the present invention, the user plane protection mechanism may be further used to indicate a security protection algorithm, a key length acceptable to the UE, a key update period acceptable to the UE, and the like.

Specifically, in specific implementation of this embodiment of the present invention, the user plane protection mechanism may be service data flow security protection (Service Data Flow Security Protection, SDFSP). An example in which the user plane protection mechanism is the SDFSP is used for description below.
7. The PCF sends the user plane protection mechanism (SDFSP) to the SMF, and correspondingly, the SMF obtains the user plane protection mechanism (SDFSP).

In a specific embodiment, the PCF directly sends the SDFSP to the SMF.

In another specific embodiment, the PCF encapsulates the SDFSP into a specific parameter and sends the specific parameter to the SMF. For example, the PCF encapsulates the SDFSP into a PCC rule, and the PCF sends the PCC rule to the SMF. Correspondingly, after obtaining the PCC rule, the SMF obtains the SDFSP from the PCC rule.
8. The SMF determines a QoS flow protection mechanism based on the user plane protection mechanism (SDFSP).

In this embodiment of the present invention, when the user plane data needs to be transmitted by using a QoS flow transport channel, to obtain a QoS flow-based security mechanism (at a fine granularity), the SMF needs to determine a QoS flow (QFI) corresponding to the user plane data, and further needs to determine a security mechanism corresponding to the QoS flow. The security mechanism corresponding to the QoS flow is referred to as QFI security protection (QFI security protection) below, where the QFI security protection is referred to as QFISP for short, and QFI is a QoS flow ID.

Optionally, the SMF may determine a QoS flow based on an SDFSP requirement and a QoS requirement in the PCC rule. The SDFSP requirement is a security requirement related to the user plane protection mechanism, and the QoS requirement is a requirement for quality of service parameters such as a latency, bandwidth, and an error rate in a communications network.

Optionally, the SMF may determine a QoS flow based on an SDFSP requirement. The SDFSP requirement is a security requirement related to the user plane protection mechanism.

In specific implementation, a QoS flow channel is preset in a communication architecture. For example, identifiers corresponding to the preset QoS flow channel are a QoS flow ID 1, a QoS flow ID 2, a QoS flow ID 3, and a QoS flow ID 4. In this case, (1) the SMF may determine an existing QoS flow based on the SDFSP requirement and the QoS requirement in the PCC rule to transmit the user plane data, for example, select the QoS flow ID 2; or (2) the SMF may find, based on the SDFSP requirement and the QoS requirement in the PCC rule, that the user plane data cannot be transmitted by using the QoS flow ID 1, the QoS flow ID 2, the QoS flow ID 3, or the QoS flow ID 4, and therefore, need to newly create a QoS flow channel, for example, generate a QoS flow ID 5 to transmit the user plane data. A manner of selecting a QoS flow based on only the SDFSP is similar to the foregoing.

It should be noted that when the user plane data is a service data flow (Service Data Flow, SDF), if different SDFs have a same security requirement, security protection may be performed on SDFs with a same security requirement by using a same set of QFISP. For example, QoS flows include an SDF 1 and an SDF 2, and both SDFSP 1 corresponding to the SDF 1 and SDFSP 2 corresponding to the SDF 2 support only encryption/require no integrity protection. In this case, data of the QoS flows may be protected by using one set of QFISP. In this case, the QFISP is the same as SDFSP.

It may be understood that the SDFSP may include a plurality of types of QFISP. For example, for four service data flows: an SDF 1, an SDF 2, an SDF 3, and an SDF 4 in a communications system, the SDF 1 and the SDF 2 with a same security requirement use QFISP 1 (corresponding to a QoS flow ID 1) as a security mechanism, and the SDF 3 and the SDF 4 with a same security requirement use QFISP 2 (corresponding to a QoS flow ID 2) as a security mechanism.

It may be further understood that when all service data flows have a same security requirement (for example, when the SDF 1, the SDF 2, the SDF 3, and the SDF 4 have a same security requirement), QFISP corresponding to these service data flows is equivalent to SDFSP.

Optionally, the SMF may select a QoS flow based on only an SDFSP requirement, to determine the QoS flow. If a QoS flow ID that meets the SDFSP requirement exists, a QoS flow corresponding to the QoS flow ID is used. Otherwise, a new QoS flow is generated.

In a specific embodiment, after determining QFISP corresponding to the user plane data, the SMF generates a QoS rule, where the QoS rule includes the QFISP. The QoS rule is a parameter, and the parameter is used to provide the QFISP corresponding to user plane data to the UE.

In a specific embodiment, after determining QFISP corresponding to the user plane data, the SMF generates a QoS profile, where the QoS profile includes the QFISP. The QoS profile is a parameter, and the parameter is used to provide the QFISP corresponding to user plane data to the AN.
9. The SMF sends the QoS flow protection mechanism (QFISP) and a QoS flow ID to the AN by using the AMF.

In a specific embodiment, the SMF directly sends the QFISP and the QoS flow ID to the AN by using the AMF.

In another specific embodiment, the SMF sends the QoS rule, the QoS profile, and the QoS flow ID to the AN by using the AMF. The QoS profile includes the QFISP.

Optionally, the SMF may further send the session ID to the AN by using the AMF.
10. The AN determines a security protection algorithm and a protection key.

Specifically, the AN establishes a mapping from a session ID and a QoS flow ID to a DRB based on the QoS profile. When selecting a DRB, the AN may map QoS flows with a same security protection requirement to a same DRB. In this case, the AN may determine, by determining a DRB ID, that user plane protection mechanisms of data in the DRB (that is, data with a same DRB ID) are the same. Optionally, after determining the user plane protection mechanism, the AN may perform encryption or integrity protection on the user plane data by using the key.

In a specific embodiment, if the QFISP is whether to perform encryption/whether to perform integrity protection, and no security protection algorithm is directly specified in the QFISP, the AN determines the security protection algorithm based on the UE security capability, an algorithm priority list supported by the AN, and the user plane protection mechanism. For example, when the user plane protection mechanism is "encryption required + integrity protection required", the AN determines, based on the UE security capability and the algorithm priority list supported by the AN, that an encryption algorithm is AES and an integrity protection algorithm is AES.

For another example, if no encryption is required, an encryption algorithm is null. If no integrity protection is required, an integrity protection algorithm is null.

In another specific embodiment, if the QFISP is whether to perform encryption/whether to perform integrity protection, and a security protection algorithm is directly specified in the QFISP, including that an encryption algorithm and an integrity protection algorithm are specified, the AN may directly obtain the security protection algorithm from the QFISP. For example, in step 6, after determining the user plane protection mechanism, the PCF may obtain an algorithm priority list supported by the AN, and determine an air interface protection algorithm based on the algorithm priority list supported by the AN, an algorithm supported by the UE, and the user equipment security capability. For example, in a user plane protection mechanism of "encryption required + integrity protection required", the PCF further determines that an encryption algorithm is AES and an integrity protection algorithm is AES, and adds the security protection algorithm to the user plane protection mechanism. In this case, because the encryption algorithm and the integrity protection algorithm are directly specified in the user plane protection mechanism (QFISP), after obtaining the QFISP, the AN may directly obtain the encryption algorithm and the integrity protection algorithm from the QFISP.

In this embodiment of the present invention, the AN may generate the user plane protection key based on the security protection algorithm. Specifically, the AN calculates, based on the determined encryption algorithm, a key used for encryption protection, to obtain an air interface user plane encryption key; or the AN calculates, based on the determined integrity protection algorithm, a key used for integrity protection, to obtain an air interface user plane integrity protection key. The air interface user plane encryption key and the air interface user plane integrity protection key may be collectively referred to as a first air interface user plane protection key.

In specific implementation, first air interface user plane protection key = KDF(K_AN, UP algorithm ID); or
first air interface user plane protection key = KDF(K_AN, UP algorithm ID, flow ID); or
second air interface user plane protection key = KDF(K_AN, UP algorithm ID, DRB ID); or
first air interface user plane protection key = KDF(K_AN, UP algorithm ID, session ID, flow ID).

K_AN is a base station key derived, after authentication succeeds, by the AMF based on a base key obtained after the authentication or a key derived again after the authentication (K_AN may also be referred to as an intermediate key), and the AMF sends K_AN to the AN. UP algorithm ID may be an ID of the encryption algorithm, or may be an ID of the integrity protection algorithm. The ID of the encryption algorithm is used to indicate the corresponding encryption algorithm, and the ID of the integrity protection algorithm is used to indicate the corresponding integrity protection algorithm.
11. The AN sends a session ID, the QoS flow ID, the security protection algorithm, and the QoS flow protection mechanism (QFISP) to the UE.

The QFISP may be carried in the QoS rule and sent to the UE.

In addition, the QoS flow protection mechanism is optional.
12. The UE determines a user plane protection key.

Specifically, the UE obtains the session ID, the QFI, the user plane security algorithm, and K AN, and correspondingly generates the user plane protection key. K AN is a base station key derived, after authentication succeeds, by the UE based on a base key obtained after the authentication or a key derived again after the authentication.

Specifically, the UE calculates, based on the received encryption algorithm, a key used for encryption protection, to obtain an air interface user plane encryption key; or the UE calculates, based on the received integrity protection algorithm, a key used for integrity protection, to obtain an air interface user plane integrity protection key. The air interface user plane encryption key and the air interface user plane integrity protection key may be collectively referred to as a second air interface user plane protection key.

In specific implementation, second air interface user plane protection key = KDF(K_AN, UP algorithm ID); or
second air interface user plane protection key = KDF(K_AN, UP algorithm ID, flow ID); or
second air interface user plane protection key = KDF(K_AN, UP algorithm ID, DRB ID); or
second air interface user plane protection key = KDF(K_AN, UP algorithm ID, session ID, flow ID).

UP algorithm ID may be the ID of the encryption algorithm, or may be the ID of the integrity protection algorithm. KDF is a key derivation function (Key Derivation Function, KDF), and includes but is not limited to the following password derivation functions: HMAC (for example, HMAC-SHA256 or HMAC-SHA1), NMAC, CMAC, OMAC, CBC-MAC, PMAC, UMAC, VMAC, and HASH algorithms, and the like.

It may be understood that in a process of implementing the user plane protection mechanism in a specific application scenario, the first air interface user plane protection key and the second air interface user plane protection key may be a same key. In uplink transmission, the UE may perform encryption protection and/or integrity protection on the user plane data based on the second air interface user plane protection key, and after receiving the user plane data sent by the UE, the AN performs decryption and/or integrity check on the user plane data based on the first air interface user plane protection key. In downlink transmission, the AN performs encryption protection and/or integrity protection on the user plane data based on the first air interface user plane protection key, and after receiving the user plane data sent by the AN, the UE performs decryption and/or integrity check on the user plane data based on the second air interface user plane protection key.

It should be noted that there may be the following implementations in the foregoing method procedure of this embodiment:
Possibility 1: In step 4, a session create procedure may alternatively be initiated by the AMF, in other words, the AMF sends the session request to the SMF. In this case, the user equipment identifier (UE ID), the user equipment security capability, the indicator, the DNN, the service ID, the UE service ID, or the like in the session request may be obtained by the AMF from the received attach request, and the attach request carries the foregoing information.
Possibility 2: In a possible embodiment, content in step 7 and step 8 may be replaced by the following: The PCF directly determines a QoS flow protection mechanism, and sends the QoS flow protection mechanism to the SMF.
Possibility 3: The flow ID and the session ID may be generated before the SMF sends the policy request.

It should be further noted that the embodiment in FIG. 11 is merely an example, and should not be considered as a limitation on the present invention.

It can be learned that through implementation of this embodiment of the present invention, based on a future 5G communication architecture, in a procedure related to session creation, the UE and the AN can complete policy negotiation based on a granularity of a flow transport channel, the PCF can determine the user plane protection mechanism based on a security requirement required on a user equipment side (including security requirements of different services) and a preset security requirement on a network side, and the UE and the AN can separately determine the security protection algorithm and the keys, so that security protection for the user plane data is implemented.

To facilitate understanding of the solutions in the embodiments of the present invention, the following describes, based on UE-AN by using an example, some operation procedures in which the flow-based key configuration method in FIG. 11 is applied and that are in an uplink transmission process and a downlink transmission process of user plane data. Specific descriptions are as follows:
(1) Uplink transmission process of user plane data in which the flow-based key configuration method is applied
   On a UE side, when uplink transmission needs to be performed on the user plane data, UE determines a session ID based on the user data, and further determines a QoS flow ID. For example, if the UE determines that a session ID 1 (PDU session 1) is used for uplink user data (IP packet), and further determines that a QFI is a QoS flow ID 1, through negotiation between the UE and an AN according to the method procedure shown in FIG. 11, the UE determines a security protection mechanism (QFISP) corresponding to the QoS flow ID 1, and obtains a security protection algorithm, including an encryption algorithm and an integrity protection algorithm. Therefore, the UE performs security protection on the user plane data based on the encryption algorithm and the integrity protection algorithm by using a corresponding protection key.
   On an AN side, the AN determines the QoS flow ID 1 based on an air interface identifier RB ID 1 (or a DRB ID 1). Through negotiation between the UE and the AN according to the method procedure shown in FIG. 11, the UE determines the security protection mechanism (QFISP) corresponding to the QoS flow ID 1, and obtains the security protection algorithm, including the encryption algorithm and the integrity protection algorithm. After obtaining the user plane data uploaded by the UE, the AN may perform security protection on the user plane data based on the encryption algorithm and the integrity protection algorithm by using a corresponding key. It should be noted that the AN may directly determine the security protection mechanism based on the QFI in a protocol stack, or the UE determines the QFI based on marking in an air interface protocol stack, and then determines the security mechanism.
(2) Downlink transmission process of user plane data in which the flow-based key configuration method is applied

On an AN side, when an AN needs to perform downlink transmission on the user plane data, the AN may determine a security protection mechanism based on a QFI according to the method procedure shown in FIG. 11, for example, determine that the QFI is a QoS flow ID 3, determine that the QoS flow ID 3 corresponds to an air interface identifier RB ID 3 (DRB ID 3), and further determine a security protection mechanism (QFISP) corresponding to the QoS flow ID 3, and obtain a security protection algorithm, including an encryption algorithm and an integrity protection algorithm. The AN performs security protection on the user plane data based on the encryption algorithm and the integrity protection algorithm by using a corresponding key.

On a UE side, UE determines, based on the DRB ID 3, that the QFI is the QoS flow ID 3. The AN may determine, based on the QFI according to the method procedure shown in FIG. 11, the security protection mechanism (QFISP) corresponding to the QoS flow ID 3, and obtain the security protection algorithm, including the encryption algorithm and the integrity protection algorithm. The UE may perform security protection on the user plane data based on the encryption algorithm and the integrity protection algorithm by using a corresponding key. It should be noted that the UE may directly determine the security protection mechanism based on the QFI in a protocol stack, or the UE determines the QFI based on marking in an air interface protocol stack, and then determines the security mechanism.

A DRB-based key configuration method provided in an embodiment of the present invention is described below based on UE-AN from a granularity-dependent perspective. As shown in FIG. 12, the key configuration method provided in this embodiment of the present invention includes the following steps.
1-3. In a network attach process, UE sends an attach request to an AUSF by using an AN and an AMF.
   The AUSF performs authentication with the UE based on a UE ID, and determines that the UE is an authorized user.
   In this embodiment of the present invention, the attach request includes at least the user equipment identifier (UE ID). In addition, optionally, the attach request may further include a service ID, a UE service ID, or a DNN. Optionally, the attach request may further include security requirement indication information (indicator).
4. The UE sends a session request to an SMF by using the AMF, and correspondingly, the SMF receives the session request.
5. The SMF sends a policy request to a PCF.
6. The PCF determines a user plane protection mechanism.
7. The PCF sends the user plane protection mechanism (SDFSP) to the SMF, and correspondingly, the SMF obtains the user plane protection mechanism (SDFSP).
8. The SMF determines a QoS flow protection mechanism based on the user plane protection mechanism (SDFSP).
9. The SMF sends the QoS flow protection mechanism (QFISP) and a QoS flow ID to the AN by using the AMF.
   In a specific embodiment, the SMF directly sends the QFISP to the AN by using the AMF.
   In another specific embodiment, the SMF sends a QoS rule and a QoS profile to the AN by using the AMF. The QoS rule includes the QFISP, and the QoS rule is used to provide QFISP corresponding to user plane data to the UE. The QoS profile includes the QFISP, and the QoS profile is used to provide the QFISP corresponding to user plane data to the AN.
   Optionally, the SMF may further send a session ID to the AN by using the AMF.
10. The AN determines a DRB and a DRB protection mechanism.

In this embodiment of the present invention, a security protection mechanism in data transmission can be implemented for user plane data based on a DRB.

Specifically, to obtain a DRB-based security protection mechanism (at a fine granularity), the AN needs to determine a DRB corresponding to a QoS flow and establish a mapping from a session ID and a QoS flow ID to a DRB ID, and further needs to determine a security mechanism corresponding to the DRB ID. The security mechanism corresponding to the DRB ID is referred to as DRB security protection (DRB security protection) below, where the DRB security protection is referred to as DRBSP for short.

Optionally, the AN may determine a DRB ID based on a QFISP requirement and a QoS requirement. The DRB ID needs to meet both the QoS requirement in the QoS profile and the QFISP requirement. The QFISP requirement is a security requirement related to a QoS flow (for example, only encryption is required, and no integrity protection is required), and the QoS requirement is a requirement for quality of service parameters such as a latency, bandwidth, and an error rate in a communications network.

Optionally, the AN may determine a DRB ID based on a QFISP requirement. The DRB ID needs to meet the QFISP requirement.

In specific implementation, a DRB channel is preset in a communication architecture. For example, identifiers corresponding to the preset DRB channel are a DRB ID 1, a DRB ID 2, a DRB ID 3, and a DRB ID 4. In this case, (1) the SMF may determine an existing DRB based on the QFISP requirement and the QoS requirement in the profile to carry a QoS flow or user plane data, for example, select the DRB ID 1; or (2) the SMF may find, based on the QFISP requirement and the QoS requirement in the profile, that a QoS flow or user plane data cannot be carried by using the DRB ID 1, the DRB ID 2, the DRB ID 3, or the DRB ID 4, and therefore, need to newly create a DRB channel, for example, generate a DRB ID 5 to carry the QoS flow or the user plane data.

It should be noted that if different QoS flows (or different SDFs) have a same security requirement, security protection may be performed on QoS flows with a same security requirement by using a same set of DRBSP. For example, DRBs include a QoS flow 1 and a QoS flow 2, and QFISP 1 corresponding to the QoS flow 1 and QFISP 2 corresponding to the QoS flow 2 support only encryption/require no integrity protection. In this case, data carried on the DRB may be protected by using one set of DRBSP.

It may be understood that different DRBs may have different DRBSP. For example, for four service data flows: a QoS flow 1, a QoS flow 2, a QoS flow 3, and a QoS flow 4 in a communications system, the QoS flow 1 and the QoS flow 2 with a same security requirement use DRBSP 1 (corresponding to a DRB ID 1) as a security mechanism, and the QoS flow 3 and the QoS flow 4 with a same security requirement use DRBSP 2 (corresponding to a DRB ID 2) as a security mechanism.

Optionally, the AN may select a DRB ID based on only a QFISP requirement, to determine a DRB. If a DRB ID that meets the QFISP requirement exists, a DRB corresponding to the DRB ID is used. Otherwise, a new DRB is generated.
11. The AN determines a security protection algorithm and a user plane protection key.

In a specific embodiment, if the DRBSP is whether to perform encryption/whether to perform integrity protection, and no security protection algorithm is directly specified in the DRBSP, the AN determines the security protection algorithm based on a UE security capability, an algorithm priority list supported by the AN, and the user plane protection mechanism. For example, if encryption is required but no integrity protection is required in the DRBSP, AES encryption/ZUC encryption is supported based on the UE security capability, and the AN supports a case in which AES encryption has a first priority, the AN selects AES as an encryption algorithm and a null algorithm as an integrity protection algorithm.

In another specific embodiment, if the DRBSP is whether to perform encryption/whether to perform integrity protection, and a security protection algorithm is directly specified in the DRBSP, including that an encryption algorithm and an integrity protection algorithm are specified, the AN may directly obtain the security protection algorithm from the DRBSP.

In this embodiment of the present invention, the AN may generate the user plane protection key based on the security protection algorithm. Specifically, the AN calculates, based on the determined encryption algorithm, a key used for encryption protection, to obtain an air interface user plane encryption key; or the AN calculates, based on the determined integrity protection algorithm, a key used for integrity protection, to obtain an air interface user plane integrity protection key. The air interface user plane encryption key and the air interface user plane integrity protection key may be collectively referred to as a first air interface user plane protection key.

In specific implementation, first air interface user plane protection key = KDF(K_AN, UP algorithm ID); or
first air interface user plane protection key = KDF(K_AN, UP algorithm ID, DRB ID); or
first air interface user plane protection key = KDF(K_AN, UP algorithm ID, flow ID); or
first air interface user plane protection key = KDF(K_AN, UP algorithm ID, session ID, flow ID); or
first air interface user plane protection key = KDF(K_AN, UP algorithm ID, session ID, DRB ID).

K_AN is a base station key derived, after authentication succeeds, by the AMF based on a base key obtained after the authentication or a key derived again after the authentication, and the AMF sends K AN to the AN. UP algorithm ID may be an ID of the encryption algorithm, or may be an ID of the integrity protection algorithm. The ID of the encryption algorithm is used to indicate the corresponding encryption algorithm, and the ID of the integrity protection algorithm is used to indicate the corresponding integrity protection algorithm.
12. The AN sends a session ID, the QoS flow ID, the security protection algorithm, the QoS flow protection mechanism (QFISP), and the DRB protection mechanism (DRBSP) to the UE.

The QFISP and/or the DRBSP may be carried in the QoS rule and sent to the UE.

The QFISP is optional.

The DRBSP is optional.
13. The UE determines a user plane protection key.

The UE obtains the session ID, the QFI, the user plane security algorithm, the QFISP, the DRBSP, and K_AN, and correspondingly generates the user plane protection key.

Alternatively, the UE obtains the session ID, the QFI, and the user plane security algorithm. The UE generates the user plane protection key based on the session ID, the QFI, the user plane security algorithm, and K AN that are obtained.

Specifically, the UE calculates, based on the received encryption algorithm, a key used for encryption protection, to obtain an air interface user plane encryption key; or the UE calculates, based on the received integrity protection algorithm, a key used for integrity protection, to obtain an air interface user plane integrity protection key. The air interface user plane encryption key and the air interface user plane integrity protection key may be collectively referred to as a second air interface user plane protection key.

In specific implementation, second air interface user plane protection key = KDF(K_AN, UP algorithm ID); or
second air interface user plane protection key = KDF(K_AN, UP algorithm ID, DRB ID); or
second air interface user plane protection key = KDF(K_AN, UP algorithm ID, flow ID); or
second air interface user plane protection key = KDF(K_AN, UP algorithm ID, session ID, flow ID); or
second air interface user plane protection key = KDF(K_AN, UP algorithm ID, session ID, DRB ID).

K_AN is a base station key derived, after authentication succeeds, by the UE based on a base key obtained after the authentication or a key derived again after the authentication. UP algorithm ID may be the ID of the encryption algorithm, or may be the ID of the integrity protection algorithm. KDF is a key derivation function (Key Derivation Function, KDF), and includes but is not limited to the following password derivation functions: HMAC (for example, HMAC-SHA256 or HMAC-SHA1), NMAC, CMAC, OMAC, CBC-MAC, PMAC, UMAC, VMAC, and HASH algorithms, and the like.

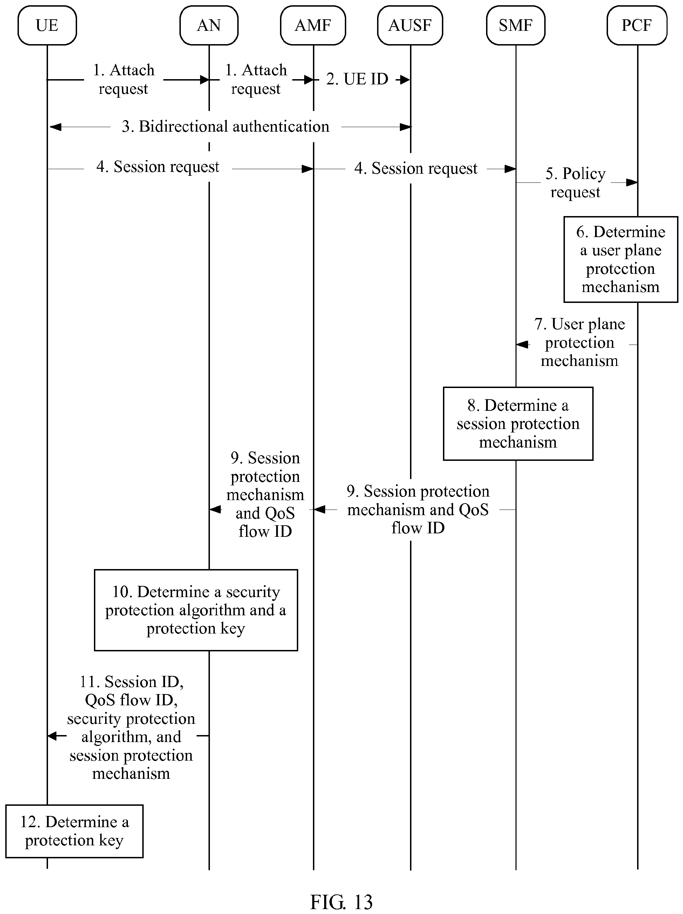

It should be noted that for a step that is not described in detail in the embodiment in FIG. 13, reference may be made to related descriptions in the embodiment in FIG. 11. The embodiment in FIG. 12 is merely an example and should not be considered as a limitation on the present invention.

It should be further noted that there may be the following implementations in the foregoing method procedure of this embodiment:
Possibility 1: In step 4, a session create procedure may alternatively be initiated by the AMF, in other words, the AMF sends the session request to the SMF. In this case, the user equipment identifier (UE ID), the user equipment security capability, the indicator, the DNN, the service ID, the UE service ID, or the like in the session request may be obtained by the AMF from the received attach request, and the attach request carries the foregoing information.
Possibility 2: In a possible embodiment, content in step 7 and step 8 may be replaced by the following: The PCF directly determines a QoS flow protection mechanism, and sends the QoS flow protection mechanism to the SMF.
Possibility 3: The flow ID and the session ID may be generated before the SMF sends the policy request.

It can be learned that a difference between the embodiment in FIG. 12 and the embodiment in FIG. 11 lies in that the UE and the AN perform policy negotiation based on a granularity of a DRB transport channel.

Through implementation of this embodiment of the present invention, based on a future 5G communication architecture, in a procedure related to session creation, the UE and the AN can complete policy negotiation based on a granularity of a DRB transport channel, the PCF can determine the user plane protection mechanism based on a security requirement required on a user equipment side (including security requirements of different services) and a preset security requirement on a network side, and the UE and the AN can separately determine the security protection algorithm and the keys, so that security protection for the user plane data is implemented.

The following briefly describes, based on UE-AN by using an example, some operation procedures in which the DRB-based key configuration method in FIG. 12 is applied and that are in an uplink transmission process and a downlink transmission process of user plane data. Descriptions are as follows:
(1) Uplink transmission process of user plane data in which the DRB-based key configuration method is applied
   On a UE side, UE determines a session ID based on the user data, further determines a QFI and a DRB ID, and further determines a security protection mechanism (DRBSP) based on the DRB ID. After determining an encryption algorithm and an integrity protection algorithm, the UE performs security protection on the user plane data by using a corresponding user plane protection key.
   On an AN side, an AN determines the corresponding security protection mechanism (DRBSP) based on the DRB ID, and obtains a security protection algorithm, including the encryption algorithm and the integrity protection algorithm. After obtaining the user plane data uploaded by the UE, the AN may perform security protection on the user plane data based on the encryption algorithm and the integrity protection algorithm by using a corresponding key.
(2) Downlink transmission process of user plane data in which the DRB-based key configuration method is applied

On an AN side, when an AN needs to perform downlink transmission on the user plane data, the AN determines a DRB based on a QFI, and then determines a security protection mechanism (DRBSP) corresponding to the DRB, and obtains a security protection algorithm, including an encryption algorithm and an integrity protection algorithm. The AN performs security protection on the user plane data based on the encryption algorithm and the integrity protection algorithm by using a corresponding key.

On a UE side, UE determines the corresponding security protection mechanism (DRBSP) based on a DRB ID, and obtains the security protection algorithm, including the encryption algorithm and the integrity protection algorithm. The UE may perform security protection on the user plane data based on the encryption algorithm and the integrity protection algorithm by using a corresponding key.

A session-based key configuration method provided in an embodiment of the present invention is described below based on UE-AN from a granularity-dependent perspective. As shown in FIG. 13, the key configuration method provided in this embodiment of the present invention includes the following steps.
1-3. In a network attach process, UE sends an attach request to an AUSF by using an AN and an AMF.
   The AUSF performs authentication with the UE based on a UE ID, and determines that the UE is an authorized user.
   In this embodiment of the present invention, the attach request includes at least the user equipment identifier (UE ID). In addition, optionally, the attach request may further include a service ID, a UE service ID, or a DNN. Optionally, the attach request may further include security requirement indication information (indicator).
4. The UE sends a session request to an SMF by using the AMF, and correspondingly, the SMF receives the session request.
5. The SMF sends a policy request to a PCF.
6. The PCF determines a user plane protection mechanism.
7. The PCF sends the user plane protection mechanism (SDFSP) to the SMF, and correspondingly, the SMF obtains the user plane protection mechanism (SDFSP).
8. The SMF determines a session protection mechanism.
   In this embodiment of the present invention, when user plane data needs to be transmitted by using a session transport channel, a DRB transport channel, or a QoS flow transport channel, a security protection mechanism in data transmission may be further implemented based on a session.
   Specifically, the SMF may determine the session protection mechanism based on SDFSP in different PCC rules; or the SMF directly receives the session protection mechanism from the PCF.
9. The SMF sends QFISP, the session protection mechanism, and a QoS flow ID to the AN by using the AMF.
   In a specific embodiment, the SMF directly sends a session ID, the session protection mechanism, and the QoS flow ID to the AN by using the AMF.
   In another specific embodiment, the SMF sends a QoS rule, a QoS profile, and the QoS flow ID to the AN by using the AMF. The QoS rule includes the session protection mechanism, and the QoS rule is used to provide a session protection mechanism corresponding to user plane data to the UE. The QoS profile includes the session protection mechanism, and the QoS profile is used to provide the session protection mechanism corresponding to the user plane data to the AN.
   Optionally, the SMF may further send the session ID to the AN by using the AMF.
10. The AN determines a security protection algorithm and a user plane protection key.

In a specific embodiment, if the session protection mechanism is whether to perform encryption/whether to perform integrity protection, and no security protection algorithm is directly specified in the session protection mechanism, the AN determines the security protection algorithm based on a UE security capability, an algorithm priority list supported by the AN, and the user plane protection mechanism. For example, if encryption is required but no integrity protection is required in the session protection mechanism, AES encryption/ZUC encryption is supported based on the UE security capability, and the AN supports a case in which AES encryption has a first priority, the AN selects AES as an encryption algorithm and a null algorithm as an integrity protection algorithm.

In another specific embodiment, if the session protection mechanism is whether to perform encryption/whether to perform integrity protection, and a security protection algorithm is directly specified in the session protection mechanism, including that an encryption algorithm and an integrity protection algorithm are specified, the AN may directly obtain the security protection algorithm from the session protection mechanism.

In this embodiment of the present invention, the AN may generate the user plane protection key based on the security protection algorithm. Specifically, the AN calculates, based on the determined encryption algorithm, a key used for encryption protection, to obtain an air interface user plane encryption key; or the AN calculates, based on the determined integrity protection algorithm, a key used for integrity protection, to obtain an air interface user plane integrity protection key. The air interface user plane encryption key and the air interface user plane integrity protection key may be collectively referred to as a first air interface user plane protection key.

In specific implementation, first air interface user plane protection key = KDF(K_AN, UP algorithm ID); or
first air interface user plane protection key = KDF(K_SMF, UP algorithm ID, flow ID); or
KDF(K_SMF, UP algorithm ID, session ID); or
KDF(K_SMF, UP algorithm ID, DRB ID).

K_AN is a base station key derived, after authentication succeeds, by the AMF based on a base key obtained after the authentication or a key derived again after the authentication, and the AMF sends K AN to the AN. UP algorithm ID may be an ID of the encryption algorithm, or may be an ID of the integrity protection algorithm. DRB ID may be an identifier of a DRB allocated by the AN to this service.
11. The AN sends a session ID, the QoS flow ID, the security protection algorithm, and the session protection mechanism to the UE.

The session protection mechanism may be carried in the QoS rule and sent to the UE.

In addition, the session protection mechanism is optional.
12. The UE determines a protection key.

The UE obtains the session ID, the QFI, the user plane security algorithm, the session protection mechanism, and K AN, and correspondingly generates the user plane protection key.

Specifically, the UE calculates, based on the received encryption algorithm, a key used for encryption protection, to obtain an air interface user plane encryption key; or the UE calculates, based on the received integrity protection algorithm, a key used for integrity protection, to obtain an air interface user plane integrity protection key. The air interface user plane encryption key and the air interface user plane integrity protection key may be collectively referred to as a second air interface user plane protection key.

In specific implementation, second air interface user plane protection key = KDF(K_AN, UP algorithm ID); or
second air interface user plane protection key = KDF(K_SMF, UP algorithm ID, flow ID); or
second air interface user plane protection key = KDF(K_SMF, UP algorithm ID, session ID); or
second air interface user plane protection key = KDF(K_SMF, UP algorithm ID, DRB ID).

K_AN is a key derived, after authentication succeeds, by the AMF based on a base key obtained after the authentication or a key derived again after the authentication, and the UE sends K AN to the UE. UP algorithm ID may be the ID of the encryption algorithm, or may be the ID of the integrity protection algorithm. DRB ID may be the identifier of the DRB allocated by the AN to this service. KDF is a key derivation function (Key Derivation Function, KDF), and includes but is not limited to the following password derivation functions: HMAC (for example, HMAC-SHA256 or HMAC-SHA1), NMAC, CMAC, OMAC, CBC-MAC, PMAC, UMAC, VMAC, and HASH algorithms, and the like.

It should be noted that for a step that is not described in detail in the embodiment in FIG. 13, reference may be made to related descriptions in the embodiment in FIG. 11. The embodiment in FIG. 13 is merely an example and should not be considered as a limitation on the present invention.

It should be noted that there may be the following implementations in the foregoing method procedure of this embodiment:
Possibility 1: In step 4, a session create procedure may alternatively be initiated by the AMF, in other words, the AMF sends the session request to the SMF. In this case, the user equipment identifier (UE ID), the user equipment security capability, the indicator, the DNN, the service ID, the UE service ID, or the like in the session request may be obtained by the AMF from the received attach request, and the attach request carries the foregoing information.
Possibility 2: The flow ID and the session ID may be generated before the SMF sends the policy request.

It can be learned that a difference between the embodiment in FIG. 13 and the embodiment in FIG. 11 lies in that the UE and the AN perform policy negotiation based on a granularity of a PDU session transport channel.

Through implementation of this embodiment of the present invention, based on a future 5G communication architecture, in a procedure related to session creation, the UE and the AN can complete policy negotiation based on a granularity of a PDU session transport channel, the PCF can determine the user plane protection mechanism based on a security requirement required on a user equipment side (including security requirements of different services) and a preset security requirement on a network side, and the UE and the AN can separately determine the security protection algorithm and the keys, so that security protection for user plane data is implemented.

To facilitate understanding of the solutions in the embodiments of the present invention, the following describes, based on UE-AN by using an example, some operation procedures in which the session-based key configuration method in FIG. 13 is applied and that are in an uplink transmission process and a downlink transmission process of user plane data. Specific descriptions are as follows:
(1) Uplink transmission process of user plane data in which the session-based key configuration method is applied
   On a UE side, UE determines a session ID based on the user data, and further determines a security protection mechanism (session protection mechanism) corresponding to the session ID, and obtains a security protection algorithm, including an encryption algorithm and an integrity protection algorithm. Therefore, the UE performs security protection on the user plane data based on the encryption algorithm and the integrity protection algorithm by using a corresponding protection key.
   On an AN side, an AN determines a QoS flow ID based on a DRB ID, further determines the session ID, and finally determines the security protection mechanism (session protection mechanism) corresponding to the session ID. After obtaining the user plane data uploaded by the UE, the AN may perform security protection on the user plane data based on the encryption algorithm and the integrity protection algorithm by using a corresponding key. Alternatively, an AN directly determines the session ID based on a DRB ID, determines the session ID based on a QFI in a protocol stack, or determines a QFI based on marking in a protocol stack.
(2) Downlink transmission process of user plane data in which the session-based key configuration method is applied

On an AN side, when an AN needs to perform downlink transmission on the user plane data, the AN determines a session ID based on a QFI, and then determines a security protection mechanism (session protection mechanism), and obtains a security protection algorithm, including an encryption algorithm and an integrity protection algorithm. The AN performs security protection on the user plane data based on the encryption algorithm and the integrity protection algorithm by using a corresponding key. Alternatively, an AN directly determines a session ID based on a DRB ID, or determines a security protection mechanism (session protection mechanism) based on a session ID in a protocol stack.

On a UE side, UE determines the QoS flow ID based on the DRB ID, further determines the session ID, and finally determines the security protection mechanism (session protection mechanism) corresponding to the session ID, and obtains the security protection algorithm, including the encryption algorithm and the integrity protection algorithm. The UE may perform security protection on the user plane data based on the encryption algorithm and the integrity protection algorithm by using a corresponding key.

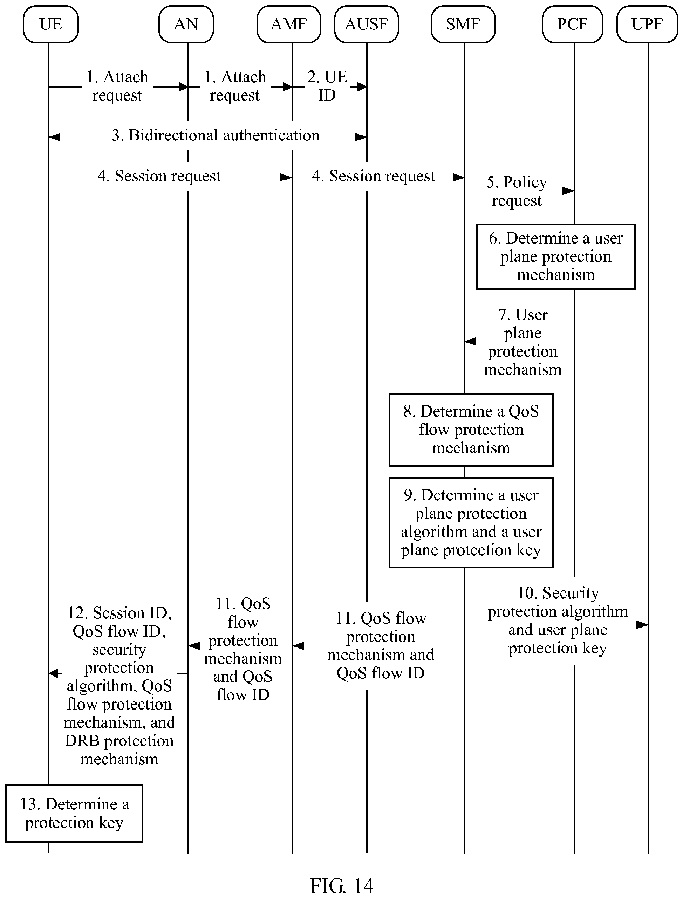

A flow-based key configuration method provided in an embodiment of the present invention is described below based on UE-CN from a granularity-dependent perspective. As shown in FIG. 14, the key configuration method provided in this embodiment of the present invention includes the following steps.
1-3. In a network attach process, UE sends an attach request to an AUSF by using an AN and an AMF.
   The AUSF performs authentication with the UE based on a UE ID, and determines that the UE is an authorized user.
4. The UE sends a session request to an SMF by using the AMF, and correspondingly, the SMF receives the session request.
   The session request is used to request to create a session between the UE and the SMF. For example, if a session is to be created by using a session create protocol, the session request is session create request signaling.
5. The SMF sends a policy request to a PCF.
   For details, refer to the descriptions of step 5 in the embodiment in FIG. 11. Details are not described herein again.
6. The PCF determines a user plane protection mechanism.
   For details, refer to the descriptions of step 6 in the embodiment in FIG. 11. Details are not described herein again.
7. The PCF sends the user plane protection mechanism (SDFSP) to the SMF, and correspondingly, the SMF obtains the user plane protection mechanism (SDFSP).
   For details, refer to the descriptions of step 7 in the embodiment in FIG. 11. Details are not described herein again.
8. The SMF determines a QoS flow protection mechanism (QFISP) based on the user plane protection mechanism (SDFSP).
   For details, refer to the descriptions of step 8 in the embodiment in FIG. 11. Details are not described herein again.
9. The SMF determines a security protection algorithm and a user plane protection key.

In a specific embodiment, if the QFISP is whether to perform encryption/whether to perform integrity protection, and no security protection algorithm is directly specified in the QFISP, the SMF determines the security protection algorithm based on a UE security capability, an algorithm priority list supported by a UPF, and the QFISP. The algorithm priority list supported by the UPF may be preset on the SMF, or may be preset on the UPF, and the SMF obtains the algorithm priority list supported by the UPF from the UPF. For example, when the user plane protection mechanism is "encryption required + integrity protection required", the SMF determines, based on the UE security capability, the algorithm priority list supported by the UPF, and an algorithm supported by the UE, that an encryption algorithm is AES and an integrity protection algorithm is AES. If no encryption is required, an encryption algorithm is null. If no integrity protection is required, an integrity protection algorithm is null.

In another specific embodiment, if the QFISP is whether to perform encryption/whether to perform integrity protection, and a security protection algorithm is directly specified in the QFISP, including that an encryption algorithm and an integrity protection algorithm are specified, the SMF may directly obtain the security protection algorithm from the QFISP. For example, in step 6, after determining the user plane protection mechanism, the PCF may obtain an algorithm priority list supported by a UPF. The algorithm priority list supported by the UPF may be preset on the AMF, or may be preset on the UPF, and the AMF obtains the algorithm priority list supported by the UPF from the UPF. The PCF determines an air interface protection algorithm based on a UE security capability, the algorithm priority list supported by the UPF, and the QFISP. For example, in QFISP of "encryption required + integrity protection required", the PCF further determines that an encryption algorithm is AES and an integrity protection algorithm is AES, and adds the security protection algorithm to the QFISP. In this case, because the encryption algorithm and the integrity protection algorithm are directly specified in the user plane protection mechanism (QFISP), the SMF directly determines the encryption algorithm and the integrity protection algorithm.

In this embodiment of the present invention, the SMF may generate the user plane protection key based on the security protection algorithm. Specifically, the SMF calculates, based on the determined encryption algorithm, a key used for encryption protection, to obtain an air interface user plane encryption key; or the SMF calculates, based on the determined integrity protection algorithm, a key used for integrity protection, to obtain an air interface user plane integrity protection key. The air interface user plane encryption key and the air interface user plane integrity protection key may be collectively referred to as a first air interface user plane protection key.

In specific implementation, first air interface user plane protection key = KDF(K_SMF, UP algorithm ID); or
first air interface user plane protection key = KDF(K_SMF, UP algorithm ID, flow ID); or
second air interface user plane protection key = KDF(K_SMF, UP algorithm ID, DRB ID); or
first air interface user plane protection key = KDF(K_SMF, UP algorithm ID, session ID).

K_SMF is a base station key derived, after authentication succeeds, by the AMF based on a base key obtained after the authentication or a key derived again after the authentication, and the AMF sends K_SMF to the SMF. Alternatively, K_SMF is a base station key derived, after authentication succeeds, by the AUSF based on a base key obtained after the authentication or a key derived again after the authentication, and the AUSF sends K_SMF to the SMF. UP algorithm ID may be an ID of the encryption algorithm, or may be an ID of the integrity protection algorithm. The ID of the encryption algorithm is used to indicate the corresponding encryption algorithm, and the ID of the integrity protection algorithm is used to indicate the corresponding integrity protection algorithm.
10. The SMF sends the security protection algorithm or the user plane protection key to the UPF. Correspondingly, the UPF receives the security protection algorithm or the user plane protection key.

In a possible embodiment, if the UPF receives the user plane protection key, the UPF uses the user plane protection key as a user plane protection key of the UPF.

In a possible embodiment, if the UPF receives only the security protection algorithm and does not receive the user plane protection key, the UPF may calculate the user plane protection key based on the security protection algorithm and K_SMF (refer to the foregoing related descriptions). The user plane protection key is a user plane protection key of the UPF. K_SMF is a key derived, after authentication succeeds, by the AMF based on a key obtained after the authentication or a key derived again after the authentication. Specifically, the AMF sends K_SMF to the UPF. Alternatively, K SMF is a key derived, after authentication succeeds, by the AUSF based on a key obtained after the authentication or a key derived again after the authentication, and the AUSF sends K SMF to the UPF.
11. The SMF sends a session ID, a QoS flow ID, the security protection algorithm, and the QoS flow protection mechanism (QFISP) to the AN by using the AMF.

The QFISP may be carried in a QoS rule and sent to the UE.

In addition, the QoS flow protection mechanism is optional.
12. The AN sends the session ID, the QoS flow ID, the security protection algorithm, and the QoS flow protection mechanism (QFISP) to the UE.
13. The UE determines a user plane protection key.

For details, refer to the descriptions of step 12 in the embodiment in FIG. 11. Details are not described herein again.

It should be noted that there may be the following implementations in the foregoing method procedure of this embodiment:
Possibility 1: In step 4, a session create procedure may alternatively be initiated by the AMF, in other words, the AMF sends the session request to the SMF. In this case, the user equipment identifier (UE ID), the user equipment security capability, an indicator, a DNN, a service ID, a UE service ID, or the like in the session request may be obtained by the AMF from the received attach request, and the attach request carries the foregoing information.
Possibility 2: In a possible embodiment, content in step 7 and step 8 may be replaced by the following: The PCF directly determines a QoS flow protection mechanism, and sends the QoS flow protection mechanism to the SMF.
Possibility 3: The flow ID and the session ID may be generated before the SMF sends the policy request.
Possibility 4: If the QFISP includes a specific security protection algorithm, the SMF may also send the QFISP to the UPF, and the UPF obtains the security protection algorithm from the QFISP.
Possibility 5: If the QFISP includes no security protection algorithm, security protection may be implemented in step 9 to step 13 in the following manner:
   (Replace step 9) The SMF calculates first K_UP, where K_UP = KDF(K_SMF, session ID), or K_UP = KDF(K_SMF, QoS flow ID).
   (Replace step 10) The SMF sends a session ID, a QFI, and the first K_UP to a UPF.
   (Replace step 11) The SMF sends the session ID, the QFI, and the QFISP to the AN by using the AMF.
   (Replace step 12) The AN sends the session ID, the QFI, and the QFISP to the UE.
   (Replace step 13) The UE generates second K_UP based on K_SMF. K_SMF is a key derived, after authentication succeeds, by the UE based on a key obtained after the authentication or a key derived again after the authentication.
   (Add step 14) The UPF and the UE then negotiate about a security protection algorithm, and then generate a user plane protection key of the UPF and a user plane protection key of the UE based on the first K_UP and the second K_UP respectively.

It should be further noted that for a part that is not described in detail in the embodiment in FIG. 14, reference may be made to related descriptions in the embodiment in FIG. 11. The embodiment in FIG. 14 is merely an example, and should not be considered as a limitation on the present invention.

It can be learned that a main difference between the embodiment in FIG. 14 and the embodiment in FIG. 11 lies in that the UE and a CN perform policy negotiation based on a granularity of a flow transport channel, and the AN does not need to perform security setting in this process.

Through implementation of this embodiment of the present invention, based on a future 5G communication architecture, in the session create procedure, the UE and the CN can complete policy negotiation based on a granularity of a flow transport channel, the PCF can determine the user plane protection mechanism, and then the UE and the CN can separately determine the user plane protection keys, so that security protection for user plane data is implemented. Through implementation of this embodiment of the present invention, network security protection between the UE and the core network can be implemented, so that a disadvantage of a hop-by-hop segment-based protection manner is avoided, and security of user plane data transmission is improved.

To facilitate understanding of the solutions in the embodiments of the present invention, the following describes, based on UE-CN by using an example, some operation procedures in which the flow-based key configuration method in FIG. 14 is applied and that are in an uplink transmission process and a downlink transmission process of user plane data. Specific descriptions are as follows:
(1) Uplink transmission process of user plane data in which the flow-based key configuration method is applied
   On a UE side, UE determines a session ID based on the user data, further determines a QFI, and then determines a corresponding security protection mechanism (QFISP), and obtains a security protection algorithm, including an encryption algorithm and an integrity protection algorithm. Therefore, the UE performs security protection on the user plane data based on the encryption algorithm and the integrity protection algorithm by using a corresponding protection key.
   On a UPF side, a UPF determines, based on the QoS flow ID, the security protection mechanism (QFISP) corresponding to the QFI, and then obtains the security protection algorithm, including the encryption algorithm and the integrity protection algorithm. After obtaining the user plane data uploaded by the UE, the UPF may perform security protection on the user plane data based on the encryption algorithm and the integrity protection algorithm by using a corresponding key.
(2) Downlink transmission process of user plane data in which the flow-based key configuration method is applied

On a UPF side, when downlink transmission needs to be performed on the user plane data, according to the method procedure shown in FIG. 14, a UPF determines a security protection mechanism (QFISP) based on a QFI, and obtains a security protection algorithm, including an encryption algorithm and an integrity protection algorithm. The UPF performs security protection on the user plane data based on the encryption algorithm and the integrity protection algorithm by using a corresponding key.

On a UE side, UE determines the QoS flow ID based on a DRB ID, and finally determines the security protection mechanism corresponding to the QFI, and obtains the security protection algorithm, including the encryption algorithm and the integrity protection algorithm. The UE may perform security protection on the user plane data based on the encryption algorithm and the integrity protection algorithm by using a corresponding key.

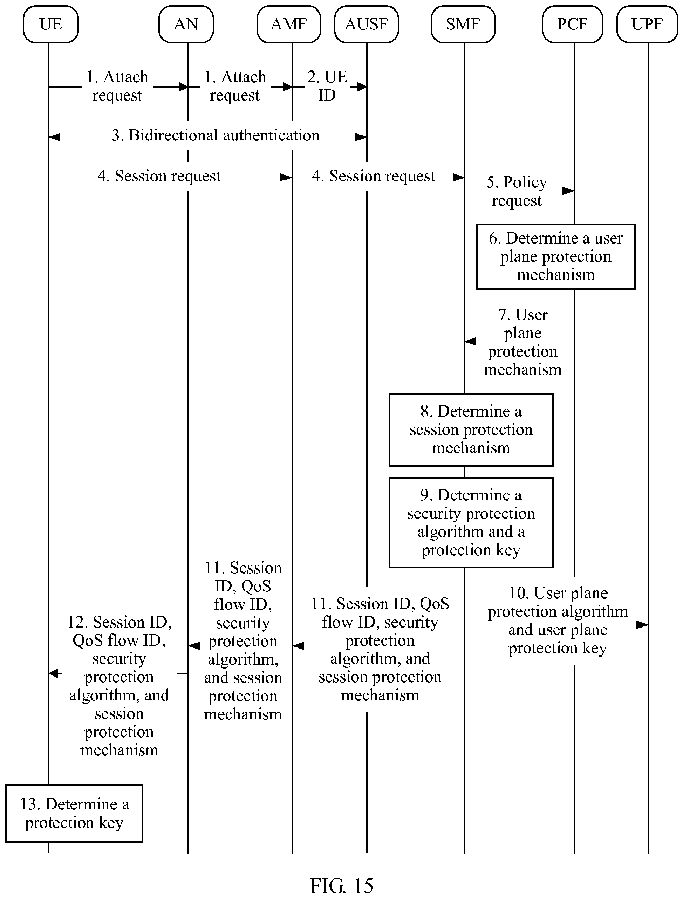

A session-based key configuration method provided in an embodiment of the present invention is described below based on UE-CN from a granularity-dependent perspective. As shown in FIG. 15, the key configuration method provided in this embodiment of the present invention includes the following steps.
1-3. In a network attach process, UE sends an attach request to an AUSF by using an AN and an AMF.
   The AUSF performs authentication with the UE based on a UE ID, and determines that the UE is an authorized user.
   In this embodiment of the present invention, the attach request includes at least the user equipment identifier (UE ID). In addition, optionally, the attach request may further include a service ID, a UE service ID, or a DNN. Optionally, the attach request may further include security requirement indication information (indicator).
4. The UE sends a session request to an SMF by using the AMF, and correspondingly, the SMF receives the session request.
5. The SMF sends a policy request to a PCF.
6. The PCF determines a user plane protection mechanism.
7. The PCF sends the user plane protection mechanism (SDFSP) to the SMF, and correspondingly, the SMF obtains the user plane protection mechanism (SDFSP).
8. The SMF determines a session protection mechanism.
9. The SMF determines a security protection algorithm and a user plane protection key.

In a specific embodiment, if the session protection mechanism is whether to perform encryption/whether to perform integrity protection, and no security protection algorithm is directly specified in the session protection mechanism, the SMF determines the security protection algorithm based on a UE security capability, an algorithm priority list supported by a UPF, and the session protection mechanism. The algorithm priority list supported by the UPF may be preset on the SMF, or may be preset on the UPF, and the SMF obtains the algorithm priority list supported by the UPF from the UPF. For example, when the user plane protection mechanism is "encryption required + integrity protection required", the SMF determines, based on the UE security capability, the algorithm priority list supported by the UPF, and an algorithm supported by the UE, that an encryption algorithm is AES and an integrity protection algorithm is AES. If no encryption is required, an encryption algorithm is null. If no integrity protection is required, an integrity protection algorithm is null.

In another specific embodiment, if the session protection mechanism is whether to perform encryption/whether to perform integrity protection, and a security protection algorithm is directly specified in the session protection mechanism, including that an encryption algorithm and an integrity protection algorithm are specified, the SMF may directly obtain the security protection algorithm from the session protection mechanism.

In this embodiment of the present invention, the SMF may generate the user plane protection key based on the security protection algorithm. Specifically, the SMF calculates, based on the determined encryption algorithm, a key used for encryption protection, to obtain an air interface user plane encryption key; or the SMF calculates, based on the determined integrity protection algorithm, a key used for integrity protection, to obtain an air interface user plane integrity protection key. The air interface user plane encryption key and the air interface user plane integrity protection key may be collectively referred to as a first air interface user plane protection key.

In specific implementation, first air interface user plane protection key = KDF(K_SMF, UP algorithm ID); or
first air interface user plane protection key = KDF(K_SMF, UP algorithm ID, flow ID); or
second air interface user plane protection key = KDF(K_SMF, UP algorithm ID, DRB ID); or
first air interface user plane protection key = KDF(K_SMF, UP algorithm ID, session ID).

K_SMF is a base station key derived, after authentication succeeds, by the AMF based on a base key obtained after the authentication or a key derived again after the authentication, and the AMF sends K_SMF to the SMF. Alternatively, K_SMF is a base station key derived, after authentication succeeds, by the AUSF based on a base key obtained after the authentication or a key derived again after the authentication, and the AUSF sends K_SMF to the SMF. UP algorithm ID may be an ID of the encryption algorithm, or may be an ID of the integrity protection algorithm. The ID of the encryption algorithm is used to indicate the corresponding encryption algorithm, and the ID of the integrity protection algorithm is used to indicate the corresponding integrity protection algorithm.
10. The SMF sends the user plane protection key or the security protection algorithm to the UPF, and correspondingly, the UPF receives the user plane protection key or the security protection algorithm.
11. The SMF sends a session ID, a QoS flow ID, the security protection algorithm, the QFISP, and the session protection mechanism to the AN by using the AMF.
12. The AN sends the session ID, the QoS flow ID, the security protection algorithm, the QFISP, and the session protection mechanism to the UE.
13. The UE determines a user plane protection key.

It should be noted that for a part that is not described in detail in this embodiment, reference may be made to related descriptions in the embodiment in FIG. 13.

It should be further noted that there may be the following implementations in the foregoing method procedure of this embodiment:
Possibility 1: In step 4, a session create procedure may alternatively be initiated by the AMF, in other words, the AMF sends the session request to the SMF. In this case, the user equipment identifier (UE ID), the user equipment security capability, the indicator, the DNN, the service ID, the UE service ID, or the like in the session request may be obtained by the AMF from the received attach request, and the attach request carries the foregoing information.
Possibility 2: In a possible embodiment, content in step 7 and step 8 may be replaced by the following: The PCF directly determines a session protection mechanism, and sends the session protection mechanism to the SMF.
Possibility 3: The flow ID and the session ID may be generated before the SMF sends the policy request.
Possibility 4: If the session protection mechanism includes a specific security protection algorithm, the SMF may also send the session protection mechanism to the UPF, and the UPF obtains the security protection algorithm from the session protection mechanism.
Possibility 5: If the QFISP includes no security protection algorithm, security protection may be implemented in step 9 to step 13 in the following manner:
   (Replace step 9) The SMF calculates first K_UP, where K_UP = KDF(K_SMF, session ID), or K_UP = KDF(K_SMF, QoS flow ID).
   (Replace step 10) The SMF sends a session ID, a QFI, and the first K_UP to a UPF.
   (Replace step 11) The SMF sends the session ID, the QFI, the session protection mechanism, and the QFISP to the AN by using the AMF.
   (Replace step 12) The AN sends the session ID, the QFI, the session protection mechanism, and the QFISP to the UE.
   (Replace step 13) The UE generates second K_UP based on K_SMF. K_SMF is a key derived, after authentication succeeds, by the UE based on a key obtained after the authentication or a key derived again after the authentication.
   (Add step 14) The UPF and the UE then negotiate about a security protection algorithm, and then generate a user plane protection key of the UPF and a user plane protection key of the UE based on the first K_UP and the second K_UP respectively.

It can be learned that a main difference between the embodiment in FIG. 15 and the embodiment in FIG. 11 lies in that the UE and a CN perform policy negotiation based on a granularity of a session transport channel, and the AN does not need to perform security setting in this process.

Through implementation of this embodiment of the present invention, based on a future 5G communication architecture, in the session create procedure, the UE and the CN can complete policy negotiation based on a granularity of a session transport channel, the PCF can determine the user plane protection mechanism, and then the UE and the CN can separately determine the user plane protection keys, so that security protection for user plane data is implemented. Through implementation of this embodiment of the present invention, network security protection between the UE and the core network can be implemented, so that a disadvantage of a hop-by-hop segment-based protection manner is avoided, and security of user plane data transmission is improved.

To facilitate understanding of the solutions in the embodiments of the present invention, the following describes, based on UE-CN by using an example, some operation procedures in which the session-based key configuration method in FIG. 15 is applied and that are in an uplink transmission process and a downlink transmission process of user plane data. Specific descriptions are as follows:
(1) Uplink transmission process of user plane data in which the session-based key configuration method is applied
   On a UE side, when uplink transmission needs to be performed on the user plane data, UE determines a session ID based on the user data, and further determines a security protection mechanism (session protection mechanism) corresponding to the session ID, and obtains a security protection algorithm, including an encryption algorithm and an integrity protection algorithm. Therefore, the UE performs security protection on the user plane data based on the encryption algorithm and the integrity protection algorithm by using a corresponding protection key.
   On a UPF side, a UPF determines the session ID based on a QFI, and finally determines the security protection mechanism (session protection mechanism) corresponding to the session ID, and obtains the security protection algorithm, including the encryption algorithm and the integrity protection algorithm. After obtaining the user plane data uploaded by the UE, the UPF may perform security protection on the user plane data based on the encryption algorithm and the integrity protection algorithm by using a corresponding key.
(2) Downlink transmission process of user plane data in which the session-based key configuration method is applied

On a UPF side, when downlink transmission needs to be performed on the user plane data, a UPF determines a security protection mechanism (session protection mechanism) based on a session ID, and obtains a security protection algorithm, including an encryption algorithm and an integrity protection algorithm. The UPF performs security protection on the user plane data based on the encryption algorithm and the integrity protection algorithm by using a corresponding key.

On a UE side, UE determines a QoS flow ID based on a DRB ID, further determines the session ID, and finally determines the security protection mechanism (session protection mechanism) corresponding to the session ID, and obtains the security protection algorithm, including the encryption algorithm and the integrity protection algorithm. The UE may perform security protection on the user plane data based on the encryption algorithm and the integrity protection algorithm by using a corresponding key. Optionally, the UE may directly determine the session ID based on the DRB ID, or optionally, the UE determines the session ID based on a data format.

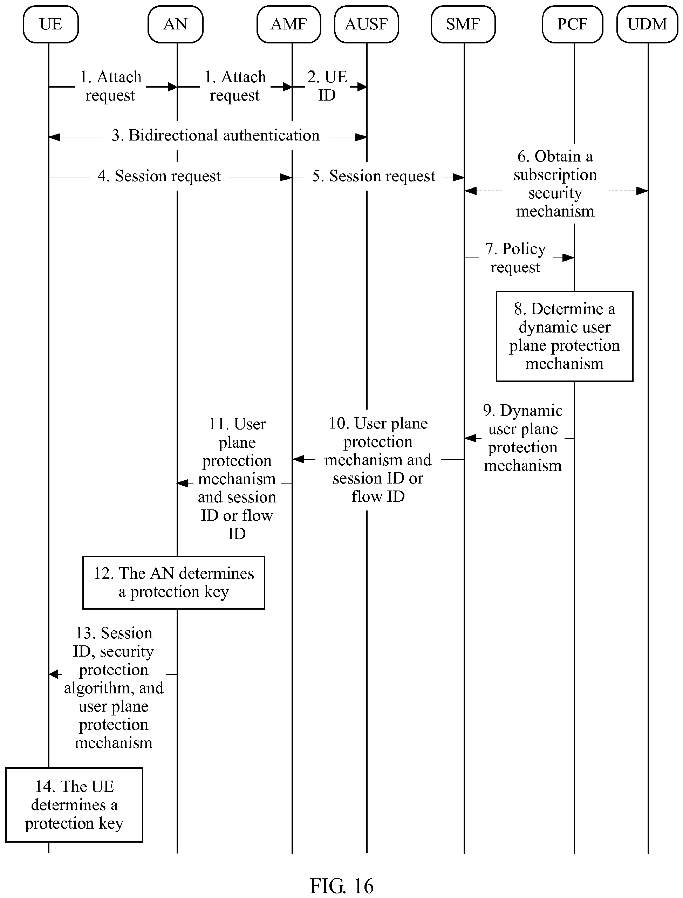

The following provides a key configuration method based on UE-AN. As shown in FIG. 16, the key configuration method provided in this embodiment of the present invention includes the following steps.
1-3. In a network attach process, UE sends an attach request to an AUSF by using an AN and an AMF.
   The AUSF performs authentication with the UE based on a UE ID, and determines that the UE is an authorized user.
   In this embodiment of the present invention, the attach request includes at least the user equipment identifier (UE ID).
4. The UE sends a session request to the AMF, where the session request includes a session ID, a request type, and a DNN. There are two possibilities for the request type parameter. The request type is used to instruct to use an existing PDU session (for example, represented as "existing PDU session"), or instruct to initiate an initial session (for example, represented as "Initial request"). In addition, optionally, the session request may further include at least one of a service ID, a UE service ID, and an APP ID. Optionally, the session request may further include security requirement indication information (indicator).
5. The AMF sends a UE ID, the session ID, the request type, and the DNN to an SMF. The UE ID may be a UE ID obtained by the AMF in the foregoing authentication, and the AMF determines the UE ID according to a transmission protocol between the UE and the AMF, in other words, determines, based on an AMF UE N2-AP ID of signaling between the UE and the AMF, to find the UE ID. Alternatively, the session request sent by the UE may carry the UE ID, or the session request sent by the UE may carry a temporary ID, and the AMF uses the temporary ID as the UE ID.
6. If the request type is used to instruct to use an existing PDU session (for example, "existing PDU session"), the SMF determines, based on the session ID, an existing user plane protection mechanism corresponding to the session ID, and uses the user plane protection mechanism corresponding to the session ID as a user plane protection mechanism of a current session.
   If the request type is used to instruct to create a PDU session (for example, "Initial request"), the SMF continues to perform an operation.
   If the SMF does not store registration information related to the DNN, the SMF sends the UE ID and the DNN to a UDM, and receives subscription security protection mechanism from the UDM. The UDN may not store the subscription security protection mechanism corresponding to the UE ID and the DNN. In this case, the UDM uses a default security protection mechanism stored in the UDM as a subscription security protection mechanism and sends the subscription security protection mechanism to the SMF, or the UDM sends an empty security protection mechanism identifier to the SMF. The default security protection mechanism stored in the UDM may be using only encryption protection, only integrity protection, or both encryption protection and integrity protection. Alternatively, the default user plane protection mechanism is used to instruct to use which security algorithm for protection, for example, use only an AES algorithm for encryption protection, use only a Snow 3G security algorithm for integrity protection, or use an AES algorithm for encryption and use a Snow 3G security algorithm for integrity protection.
7. The SMF determines whether a dynamic policy control mechanism is deployed.
   If no dynamic policy control mechanism is deployed, the SMF uses the subscription security protection mechanism as a security protection mechanism of the current session, and then performs step 10. The SMF may not store or obtain the subscription security protection mechanism. In this case, the SMF uses the default user plane protection mechanism, and then performs step 10. The SMF may not store or obtain the subscription security protection mechanism. In this case, the SMF uses a user plane protection mechanism indicated by the indicator, and then performs step 10. The default user plane protection mechanism may be using only encryption protection, only integrity protection, or both encryption protection and integrity protection. Alternatively, the default user plane protection mechanism is used to instruct to use which security algorithm for protection, for example, use only an AES algorithm for encryption protection, use only a Snow 3G security algorithm for integrity protection, or use an AES algorithm for encryption and use a Snow 3G security algorithm for integrity protection.
   If a dynamic policy control mechanism is deployed in a network, the SMF sends the UE ID and the DNN to a PCF. In addition, the SMF may also receive at least one of the service ID, the UE service ID, and the APP ID from the UE or the AMF. In this case, the SMF sends the UE ID and the DNN to the PCF, and may also send the at least one of the service ID, the UE service ID, and the APP ID to the PCF.
8. The PCF determines a dynamic user plane protection mechanism. A method for determining the dynamic user plane protection mechanism by the PCF includes the following: The PCF determines, based on at least one of the DNN, the service ID, the UE service ID, and the APP ID, whether a corresponding protection mechanism is stored. If a corresponding protection mechanism is stored, the PCF uses the corresponding protection mechanism as the dynamic user plane protection mechanism. The protection mechanism stored in the PCF is previously sent by a server corresponding to the DNN, the service ID, the UE service ID, or an APP to the PCF. Otherwise, the PCF sends a request to a server corresponding to the DNN, the service ID, the UE service ID, or an APP, where the request includes the UE ID; and receives a security protection requirement from the server. The PCF uses the security protection requirement as the dynamic user plane protection mechanism. The security protection requirement may be using only encryption protection, only integrity protection, or both encryption protection and integrity protection, or further specifying security algorithms that are to be used as an encryption protection algorithm and an integrity protection algorithm. If the PCF may not store the security protection requirement or obtain the security protection requirement from the server, the PCF uses a default security protection mechanism stored in the PCF. The default security protection mechanism may be using only encryption protection, only integrity protection, or both encryption protection and integrity protection. Alternatively, the default user plane protection mechanism is used to instruct to use which security algorithm for protection, for example, use only an AES algorithm for encryption protection, use only a Snow 3G security algorithm for integrity protection, or use an AES algorithm for encryption and use a Snow 3G security algorithm for integrity protection.
9. The PCF sends the dynamic user plane protection mechanism to the SMF, and correspondingly, the SMF obtains the dynamic user plane protection mechanism and uses the dynamic user plane protection mechanism as a final user plane protection mechanism.
10. The SMF sends the user plane protection mechanism to the AMF, and also sends the session ID or a flow ID.
11. The AMF sends the user plane protection mechanism to the AN, and also sends the session ID or the flow ID; or the SMF may directly send the user plane protection mechanism to the AN, and also sends the session ID or the flow ID.
12. The AN determines a security protection algorithm and a user plane protection key.

In a specific embodiment, if the user plane protection mechanism is whether to perform encryption/whether to perform integrity protection, and no security protection algorithm is directly specified in the user plane protection mechanism, the AN determines the security protection algorithm based on a UE security capability, an algorithm priority list supported by the AN, and the user plane protection mechanism. For example, if encryption is required but no integrity protection is required in the user plane protection mechanism, AES encryption/ZUC encryption is supported based on the UE security capability, and the AN supports a case in which AES encryption has a first priority, the AN selects AES as an encryption algorithm and a null algorithm as an integrity protection algorithm.

In another specific embodiment, if the user plane protection mechanism is whether to perform encryption/whether to perform integrity protection, and a security protection algorithm is directly specified in the user plane protection mechanism, including that an encryption algorithm and an integrity protection algorithm are specified, the AN may directly obtain the security protection algorithm from the user plane protection mechanism.

In this embodiment of the present invention, the AN may generate the user plane protection key based on the security protection algorithm. Specifically, the AN calculates, based on the determined encryption algorithm, a key used for encryption protection, to obtain an air interface user plane encryption key; or the AN calculates, based on the determined integrity protection algorithm, a key used for integrity protection, to obtain an air interface user plane integrity protection key. The air interface user plane encryption key and the air interface user plane integrity protection key may be collectively referred to as a first air interface user plane protection key.

In specific implementation, first air interface user plane protection key = KDF(K AN, UP algorithm ID); or
first air interface user plane protection key = KDF(K AN, UP algorithm ID, flow ID); or
KDF(K_AN, UP algorithm ID, session ID); or
KDF(K_AN, UP algorithm ID, DRB ID); or
KDF(K_AN, UP algorithm ID, slice ID).

K AN is a base station key derived, after authentication succeeds, by the AMF or an SEAF based on a base key obtained after the authentication or a key derived again after the authentication, and the AMF or the SEAF sends K_AN to the AN. UP algorithm ID may be an ID of the encryption algorithm, or may be an ID of the integrity protection algorithm. DRB ID may be an identifier of a DRB allocated by the AN to this service. KDF is a key derivation function (Key Derivation Function, KDF), and includes but is not limited to the following password derivation functions: HMAC (for example, HMAC-SHA256 or HMAC-SHA1), NMAC, CMAC, OMAC, CBC-MAC, PMAC, UMAC, VMAC, and HASH algorithms, and the like.
13. The AN sends the session ID, the flow ID, the security protection algorithm, and the user plane protection mechanism to the UE.

The user plane protection mechanism may be carried in a QoS rule and sent to the UE.

In addition, the user plane protection mechanism is optional.
14. The UE determines a protection key.

The UE obtains the session ID, the user plane security algorithm, the user plane protection mechanism, and K AN, and correspondingly generates the user plane protection key.

Specifically, the UE calculates, based on the received encryption algorithm, a key used for encryption protection, to obtain an air interface user plane encryption key; or the UE calculates, based on the received integrity protection algorithm, a key used for integrity protection, to obtain an air interface user plane integrity protection key. The air interface user plane encryption key and the air interface user plane integrity protection key may be collectively referred to as a second air interface user plane protection key.

In specific implementation, second air interface user plane protection key = KDF(K_AN, UP algorithm ID); or
second air interface user plane protection key = KDF(K_AN, UP algorithm ID, flow ID); or
second air interface user plane protection key = KDF(K_AN, UP algorithm ID, session ID); or
second air interface user plane protection key = KDF(K_AN, UP algorithm ID, DRB ID); or
second air interface user plane protection key = KDF(K_AN, UP algorithm ID, slice ID).

K_AN is a key derived, after authentication succeeds, by the UE based on a base key obtained after the authentication or a key derived again after the authentication. UP algorithm ID may be the ID of the encryption algorithm, or may be the ID of the integrity protection algorithm. DRB ID may be the identifier of the DRB allocated by the AN to this service. KDF is a key derivation function (Key Derivation Function, KDF), and includes but is not limited to the following password derivation functions: HMAC (for example, HMAC-SHA256 or HMAC-SHA1), NMAC, CMAC, OMAC, CBC-MAC, PMAC, UMAC, VMAC, and HASH algorithms, and the like.

It should be noted that there may be the following implementations in the foregoing method procedure of this embodiment:
Possibility 1: In step 4, a session create procedure may alternatively be initiated by the AMF, in other words, the AMF sends the session request to the SMF. In this case, the user equipment identifier (UE ID), the user equipment security capability, the indicator, the DNN, the service ID, the UE service ID, or the like in the session request may be obtained by the AMF from the received attach request, and the attach request carries the foregoing information.
Possibility 2: The flow ID and the session ID may be generated before the SMF sends the policy request.
Possibility 3: In step 6, optionally, the SMF does not use the request type to determine whether to use an old user plane security mechanism. The SMF needs to negotiate about a user plane security mechanism again for creation of each session.
Possibility 4: Step 1 to step 9 may be separately used as an embodiment in which a user plane security protection is determined. The user plane security mechanism may be used for security protection between the UE and the AN or security protection between the user UE and a CN in the future.
Possibility 5: Step 10 to step 13 may be separately used as an embodiment in which the UE and the AN creates a security channel.

Through implementation of this embodiment of the present invention, based on a future 5G communication architecture, in a procedure related to session creation, the UE and the AN can complete policy negotiation based on a granularity of a PDU session transport channel, the PCF can determine the user plane protection mechanism based on the security requirement required on the user equipment side (including security requirements of different services) and a preset security requirement on a network side, and the UE and the AN can separately determine the security protection algorithm and the keys, so that security protection for user plane data is implemented.

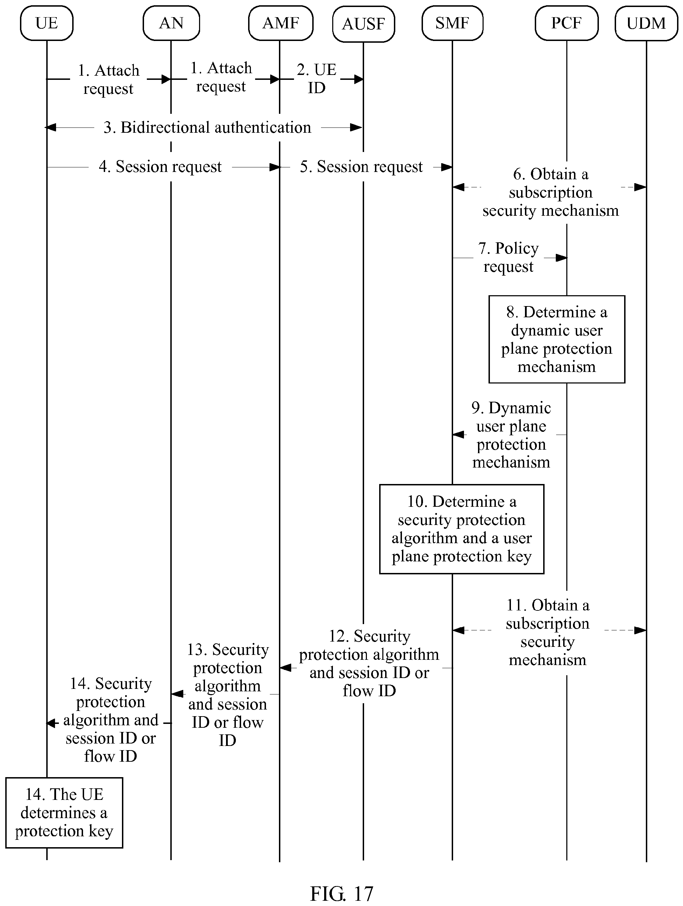

The following provides a key configuration method based on UE-CN. A difference between an embodiment of the present invention shown in FIG. 17 and the embodiment described in FIG. 16 lies in that a user plane security mechanism is finally used for security protection between UE and a UPF. The key configuration method provided in this embodiment of the present invention includes the following steps.

For step 1 to step 9, refer to FIG. 16.
10. The SMF obtains the user plane security mechanism, and determines a security protection algorithm and a user plane protection key.

In a specific embodiment, if the user plane protection mechanism includes only a description about whether to perform encryption/integrity protection, the SMF determines that the user plane protection mechanism between the UE and a CN is whether encryption is required and whether integrity protection is required. Then the SMF determines the security protection algorithm based on a received UE security capability and an algorithm priority list supported by the UPF. The algorithm priority list supported by the UPF may be preset on the SMF, or may be preset on the UPF, and the SMF obtains the algorithm priority list supported by the UPF from the UPF. For example, when the user plane protection mechanism is "encryption required + integrity protection required", the SMF determines, based on the UE security capability, the algorithm priority list supported by the UPF, and an algorithm supported by the UE, that an encryption algorithm is AES and an integrity protection algorithm is AES.

In another specific embodiment, a security protection algorithm is directly specified in the user plane protection mechanism, and the SMF may directly obtain the security protection algorithm from the user plane protection mechanism. After determining the user plane protection mechanism, the SMF may determine an air interface protection algorithm based on an algorithm priority list supported by the UPF, an algorithm supported by the UE, and a user equipment security capability. The algorithm priority list supported by the UPF may be preset on the SMF, or may be preset on the UPF, and the SMF obtains the algorithm priority list supported by the UPF from the UPF. For example, in a user plane protection mechanism of "encryption required + integrity protection required", the SMF further determines that an encryption algorithm is AES and an integrity protection algorithm is AES, and adds the security protection algorithm to the user plane protection mechanism. In this case, because the encryption algorithm and the integrity protection algorithm are directly specified in the user plane protection mechanism, after obtaining the user plane protection mechanism, the SMF may directly obtain the encryption algorithm and the integrity protection algorithm from the user plane protection mechanism.

In a possible embodiment, after determining the security protection algorithm, the SMF may further determine the user plane protection key. Details are as follows:
user plane protection key = KDF(K_SMF, UP algorithm ID); or
user plane protection key = KDF(K_SMF, UP algorithm ID, flow ID); or
user plane protection key = KDF(K_SMF, UP algorithm ID, session ID); or
user plane protection key = KDF(K_SMF, UP algorithm ID, DRB ID); or
user plane protection key = KDF(K_SMF, UP algorithm ID, slice ID).

K_SMF is a key derived, after authentication succeeds, by the AMF/an SEAF based on a key obtained after the authentication or a key derived again after the authentication. Specifically, the AMF/the SEAF sends K_SMF to the SMF. Alternatively, K_SMF is a key derived, after authentication succeeds, by the AUSF based on a key obtained after the authentication or a key derived again after the authentication. The AUSF sends K_SMF to the SMF. UP algorithm ID may be an ID of the encryption algorithm, or may be an ID of the integrity protection algorithm. Alternatively, a key of the user plane protection key may be calculated based on a key derived from K_SMF. For example, K_UP = KDF(K_SMF, session ID), and user plane protection key = KDF(K UP, UP algorithm ID).
11. The SMF sends the security protection algorithm or the user plane protection key to the UPF, and correspondingly, the UPF receives the security protection algorithm or the user plane protection key.

In a possible embodiment, if the UPF receives only the security protection algorithm and does not receive the user plane protection key, the UPF may calculate the user plane protection key based on the security protection algorithm and K_SMF (refer to the foregoing related descriptions). The user plane protection key is a user plane protection key of the UPF. K_SMF is a key derived, after authentication succeeds, by the AMF/the SEAF based on a key obtained after the authentication or a key derived again after the authentication. Specifically, the AMF/the SEAF sends K_SMF to the UPF by using the SMF. Alternatively, K_SMF is a key derived, after authentication succeeds, by the AUSF based on a key obtained after the authentication or a key derived again after the authentication, and the AUSF sends K_SMF to the UPF. The security protection algorithm may be a security protection algorithm determined by the UPF based on the algorithm priority list of the UPF and an algorithm list of the UE. Herein, the algorithm list of the UE may be sent by the SMF to the UPF.

In a possible embodiment, if the UPF receives the user plane protection key, the UPF uses the user plane protection key as a user plane protection key of the UPF.
12. The SMF sends the security protection algorithm and the user plane protection mechanism to the AMF, where the user plane protection mechanism is optional.

It should be noted that if the security protection algorithm is determined by the SMF based on the received UE security capability, the algorithm priority list supported by the UPF, and the like, the SMF sends the security protection algorithm to the AMF.

Optionally, that the SMF sends the security protection algorithm to the AMF is specifically that the SMF sends a session response to the AMF, where the session response carries the security protection algorithm.

It should be noted that if the security protection algorithm may be determined by the AMF based on the algorithm priority list supported by the UPF, the algorithm supported by the UE, the user equipment security capability, and the like, the SMF does not need to send the security protection algorithm to the AMF.
13. The AMF sends the security protection algorithm and the user plane protection mechanism to the AN, where the user plane protection mechanism is optional.
14. The AN sends the security protection algorithm and the user plane protection mechanism to the UE, where the user plane protection mechanism is optional.
15. The UE generates a user plane protection key based on the user plane security algorithm, the user plane protection mechanism, and K_SMF; or the UE generates a user plane protection key based on the user plane security algorithm and K SMF.

In a possible embodiment, after receiving the security protection algorithm, the UE may further determine the user plane protection key. The user plane protection key is a user plane protection key of the UE. Details are as follows:
user plane protection key = KDF(K_SMF, UP algorithm ID); or
user plane protection key = KDF(K_SMF, UP algorithm ID, flow ID); or
user plane protection key = KDF(K_SMF, UP algorithm ID, session ID); or
user plane protection key = KDF(K_SMF, UP algorithm ID, DRB ID); or
user plane protection key = KDF(K_SMF, UP algorithm ID, slice ID).

Alternatively, a user plane protection mechanism parameter is added to the foregoing derivation function input. K SMF is a key derived, after authentication succeeds, by the UE based on a key obtained after the authentication or a key derived again after the authentication. UP algorithm ID may be the ID of the encryption algorithm, or may be the ID of the integrity protection algorithm. Alternatively, a key of the user plane protection key may be calculated based on a key derived from K SMF. For example, K UP = KDF(K_SMF, session ID), and user plane protection key = KDF(K UP, UP algorithm ID).

It should be noted that there may be the following implementations in the foregoing method procedure of this embodiment:
Possibility 1: If the AMF does not need the indicator information in the process of determining the user plane protection mechanism, the UE may not send the indicator to a network side (or the attach request may not include the indicator).
Possibility 2: A sequence of the foregoing procedure steps is not limited in this embodiment. For example, step 8 and step 9 may be performed simultaneously, or step 8 may be performed before or after step 9.
Possibility 3: In step 4, a session create procedure may alternatively be initiated by the UE, in other words, the UE sends the session request to the SMF by using the AMF.
Possibility 4: If the user plane protection mechanism includes a specific security protection algorithm, the AMF may send the user plane protection mechanism to the UPF by using the SMF, and the UPF obtains the security protection algorithm from the user plane protection mechanism.
Possibility 5: If the user plane protection mechanism includes no security protection algorithm, security protection may be implemented in step 7 to step 12 in the following manner:
   (Replace step 7 and step 8) The SMF calculates first K_UP, where K_UP = KDF(K_SMF, session ID), or K_UP = KDF(K_SMF, QoS flow ID).
   (Replace step 9) The SMF sends a session ID, a QFI, and the user plane protection mechanism to the AMF.
   (Replace step 10) The AMF sends the session ID, the QFI, and the user plane protection mechanism to the AN.
   (Replace step 11) The AN sends the session ID, the QFI, and the user plane protection mechanism to the UE.
   (Replace step 12) The UE generates second K_UP based on K_SMF. K_SMF is a key derived, after authentication succeeds, by the UE based on a key obtained after the authentication or a key derived again after the authentication.
   (Add step 13) The UPF and the UE negotiate about a security protection algorithm based on the session ID, the QFI, and the user plane protection mechanism, and then generate a user plane protection key of the UPF and a user plane protection key of the UE based on the first K_UP and the second K UP respectively.
Possibility 6: In step 6, optionally, the SMF does not use the request type to determine whether to use an old user plane security mechanism. The SMF needs to negotiate about a user plane security mechanism again for creation of each session.

It should be further noted that for a part that is not described in detail in the embodiment in FIG. 17, reference may be made to related descriptions in the embodiment in FIG. 3. The embodiment in FIG. 17 is merely an example, and should not be considered as a limitation on the present invention.

It can be learned that a main difference between the embodiment in FIG. 17 and the embodiment in FIG. 3 lies in that in a UE-CN application scenario, the SMF determines the user plane protection mechanism based on a security requirement required on a user equipment side (including security requirements of different services) and a preset security requirement on a network side.

Through implementation of this embodiment of the present invention, based on a future 5G communication architecture, in a session create procedure, the UE and the CN can complete policy negotiation, the AMF can determine the user plane protection mechanism, and then the UE and the CN can separately determine the user plane protection keys, so that security protection for user plane data is implemented. Through implementation of this embodiment of the present invention, network security protection between the UE and the core network can be implemented, so that a disadvantage of a hop-by-hop segment-based protection manner is avoided, and security of user plane data transmission is improved.

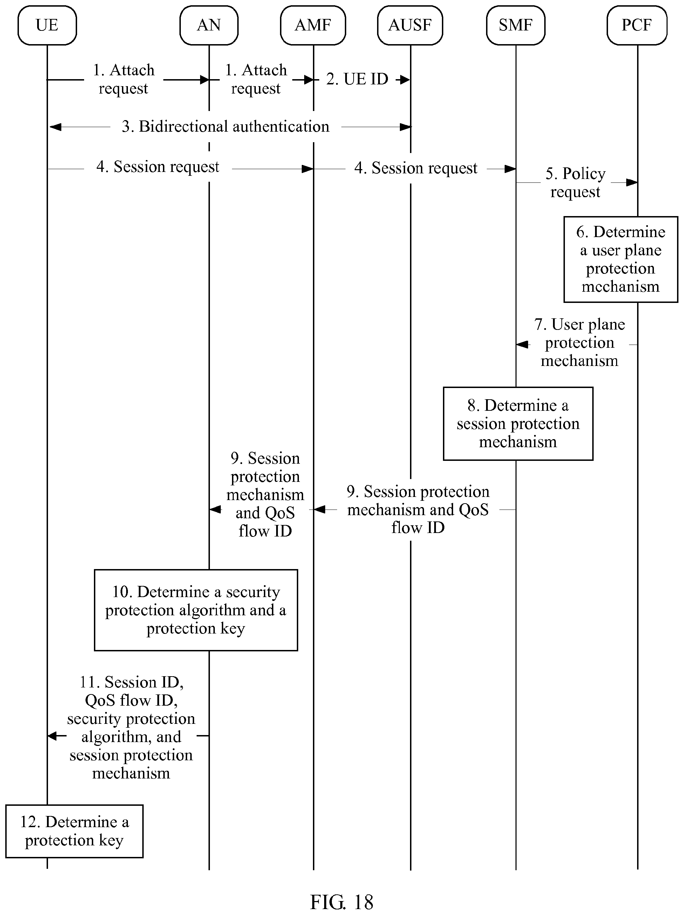

A session-based key configuration method provided in an embodiment of the present invention is described below based on UE-AN from a granularity-dependent perspective. As shown in FIG. 18, the key configuration method provided in this embodiment of the present invention includes the following steps.
1-3. In a network attach process, UE sends an attach request to an AUSF by using an AN and an AMF.
   The AUSF performs authentication with the UE based on a UE ID, and determines that the UE is an authorized user.
   In this embodiment of the present invention, the attach request includes at least the user equipment identifier (UE ID). In addition, optionally, the attach request may further include a service ID, a UE service ID, or a DNN. Optionally, the attach request may further include security requirement indication information (indicator).
4. The UE sends a session request to an SMF by using the AMF, and correspondingly, the SMF receives the session request.
5. The SMF sends a policy request to a PCF.
6. The PCF determines a user plane protection mechanism.
7. The PCF sends the user plane protection mechanism (SDFSP) to the SMF, and correspondingly, the SMF obtains the user plane protection mechanism (SDFSP).
8. The SMF determines a session protection mechanism.
   In this embodiment of the present invention, when user plane data needs to be transmitted by using a session transport channel, a DRB transport channel, or a QoS flow transport channel, a security protection mechanism in data transmission may be further implemented based on a session.
   Specifically, the SMF may determine the session protection mechanism based on SDFSP in different PCC rules; or the SMF directly receives the session protection mechanism from the PCF.
9. The SMF sends QFISP, the session protection mechanism, and a QoS flow ID to the AN by using the AMF.
   In a specific embodiment, the SMF directly sends a session ID, the session protection mechanism, and the QoS flow ID to the AN by using the AMF.
   In another specific embodiment, the SMF sends a QoS rule, a QoS profile, and the QoS flow ID to the AN by using the AMF. The QoS rule includes the session protection mechanism, and the QoS rule is used to provide a session protection mechanism corresponding to user plane data to the UE. The QoS profile includes the session protection mechanism, and the QoS profile is used to provide the session protection mechanism corresponding to the user plane data to the AN.
   Optionally, the SMF may further send the session ID to the AN by using the AMF.
10. The AN determines a security protection algorithm and a user plane protection key.

In a specific embodiment, if the session protection mechanism is whether to perform encryption/whether to perform integrity protection, and no security protection algorithm is directly specified in the session protection mechanism, the AN determines the security protection algorithm based on a UE security capability, an algorithm priority list supported by the AN, and the user plane protection mechanism. For example, if encryption is required but no integrity protection is required in the session protection mechanism, AES encryption/ZUC encryption is supported based on the UE security capability, and the AN supports a case in which AES encryption has a first priority, the AN selects AES as an encryption algorithm and a null algorithm as an integrity protection algorithm.

In another specific embodiment, if the session protection mechanism is whether to perform encryption/whether to perform integrity protection, and a security protection algorithm is directly specified in the session protection mechanism, including that an encryption algorithm and an integrity protection algorithm are specified, the AN may directly obtain the security protection algorithm from the session protection mechanism.

In this embodiment of the present invention, the AN may generate the user plane protection key based on the security protection algorithm. Specifically, the AN calculates, based on the determined encryption algorithm, a key used for encryption protection, to obtain an air interface user plane encryption key; or the AN calculates, based on the determined integrity protection algorithm, a key used for integrity protection, to obtain an air interface user plane integrity protection key. The air interface user plane encryption key and the air interface user plane integrity protection key may be collectively referred to as a first air interface user plane protection key.

In specific implementation, first air interface user plane protection key = KDF(K_AN, UP algorithm ID); or
first air interface user plane protection key = KDF(K_AN, UP algorithm ID, flow ID); or
KDF(K_AN, UP algorithm ID, session ID); or
KDF(K_AN, UP algorithm ID, DRB ID); or
KDF(K_AN, UP algorithm ID, slice ID).

K_AN is a base station key derived, after authentication succeeds, by the AMF based on a base key obtained after the authentication or a key derived again after the authentication, and the AMF sends K AN to the AN. UP algorithm ID may be an ID of the encryption algorithm, or may be an ID of the integrity protection algorithm. DRB ID may be an identifier of a DRB allocated by the AN to this service.

11. The AN sends the session ID, the QoS flow ID, the security protection algorithm, and the session protection mechanism to the UE.

The session protection mechanism may be carried in the QoS rule and sent to the UE.

In addition, the session protection mechanism is optional.
12. The UE determines a protection key.

The UE obtains the session ID, the QFI, the user plane security algorithm, the session protection mechanism, and K AN, and correspondingly generates the user plane protection key.

Specifically, the UE calculates, based on the received encryption algorithm, a key used for encryption protection, to obtain an air interface user plane encryption key; or the UE calculates, based on the received integrity protection algorithm, a key used for integrity protection, to obtain an air interface user plane integrity protection key. The air interface user plane encryption key and the air interface user plane integrity protection key may be collectively referred to as a second air interface user plane protection key.

In specific implementation, second air interface user plane protection key = KDF(K_AN, UP algorithm ID); or
second air interface user plane protection key = KDF(K_AN, UP algorithm ID, flow ID); or
second air interface user plane protection key = KDF(K_AN, UP algorithm ID, session ID); or
second air interface user plane protection key = KDF(K_AN, UP algorithm ID, DRB ID); or
second air interface user plane protection key = KDF(K_AN, UP algorithm ID, slice ID).

K_AN is a key derived, after authentication succeeds, by the UE based on a base key obtained after the authentication or a key derived again after the authentication. UP algorithm ID may be the ID of the encryption algorithm, or may be the ID of the integrity protection algorithm. DRB ID may be the identifier of the DRB allocated by the AN to this service. KDF is a key derivation function (Key Derivation Function, KDF), and includes but is not limited to the following password derivation functions: HMAC (for example, HMAC-SHA256 or HMAC-SHA1), NMAC, CMAC, OMAC, CBC-MAC, PMAC, UMAC, VMAC, and HASH algorithms, and the like.

It should be noted that for a step that is not described in detail in the embodiment in FIG. 18, reference may be made to related descriptions in the embodiment in FIG. 11. The embodiment in FIG. 18 is merely an example and should not be considered as a limitation on the present invention.

It should be noted that there may be the following implementations in the foregoing method procedure of this embodiment:
Possibility 1: In step 4, a session create procedure may be alternatively initiated by the AMF, in other words, the AMF sends the session request to the SMF. In this case, the user equipment identifier (UE ID), the user equipment security capability, the indicator, the DNN, the service ID, the UE service ID, or the like in the session request may be obtained by the AMF from the received attach request, and the attach request carries the foregoing information.
Possibility 2: The flow ID and the session ID may be generated before the SMF sends the policy request.

It can be learned that a difference between the embodiment in FIG. 18 and the embodiment in FIG. 11 lies in that the UE and the AN perform policy negotiation based on a granularity of a PDU session transport channel.

Through implementation of this embodiment of the present invention, based on a future 5G communication architecture, in a procedure related to session creation, the UE and the AN can complete policy negotiation based on a granularity of a PDU session transport channel, the PCF can determine the user plane protection mechanism based on the security requirement required on the user equipment side (including security requirements of different services) and a preset security requirement on a network side, and the UE and the AN can separately determine the security protection algorithm and the keys, so that security protection for user plane data is implemented.

To facilitate understanding of the solutions in the embodiments of the present invention, the following describes, based on UE-AN by using an example, some operation procedures in which the session-based key configuration method in FIG. 13 is applied and that are in an uplink transmission process and a downlink transmission process of user plane data. Specific descriptions are as follows:
(1) Uplink transmission process of user plane data in which the session-based key configuration method is applied
   On a UE side, UE determines a session ID based on the user data, and further determines a security protection mechanism (session protection mechanism) corresponding to the session ID, and obtains a security protection algorithm, including an encryption algorithm and an integrity protection algorithm. Therefore, the UE performs security protection on the user plane data based on the encryption algorithm and the integrity protection algorithm by using a corresponding protection key.
   On an AN side, an AN determines a QoS flow ID based on a DRB ID, further determines the session ID, and finally determines the security protection mechanism (session protection mechanism) corresponding to the session ID. After obtaining the user plane data uploaded by the UE, the AN may perform security protection on the user plane data based on the encryption algorithm and the integrity protection algorithm by using a corresponding key. Alternatively, an AN directly determines the session ID based on a DRB ID, determines the session ID based on a QFI in a protocol stack, or determines a QFI based on marking in a protocol stack.
(2) Downlink transmission process of user plane data in which the session-based key configuration method is applied

On an AN side, when an AN needs to perform downlink transmission on the user plane data, the AN determines a session ID based on a QFI, and then determines a security protection mechanism (session protection mechanism), and obtains a security protection algorithm, including an encryption algorithm and an integrity protection algorithm. The AN performs security protection on the user plane data based on the encryption algorithm and the integrity protection algorithm by using a corresponding key. Alternatively, an AN directly determines a session ID based on a DRB ID, or determines a security protection mechanism (session protection mechanism) based on a session ID in a protocol stack.

On a UE side, UE determines the QoS flow ID based on the DRB ID, further determines the session ID, and finally determines the security protection mechanism (session protection mechanism) corresponding to the session ID, and obtains the security protection algorithm, including the encryption algorithm and the integrity protection algorithm. The UE may perform security protection on the user plane data based on the encryption algorithm and the integrity protection algorithm by using a corresponding key.

In the foregoing embodiments of this specification, it should be noted that secondary authentication may be an optional step. If the secondary authentication is performed, the SMF or the AMF may determine, based on a result of the secondary authentication, whether to authorize the UE to access the session. If the authentication succeeds, it indicates that the UE is allowed to access the session, and then a user plane security mechanism is determined. Alternatively, the SMF or the AMF may determine, based on a result of the secondary authentication, whether to determine a user plane security mechanism.

In the foregoing embodiments of this specification, it should be further noted that some IDs and requirements in IDs and parameters used by the UE, the AN, or the UPF in user plane protection key derivation may be sent by a core network element (for example, the AMF, the SMF, or the SEAF) to the UE, the AN, or the UPF, so that the UE, the AN, or the UPF can correctly derive a user plane protection key. In addition, IDs and parameters used by the UE may alternatively be sent by the AN or the UPF to the UE.

In the foregoing embodiments of this specification, it should be further noted that the user plane security mechanism may be an algorithm priority list. In this case, the AN or the UPF may subsequently determine the user plane security algorithm based on the user plane security mechanism, the UE security capability, and the security algorithm supported by the AN/UPF. For example, a security algorithm that has a highest priority in the user plane security mechanism and that is supported by both the UE and the AN/UPF is selected as the user plane security algorithm.

In the foregoing embodiments of this specification, it should be further noted that:
(1) For an embodiment in which the SMF determines the user plane security mechanism, the following possibilities need to be supported:
   The SMF first determines, based on the UE registration information, whether the PCF needs to be requested (or whether a dynamic user plane security mechanism is required), to obtain a user plane security mechanism sent by the PCF in response.
   If the PCF does not need to be requested (or no dynamic user plane security mechanism is required), the SMF determines the user plane protection mechanism of the UE based on a user plane security mechanism preset in the UE registration information. Alternatively, the SMF sends the DNN, the service ID, or the DNN and the service ID to the UDM, to obtain the subscription service data from the UDM, and the SMF determines the user plane protection mechanism of the UE based on a user plane security mechanism preset in the subscription service data.
   If the PCF needs to be requested (or a dynamic user plane security mechanism is required), the SMF sends the policy request, to obtain the user plane security mechanism from the PCF. This manner is the same as a procedure of requesting the PCF in the foregoing embodiments.
(2) For an embodiment in which the AMF determines the user plane security mechanism, the following possibilities need to be supported:
   The AMF first determines, based on the UE registration information, whether the PCF needs to be requested (or whether a dynamic user plane security mechanism is required), to obtain a user plane security mechanism sent by the PCF in response.
   If the PCF does not need to be requested (or no dynamic user plane security mechanism is required), the AMF determines the user plane protection mechanism of the UE based on a user plane security mechanism preset in the UE registration information. Alternatively, the AMF sends the DNN, the service ID, or the DNN and the service ID to the UDM, to obtain the subscription service data from the UDM, and the AMF determines the user plane protection mechanism of the UE based on a user plane security mechanism preset in the subscription service data.
   If the PCF needs to be requested (or a dynamic user plane security mechanism is required), the AMF sends the policy request, to obtain the user plane security mechanism from the PCF. This manner is the same as a procedure of requesting the PCF in the foregoing embodiments.
(3) For an embodiment in which the SMF determines the user plane security mechanism, the following possibilities need to be supported:
   The SMF receives the request type parameter. The parameter may be that the UE sends the request type to the AMF, and then the AMF sends the request type to the SMF; or the UE may directly send the request type to the SMF.
   There are two possibilities for the request type parameter. If the request type is used to instruct to use an existing PDU session (for example, "existing PDU session"), the SMF determines, based on a session ID, an existing user plane security mechanism corresponding to the session ID, and uses the existing user plane security mechanism as a user plane protection mechanism of a current session. If the request type is used to instruct to create a PDU session (for example, "Initial request"), the user plane security mechanism is determined according to the procedure in the foregoing embodiment.
   Alternatively, the SMF may determine, based on a parameter 1 obtained from the UDM or the AMF, whether a new user plane security mechanism needs to be determined. Specifically, the parameter 1 may be obtained after the SMF sends a request to the UDM. Alternatively, the SMF receives the parameter 1 from the AMF, and in this case, the parameter 1 may be requested and obtained by the AMF from the UDM. The parameter 1 indicates whether a new user plane security mechanism is required.
(4) For an embodiment in which the SMF determines the user plane security mechanism, the following possibilities need to be supported:
   The SMF first determines, depending on whether a dynamic policy configuration is required, whether the PCF needs to be requested (or whether a dynamic user plane security mechanism is required), to obtain a user plane security mechanism sent by the PCF in response.
   If the PCF does not need to be requested (or no dynamic user plane security mechanism is required), the SMF determines the user plane protection mechanism of the UE based on a user plane security mechanism preset in the UE registration information. Alternatively, the SMF sends the DNN, the service ID, or the DNN and the service ID to the UDM, to obtain the subscription service data from the UDM, and the SMF determines the user plane protection mechanism of the UE based on a user plane security mechanism preset in the subscription service data. Alternatively, the SMF uses a preset default user plane security mechanism as a current user plane security protection mechanism.
   If the PCF needs to be requested (or a dynamic user plane security mechanism is required), the SMF sends the policy request, to obtain the user plane security mechanism from the PCF. This manner is the same as a procedure of requesting the PCF in the foregoing embodiments.
(5) For an embodiment in which the SMF determines the user plane security mechanism, the following possibilities need to be supported:
   The SMF receives the request type parameter. The parameter may be that the UE sends the request type to the AMF, and then the AMF sends the request type to the SMF; or the UE may directly send the request type to the SMF.
   There are two possibilities for the request type parameter. If the request type is used to instruct to use an existing PDU session (for example, "existing PDU session"), the SMF determines, based on a session ID, an existing user plane security mechanism corresponding to the session ID, and uses the existing user plane security mechanism as a user plane protection mechanism of a current session. If the request type is used to instruct to create a PDU session (for example, "Initial request"), if the request type indicates "Initial request", the SMF continues to perform an operation.
   The SMF first determines, depending on whether a dynamic policy configuration is required, whether the PCF needs to be requested (or whether a dynamic user plane security mechanism is required), to obtain a user plane security mechanism sent by the PCF in response.
   If the PCF does not need to be requested (or no dynamic user plane security mechanism is required), the SMF determines the user plane protection mechanism of the UE based on a user plane security mechanism preset in the UE registration information. Alternatively, the SMF sends the DNN, the service ID, or the DNN and the service ID to the UDM, to obtain the subscription service data from the UDM, and the SMF determines the user plane protection mechanism of the UE based on a user plane security mechanism preset in the subscription service data. Alternatively, the SMF uses a preset default user plane security mechanism as a current user plane security protection mechanism.
   If the PCF needs to be requested (or a dynamic user plane security mechanism is required), the SMF sends the policy request, to obtain the user plane security mechanism from the PCF. This manner is the same as a procedure of requesting the PCF in the foregoing embodiments.
(6) For an embodiment in which the SMF determines the user plane security mechanism, the following possibility needs to be supported:
   In the embodiments corresponding to FIG. 11, FIG. 12, FIG. 13, FIG. 14, FIG. 15, FIG. 16, FIG. 17, and FIG. 18, the SMF may determine the user plane security protection mechanism without sending a policy request message to the PCF. For example, a method for determining the user plane security protection mechanism by the SMF may be based on the method in the embodiment in FIG. 7.
(7) For an embodiment in which the PCF determines the user plane security mechanism, the following possibility needs to be supported:
   The PCF determines the user plane security protection mechanism based on a default security configuration.
(8) For a method for generating the user plane protection key based on K_SMF in the foregoing embodiments, the following possibility needs to be considered:
   A key of the user plane protection key may be calculated based on a key derived from K SMF. For example, K_UP = KDF(K_SMF, session ID), and user plane protection key = KDF(K UP, UP algorithm ID). K_UP may be generated in the following manner: K_UP = KDF(K_SMF, flow ID), or K_UP = KDF(K_SMF, slice ID).
(8) For a manner of generating the user plane protection key in the foregoing embodiments, the following possibilities further need to be considered:
   user plane protection key = KDF(K_SMF, UP algorithm ID, slice ID), or user plane protection key = KDF(K_UP, UP algorithm ID, slice ID), or user plane protection key = KDF(K_AN, UP algorithm ID, slice ID).
(9) For the foregoing embodiments, the following possibility is further included: There may be two independent solutions in each of the foregoing embodiments: Solution 1 is a method for negotiating about a user plane protection mechanism, a user plane security mechanism, or a security policy, and Solution 2 is a method for generating an air interface security algorithm and a security key.
(10) For the foregoing embodiments, the following possibility is further included: The AN supports only a mechanism for determining a security algorithm, and does not derive an air interface key, and sends a security algorithm or a user plane security mechanism to the UE. If the UE receives the user plane security mechanism, the UE determines a security algorithm by using a same method as the AN.
(11) For the foregoing embodiments, the following possibility is further included: The AN sends only a received user plane security mechanism to the UE.
(12) For the foregoing embodiments, the following possibility is further included: The UE and the AN have determined an encryption protection algorithm and an integrity protection algorithm through negotiation. Then the AN determines a security protection algorithm based on a received user plane security mechanism and the determined encryption protection algorithm and integrity protection algorithm. The user plane security mechanism indicates whether encryption is to be performed (or whether integrity protection is to be performed, or whether both encryption and integrity protection are to be performed). For example, if the user plane security mechanism indicates that encryption protection is to be performed, the AN protects data between the UE and the AN by using the determined encryption protection algorithm. If the user plane security mechanism indicates that integrity protection is to be performed, the AN protects data between the UE and the AN by using the determined integrity protection algorithm. If the user plane security mechanism indicates that both encryption and integrity protection are to be performed, the AN protects data between the UE and the AN by using the determined encryption protection algorithm. Then the AN sends the user plane security mechanism to the UE, and the UE determines the security protection algorithm by using a same method as the AN based on the user plane security mechanism and the determined algorithms. Alternatively, the AN may send the determined security protection algorithm to the UE. Alternatively, the AN may first send the user plane security mechanism, and then the UE and the AN determine the encryption protection algorithm and the integrity protection algorithm, and finally determine the security protection algorithm based on the user plane security mechanism and the determined encryption protection algorithm and integrity protection algorithm.

The methods in the embodiments of the present invention are described in detail above. For ease of better implementing the foregoing solutions in the embodiments of the present invention, correspondingly, the following provides some apparatuses in the embodiments of the present invention.

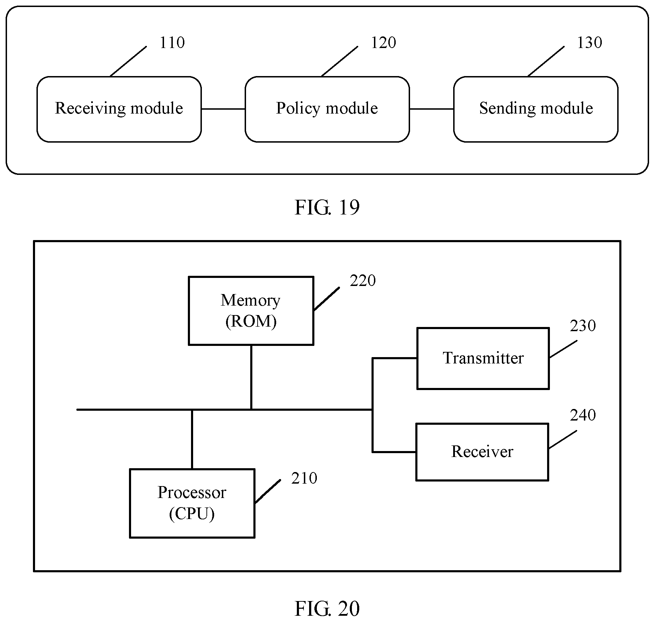

FIG. 19 is a schematic structural diagram of a policy function network element according to an embodiment of the present invention. The policy function network element may include a receiving module 110, a policy module 120, and a sending module 130. Detailed descriptions about the units are as follows:

The receiving module 110 is configured to receive a request for communication between user equipment and a network device, where the request includes a session identifier, a user equipment identifier, and security requirement indication information, and the security requirement indication information is used to indicate a user equipment security requirement and/or a service security requirement;
the policy module 120 is configured to determine a user plane protection mechanism based on the request and at least one of UE registration information fed back by a unified data manager UDM, subscription service data fed back by the UDM, and a service security requirement fed back by an application function AF, where the user plane protection mechanism is used to indicate whether encryption, integrity protection, or both encryption and integrity protection are required for user plane data transmitted between the user equipment and the network device;
the sending module 130 is configured to: when the network device is an access network AN device, send the user plane protection mechanism to the AN device, where the AN device is configured to determine a security protection algorithm based on the user plane protection mechanism, and generate a first user plane protection key based on the security protection algorithm, and the AN device is further configured to send the security protection algorithm to the user equipment, so that the user equipment generates a second user plane protection key based on the security protection algorithm; and
the sending module 130 is further configured to: when the network device is a core network CN device, send the user plane protection mechanism to an algorithm network element, where the algorithm network element is configured to determine a security protection algorithm based on the user plane protection mechanism, generate a first user plane protection key based on the security protection algorithm, and send the first user plane protection key to the CN device, and the algorithm network element is further configured to send the security protection algorithm to the user equipment, so that the user equipment generates a second user plane protection key based on the security protection algorithm.

Optionally, the request further includes at least one of a service identifier, a user equipment service identifier, a data network name DNN, and a user equipment security capability.

Optionally, the request is an attach request, the attach request is initiated by the user equipment to an authentication server function AUSF, and the attach request is used to perform bidirectional authentication between the network device and the AUSF, and is further used to trigger the policy function network element to determine the user plane protection mechanism; or
the request is a session request, the session request is initiated by the user equipment to a session management function SMF, or is initiated by an access and mobility management function AMF to the SMF, and the session request is used to create a session between the network device and the SMF, and is further used to trigger the policy function network element to determine the user plane protection mechanism; or
the request is a policy request, the policy request is initiated by the SMF to the policy function network element, and the policy request is used to trigger the policy function network element to determine the user plane protection mechanism.

Optionally, the user plane protection mechanism is further used to indicate at least one of a security protection algorithm, a key length, and a key update period that need to be used for the user plane data transmitted between the user equipment and the network device.

Optionally, the user plane protection mechanism is further used to indicate a list of security protection algorithms, with priorities, that may be used for the user plane data transmitted between the user equipment and the network device.

Specifically, the policy function network element includes one of a policy control function PCF, the authentication server function AUSF, the access and mobility management function AMF, the session management function SMF, and the AN device.

Specifically, the CN device is a user plane function UPF.

Specifically, the algorithm network element includes at least one of the PCF, the AUSF, the AMF, the SMF, and the AN device.

It should be noted that for implementation of the module units, reference may be correspondingly made to corresponding descriptions in the method embodiments shown in FIG. 3 to FIG. 5, and details are not described herein again.

Referring to FIG. 20, an embodiment of the present invention provides another policy function network element. The policy function network element includes a processor 210, a memory 220, a transmitter 230, and a receiver 240, and the processor 210, the memory 220, the transmitter 230, and the receiver 240 are connected (for example, are connected to each other by using a bus).

The memory 220 includes but is not limited to a random access memory (English: Random Access Memory, RAM for short), a read-only memory (English: Read-Only Memory, ROM for short), an erasable programmable read only memory (English: Erasable Programmable Read Only Memory, EPROM for short), or a compact disc read-only memory (English: Compact Disc Read-Only Memory, CD-ROM for short), and the memory 1302 is configured to store a related instruction and related data. The transceiver 1303 is configured to receive and send data.

The transmitter 230 is configured to send data or signaling, and the receiver 240 is configured to receive data or signaling.

The processor 210 may be one or more central processing units (English: Central Processing Unit, CPU for short). When the processor 210 is one CPU, the CPU may be a single-core CPU, or may be a multi-core CPU.

The processor 210 is configured to read program code stored in the memory 220, to perform the following operations:
receiving a request for communication between user equipment and a network device by using the receiver 240, where the request includes a session identifier, a user equipment identifier, and security requirement indication information, and the security requirement indication information is used to indicate a user equipment security requirement and/or a service security requirement;
determining, by the processor 210, a user plane protection mechanism based on the request and at least one of UE registration information fed back by a unified data manager UDM, subscription service data fed back by the UDM, and a service security requirement fed back by an application function AF, where the user plane protection mechanism is used to indicate whether encryption, integrity protection, or both encryption and integrity protection are required for user plane data transmitted between the user equipment and the network device; and
when the network device is an access network AN device, sending the user plane protection mechanism to the AN device by using the transmitter 230, where the AN device is configured to determine a security protection algorithm based on the user plane protection mechanism, and generate a first user plane protection key based on the security protection algorithm, and the AN device is further configured to send the security protection algorithm to the user equipment, so that the user equipment generates a second user plane protection key based on the security protection algorithm; or
when the network device is a core network CN device, sending the user plane protection mechanism to an algorithm network element by using the transmitter 230, where the algorithm network element is configured to determine a security protection algorithm based on the user plane protection mechanism, generate a first user plane protection key based on the security protection algorithm, and send the first user plane protection key to the CN device, and the algorithm network element is further configured to send the security protection algorithm to the user equipment, so that the user equipment generates a second user plane protection key based on the security protection algorithm.

Optionally, the request further includes at least one of a service identifier, a user equipment service identifier, a data network name DNN, and a user equipment security capability.

Optionally, the request is an attach request, the attach request is initiated by the user equipment to an authentication server function AUSF, and the attach request is used to perform bidirectional authentication between the network device and the AUSF, and is further used to trigger the policy function network element to determine the user plane protection mechanism; or
the request is a session request, the session request is initiated by the user equipment to a session management function SMF, or is initiated by an access and mobility management function AMF to the SMF, and the session request is used to create a session between the network device and the SMF, and is further used to trigger the policy function network element to determine the user plane protection mechanism; or
the request is a policy request, the policy request is initiated by the SMF to the policy function network element, and the policy request is used to trigger the policy function network element to determine the user plane protection mechanism.

Optionally, the user plane protection mechanism is further used to indicate at least one of a security protection algorithm, a key length, and a key update period that need to be used for the user plane data transmitted between the user equipment and the network device.

Optionally, the user plane protection mechanism is further used to indicate a list of security protection algorithms, with priorities, that may be used for the user plane data transmitted between the user equipment and the network device.

Specifically, the policy function network element includes one of a policy control function PCF, the authentication server function AUSF, the access and mobility management function AMF, the session management function SMF, and the AN device.

The CN device is a user plane function UPF, and the algorithm network element includes at least one of the PCF, the AUSF, the AMF, the SMF, and the AN device.

Optionally, that the AN device is configured to determine a security protection algorithm based on the user plane protection mechanism includes:
if the user plane protection mechanism includes no security protection algorithm, determining the security protection algorithm based on at least one of the user plane protection mechanism, the user equipment security capability, and an algorithm priority list supported by the AN device; or if the user plane protection mechanism includes a security protection algorithm, directly obtaining the security protection algorithm in the user plane protection mechanism.

Optionally, that the algorithm network element is configured to determine a security protection algorithm based on the user plane protection mechanism includes:
if the user plane protection mechanism includes no security protection algorithm, determining the security protection algorithm based on at least one of the user plane protection mechanism, the user equipment security capability, and an algorithm priority list supported by the CN device; or if the user plane protection mechanism includes a security protection algorithm, directly obtaining the security protection algorithm in the user plane protection mechanism.

Optionally, when the network device is an AN device, the generating a first user plane protection key based on the security protection algorithm includes:
first user plane protection key = KDF(K_AN, UP algorithm ID), where K_AN is a base station key derived, after authentication succeeds, by the AMF based on a base key obtained after the authentication or a key derived again after the authentication, and the AN device obtains K_AN from the AMF; or
when the network device is a CN device, the generating a first user plane protection key based on the security protection algorithm includes:
   first user plane protection key = KDF(K_algorithm network element, UP algorithm ID), where K algorithm network element is a base station key derived, after authentication succeeds, by the AMF or the AUSF based on a base key obtained after the authentication or a key derived again after the authentication, and the algorithm network element obtains K algorithm network element from the AMF or the AUSF, where

UP algorithm ID is an identifier of an encryption algorithm or an identifier of an integrity protection algorithm, and KDF is a key derivation function.

Optionally, the user plane data is carried on a quality of service flow QoS flow transport channel; and
if a quality of service flow identifier QoS flow ID corresponding to the QoS flow transport channel exists, and a QoS flow corresponding to the QoS flow ID meets a user plane protection mechanism or a QoS requirement or both a user plane protection mechanism and a QoS requirement, the QoS flow transport channel is selected to transmit the user plane data; otherwise, a QoS flow transport channel is newly created, and a QoS flow ID corresponding to the QoS flow transport channel is generated; or if a QoS flow ID corresponding to the QoS flow transport channel exists, and a QoS flow corresponding to the QoS flow ID meets a user plane protection mechanism, the QoS flow transport channel is selected to transmit the user plane data; otherwise, a QoS flow transport channel is newly created, and a QoS flow ID corresponding to the QoS flow transport channel is generated, where
the QoS requirement is a requirement for a quality of service parameter in a communications network.

Optionally, the user plane data is carried on a data radio bearer DRB transport channel; and
if a data radio bearer identifier DRB ID corresponding to the DRB transport channel exists, and a DRB corresponding to the DRB ID meets a user plane protection mechanism or a QoS requirement or both a user plane protection mechanism and a QoS requirement, the DRB transport channel is selected to transmit the user data; otherwise, a DRB transport channel is newly created, and a DRB ID corresponding to the DRB transport channel is generated; or if a DRB ID corresponding to the DRB transport channel exists, and a DRB corresponding to the DRB ID meets a user plane protection mechanism, the DRB transport channel is selected to transmit the user data; otherwise, a DRB transport channel is newly created, and a DRB ID corresponding to the DRB transport channel is generated, where
there is a mapping relationship between the DRB ID and the user plane protection mechanism.

Optionally, the user plane data is carried on a session session transport channel; and
if a session identifier session ID corresponding to the session transport channel exists, and a session corresponding to the session ID meets a user plane protection mechanism or a QoS requirement or both a user plane protection mechanism and a QoS requirement, the session transport channel is selected to transmit the user data; otherwise, a session transport channel is newly created, and a session ID corresponding to the session transport channel is generated; or if a session ID corresponding to the session transport channel exists, and a session corresponding to the session ID meets a user plane protection mechanism, the session transport channel is selected to transmit the user data; otherwise, a session transport channel is newly created, and a session ID corresponding to the session transport channel is generated, where
there is a mapping relationship between the session ID and the user plane protection mechanism.

Optionally, a mapping from the session ID and the QoS flow ID to the DRB ID is established, so that QoS flows with a same user plane protection mechanism are mapped to a same DRB.

Specifically, when the network device is an AN device, the generating a first user plane protection key based on the security protection algorithm includes:
first user plane protection key = KDF(K_AN, UP algorithm ID); or
first user plane protection key = KDF(K_AN, UP algorithm ID, flow ID); or
first user plane protection key = KDF(K_AN, UP algorithm ID, session ID); or
first user plane protection key = KDF(K AN, UP algorithm ID, DRB ID).

Specifically, when the network device is a CN device, the generating a first user plane protection key based on the security protection algorithm includes:
first user plane protection key = KDF(K_algorithm network element, UP algorithm ID); or
first user plane protection key = KDF(K_algorithm network element, UP algorithm ID, flow ID); or
first user plane protection key = KDF(K_algorithm network element, UP algorithm ID, session ID); or first user plane protection key = KDF(K algorithm network element, UP algorithm ID, DRB ID).

In addition, an embodiment of the present invention further provides a communications system. The communications system includes user equipment, a policy function network element, a network device, a unified data manager UDM, an application function AF, and an algorithm network element, where the policy function network element is connected to the user equipment and the network device, the policy function network element is further connected to the UDM and the AF, and the algorithm network element is connected to the policy function network element and the network device, where
the policy function network element is configured to receive a request for communication between the user equipment and the network device, where the request includes a session identifier, a user equipment identifier, and security requirement indication information, and the security requirement indication information is used to indicate a user equipment security requirement and/or a service security requirement;
the policy function network element is further configured to determine a user plane protection mechanism based on the request and at least one of UE registration information fed back by the UDM, subscription service data fed back by the UDM, and a service security requirement fed back by the AF, where the user plane protection mechanism is used to indicate whether encryption, integrity protection, or both encryption and integrity protection are required for user plane data transmitted between the user equipment and the network device;
when the network device is an access network AN device, the policy function network element is further configured to send the user plane protection mechanism to the AN device, where the AN device is configured to determine a security protection algorithm based on the user plane protection mechanism, the AN device is further configured to generate a first user plane protection key based on the security protection algorithm and send the security protection algorithm to the user equipment, and the user equipment is configured to generate a second user plane protection key based on the security protection algorithm;
when the network device is a core network CN device, the policy function network element is configured to send the user plane protection mechanism to the algorithm network element, where the algorithm network element is further configured to determine a security protection algorithm based on the user plane protection mechanism, the algorithm network element is further configured to generate a first user plane protection key based on the security protection algorithm, send the first user plane protection key to the CN device, and send the security protection algorithm to the user equipment, and the user equipment is configured to generate a second user plane protection key based on the security protection algorithm; and
the UDM is configured to store the UE registration information, and is further configured to store the subscription service data, and the AF is configured to store the service security requirement.

Optionally, the request further includes at least one of a service identifier, a user equipment service identifier, a data network name DNN, and a user equipment security capability.

Optionally, the system further includes one or more of an authentication server function AUSF, a session management function SMF, and an access and mobility management function AMF.

Optionally, the request is an attach request, the attach request is initiated by the user equipment to the AUSF, and the attach request is used to perform bidirectional authentication between the network device and the AUSF, and is further used to trigger the policy function network element to determine the user plane protection mechanism; or
the request is a session request, the session request is initiated by the user equipment to the SMF, or is initiated by the AMF to the SMF, and the session request is used to create a session between the network device and the SMF, and is further used to trigger the policy function network element to determine the user plane protection mechanism; or
the request is a policy request, the policy request is initiated by the SMF to the policy function network element, and the policy request is used to trigger the policy function network element to determine the user plane protection mechanism.

Optionally, the user plane protection mechanism is further used to indicate at least one of a security protection algorithm, a key length, and a key update period that need to be used for the user plane data transmitted between the user equipment and the network device.

Optionally, the user plane protection mechanism is further used to indicate a list of security protection algorithms, with priorities, that may be used for the user plane data transmitted between the user equipment and the network device.

Specifically, the policy function network element is one of a policy control function PCF, the authentication server function AUSF, the access and mobility management function AMF, the session management function SMF, and the AN device.

Specifically, the CN device is a user plane function UPF, and the algorithm network element includes at least one of the PCF, the AUSF, the AMF, the SMF, and the AN device.

Optionally, that the AN device is configured to determine a security protection algorithm based on the user plane protection mechanism includes:
if the user plane protection mechanism includes no security protection algorithm, the AN device is configured to determine the security protection algorithm based on at least one of the user plane protection mechanism, the user equipment security capability, and an algorithm priority list supported by the AN device; or
if the user plane protection mechanism includes a security protection algorithm, the AN device is configured to directly obtain the security protection algorithm in the user plane protection mechanism.

Optionally, that the algorithm network element is configured to determine a security protection algorithm based on the user plane protection mechanism includes:
if the user plane protection mechanism includes no security protection algorithm, the algorithm network element is configured to determine the security protection algorithm based on at least one of the user plane protection mechanism, the user equipment security capability, and an algorithm priority list supported by the CN device; or
if the user plane protection mechanism includes a security protection algorithm, the algorithm network element is configured to directly obtain the security protection algorithm in the user plane protection mechanism.

Specifically, when the network device is an AN device, that the AN device is configured to generate a first user plane protection key based on the security protection algorithm includes:
first user plane protection key = KDF(K_AN, UP algorithm ID), where K_AN is a base station key derived, after authentication succeeds, by the AMF based on a base key obtained after the authentication or a key derived again after the authentication, and the AN device is configured to obtain K AN from the AMF; or
when the network device is a CN device, that the algorithm network element is configured to generate a first user plane protection key based on the security protection algorithm includes:
   first user plane protection key = KDF(K_algorithm network element, UP algorithm ID), where K_algorithm network element is a base station key derived, after authentication succeeds, by the AMF or the AUSF based on a base key obtained after the authentication or a key derived again after the authentication, and the algorithm network element is configured to obtain K_algorithm network element from the AMF or the AUSF, where
   UP algorithm ID is an identifier of an encryption algorithm or an identifier of an integrity protection algorithm, and KDF is a key derivation function.

Optionally, the SMF is further configured to determine that the user plane data is carried on a quality of service flow QoS flow transport channel; and
if a quality of service flow identifier QoS flow ID corresponding to the QoS flow transport channel exists, and a QoS flow corresponding to the QoS flow ID meets a user plane protection mechanism or a QoS requirement or both a user plane protection mechanism and a QoS requirement, the SMF is configured to select the QoS flow transport channel to transmit the user plane data; otherwise, the SMF is configured to newly create a QoS flow transport channel, and generate a QoS flow ID corresponding to the QoS flow transport channel; or
if a QoS flow ID corresponding to the QoS flow transport channel exists, and a QoS flow corresponding to the QoS flow ID meets a user plane protection mechanism, the SMF is configured to select the QoS flow transport channel to transmit the user plane data; otherwise, the SMF is configured to newly create a QoS flow transport channel, and generate a QoS flow ID corresponding to the QoS flow transport channel, where
the QoS requirement is a requirement for a quality of service parameter in a communications network.

Optionally, the SMF is further configured to determine that the user plane data is carried on a data radio bearer DRB transport channel; and
if a data radio bearer identifier DRB ID corresponding to the DRB transport channel exists, and a DRB corresponding to the DRB ID meets a user plane protection mechanism or a QoS requirement or both a user plane protection mechanism and a QoS requirement, the SMF is configured to select the DRB transport channel to transmit the user data; otherwise, the SMF is configured to newly create a DRB transport channel, and generate a DRB ID corresponding to the DRB transport channel; or
if a DRB ID corresponding to the DRB transport channel exists, and a DRB corresponding to the DRB ID meets a user plane protection mechanism, the SMF is configured to select the DRB transport channel to transmit the user data; otherwise, the SMF is configured to newly create a DRB transport channel, and generate a DRB ID corresponding to the DRB transport channel, where
there is a mapping relationship between the DRB ID and the user plane protection mechanism.

Optionally, the SMF is configured to determine that the user plane data is carried on a session session transport channel; and
if a session identifier session ID corresponding to the session transport channel exists, and a session corresponding to the session ID meets a user plane protection mechanism or a QoS requirement or both a user plane protection mechanism and a QoS requirement, the SMF is configured to select the session transport channel to transmit the user data; otherwise, the SMF is configured to newly create a session transport channel, and generate a session ID corresponding to the session transport channel; or
if a session ID corresponding to the session transport channel exists, and a session corresponding to the session ID meets a user plane protection mechanism, the SMF is configured to select the session transport channel to transmit the user data; otherwise, the SMF is configured to newly create a session transport channel, and generate a session ID corresponding to the session transport channel, where
there is a mapping relationship between the session ID and the user plane protection mechanism.

Optionally, the determining a user plane protection mechanism further includes:
establishing a mapping from the session ID and the QoS flow ID to the DRB ID, so that QoS flows with a same user plane protection mechanism are mapped to a same DRB.

Specifically, when the network device is an AN device, that the AN device is configured to generate a first user plane protection key based on the security protection algorithm includes:
first user plane protection key = KDF(K_AN, UP algorithm ID); or
first user plane protection key = KDF(K_AN, UP algorithm ID, flow ID); or
first user plane protection key = KDF(K_AN, UP algorithm ID, session ID); or
first user plane protection key = KDF(K AN, UP algorithm ID, DRB ID).

Specifically, when the network device is a CN device, that the algorithm network element is configured to generate a first user plane protection key based on the security protection algorithm includes:
first user plane protection key = KDF(K_algorithm network element, UP algorithm ID); or
first user plane protection key = KDF(K_algorithm network element, UP algorithm ID, flow ID); or
first user plane protection key = KDF(K_algorithm network element, UP algorithm ID, session ID); or first user plane protection key = KDF(K algorithm network element, UP algorithm ID, DRB ID).

It should be noted that for an implementation of each network element in the communications system, reference may be made to descriptions in the method embodiments in FIG. 3 to FIG. 15, and details are not described herein again.

A person of ordinary skill in the art may understand that all or some of the processes of the methods in the embodiments may be implemented by a computer program instructing relevant hardware. The program may be stored in a computer readable storage medium. When the program is executed, the processes in the method embodiments may be performed. The foregoing storage medium includes various media that can store program code, for example, a ROM, a random access memory RAM, a magnetic disk, or an optical disc.

## Claims

1. A key configuration method, comprising:
receiving, by a policy function network element, a request for communication between user equipment and a network device, wherein the request comprises a session identifier, a user equipment identifier, and security requirement indication information, and the security requirement indication information is used to indicate a user equipment security requirement and/or a service security requirement;
determining, by the policy function network element, a user plane protection mechanism based on the request and at least one of UE registration information fed back by a unified data manager UDM, subscription service data fed back by the UDM, and a service security requirement fed back by an application function AF, wherein the user plane protection mechanism is used to indicate whether encryption, integrity protection, or both encryption and integrity protection are required for user plane data transmitted between the user equipment and the network device; and
when the network device is an access network AN device, sending, by the policy function network element, the user plane protection mechanism to the AN device, wherein the AN device is configured to determine a security protection algorithm based on the user plane protection mechanism, and generate a first user plane protection key based on the security protection algorithm, and the AN device is further configured to send the security protection algorithm to the user equipment, so that the user equipment generates a second user plane protection key based on the security protection algorithm; or
when the network device is a core network CN device, sending, by the policy function network element, the user plane protection mechanism to an algorithm network element, wherein the algorithm network element is configured to determine a security protection algorithm based on the user plane protection mechanism, generate a first user plane protection key based on the security protection algorithm, and send the first user plane protection key to the CN device, and the algorithm network element is further configured to send the security protection algorithm to the user equipment, so that the user equipment generates a second user plane protection key based on the security protection algorithm.

2. The method according to claim 1, wherein
the request further comprises at least one of a service identifier, a user equipment service identifier, a data network name DNN, and a user equipment security capability.

3. The method according to claim 1 or 2, wherein
the request is an attach request, the attach request is initiated by the user equipment to an authentication server function AUSF, and the attach request is used to perform bidirectional authentication between the network device and the AUSF, and is further used to trigger the policy function network element to determine the user plane protection mechanism; or
the request is a session request, the session request is initiated by the user equipment to a session management function SMF, or is initiated by an access and mobility management function AMF to the SMF, and the session request is used to create a session between the network device and the SMF, and is further used to trigger the policy function network element to determine the user plane protection mechanism; or
the request is a policy request, the policy request is initiated by the SMF to the policy function network element, and the policy request is used to trigger the policy function network element to determine the user plane protection mechanism.

4. The method according to any one of claims 1 to 3, wherein the user plane protection mechanism is further used to indicate at least one of a security protection algorithm, a key length, and a key update period that need to be used for the user plane data transmitted between the user equipment and the network device.

5. The method according to any one of claims 1 to 4, wherein the user plane protection mechanism is further used to indicate a list of security protection algorithms, with priorities, that may be used for the user plane data transmitted between the user equipment and the network device.

6. The method according to any one of claims 1 to 5, wherein the policy function network element comprises one of a policy control function PCF, the authentication server function AUSF, the access and mobility management function AMF, the session management function SMF, and the AN device.

7. The method according to any one of claims 1 to 6, wherein
the CN device is a user plane function UPF; and
the algorithm network element comprises at least one of the PCF, the AUSF, the AMF, the SMF, and the AN device.

8. The method according to any one of claims 1 to 7, wherein
that the AN device is configured to determine a security protection algorithm based on the user plane protection mechanism comprises:
if the user plane protection mechanism comprises no security protection algorithm, determining the security protection algorithm based on at least one of the user plane protection mechanism, the user equipment security capability, and an algorithm priority list supported by the AN device; or if the user plane protection mechanism comprises a security protection algorithm, directly obtaining the security protection algorithm in the user plane protection mechanism.

9. The method according to any one of claims 1 to 7, wherein
that the algorithm network element is configured to determine a security protection algorithm based on the user plane protection mechanism comprises:
if the user plane protection mechanism comprises no security protection algorithm, determining the security protection algorithm based on at least one of the user plane protection mechanism, the user equipment security capability, and an algorithm priority list supported by the CN device; or if the user plane protection mechanism comprises a security protection algorithm, directly obtaining the security protection algorithm in the user plane protection mechanism.

10. The method according to any one of claims 3 to 9, wherein
when the network device is an AN device, the generating a first user plane protection key based on the security protection algorithm comprises:
first user plane protection key = KDF(K_AN, UP algorithm ID), wherein K_AN is a base station key derived, after authentication succeeds, by the AMF based on a base key obtained after the authentication or a key derived again after the authentication, and the AN device obtains K_AN from the AMF; or
when the network device is a CN device, the generating a first user plane protection key based on the security protection algorithm comprises:
first user plane protection key = KDF(K_algorithm network element, UP algorithm ID), wherein K_algorithm network element is a base station key derived, after authentication succeeds, by the AMF or the AUSF based on a base key obtained after the authentication or a key derived again after the authentication, and the algorithm network element obtains K_algorithm network element from the AMF or the AUSF, wherein
UP algorithm ID is an identifier of an encryption algorithm or an identifier of an integrity protection algorithm, and KDF is a key derivation function.

11. The method according to any one of claims 1 to 9, comprising: the user plane data is carried on a quality of service flow QoS flow transport channel; and
if a quality of service flow identifier QoS flow ID corresponding to the QoS flow transport channel exists, and a QoS flow corresponding to the QoS flow ID meets a user plane protection mechanism or a QoS requirement or both a user plane protection mechanism and a QoS requirement, selecting the QoS flow transport channel to transmit the user plane data; otherwise, newly creating a QoS flow transport channel, and generating a QoS flow ID corresponding to the QoS flow transport channel; or if a QoS flow ID corresponding to the QoS flow transport channel exists, and a QoS flow corresponding to the QoS flow ID meets a user plane protection mechanism, selecting the QoS flow transport channel to transmit the user plane data; otherwise, newly creating a QoS flow transport channel, and generating a QoS flow ID corresponding to the QoS flow transport channel, wherein
the QoS requirement is a requirement for a quality of service parameter in a communications network.

12. The method according to any one of claims 1 to 9, comprising: the user plane data is carried on a data radio bearer DRB transport channel; and
if a data radio bearer identifier DRB ID corresponding to the DRB transport channel exists, and a DRB corresponding to the DRB ID meets a user plane protection mechanism or a QoS requirement or both a user plane protection mechanism and a QoS requirement, selecting the DRB transport channel to transmit the user data; otherwise, newly creating a DRB transport channel, and generating a DRB ID corresponding to the DRB transport channel; or if a DRB ID corresponding to the DRB transport channel exists, and a DRB corresponding to the DRB ID meets a user plane protection mechanism, selecting the DRB transport channel to transmit the user data; otherwise, newly creating a DRB transport channel, and generating a DRB ID corresponding to the DRB transport channel, wherein
there is a mapping relationship between the DRB ID and the user plane protection mechanism.

13. The method according to any one of claims 1 to 9, comprising: the user plane data is carried on a session session transport channel; and
if a session identifier session ID corresponding to the session transport channel exists, and a session corresponding to the session ID meets a user plane protection mechanism or a QoS requirement or both a user plane protection mechanism and a QoS requirement, selecting the session transport channel to transmit the user data; otherwise, newly creating a session transport channel, and generating a session ID corresponding to the session transport channel; or if a session ID corresponding to the session transport channel exists, and a session corresponding to the session ID meets a user plane protection mechanism, selecting the session transport channel to transmit the user data; otherwise, newly creating a session transport channel, and generating a session ID corresponding to the session transport channel, wherein
there is a mapping relationship between the session ID and the user plane protection mechanism.

14. The method according to any one of claims 11 to 13, wherein the determining a user plane protection mechanism further comprises:
establishing a mapping from the session ID and the QoS flow ID to the DRB ID, so that QoS flows with a same user plane protection mechanism are mapped to a same DRB.

15. The method according to any one of claims 11 to 14, wherein when the network device is an AN device, the generating a first user plane protection key based on the security protection algorithm comprises:
first user plane protection key = KDF(K_AN, UP algorithm ID); or
first user plane protection key = KDF(K_AN, UP algorithm ID, flow ID); or
first user plane protection key = KDF(K_AN, UP algorithm ID, session ID); or
first user plane protection key = KDF(K_AN, UP algorithm ID, DRB ID).

16. The method according to any one of claims 11 to 14, wherein when the network device is a CN device, the generating a first user plane protection key based on the security protection algorithm comprises:
first user plane protection key = KDF(K_algorithm network element, UP algorithm ID); or
first user plane protection key = KDF(K_algorithm network element, UP algorithm ID, flow ID); or
first user plane protection key = KDF(K_algorithm network element, UP algorithm ID, session ID); or first user plane protection key = KDF(K_algorithm network element, UP algorithm ID, DRB ID).

17. A policy function network element, comprising a receiving module, a policy module, and a sending module, wherein
the receiving module is configured to receive a request for communication between user equipment and a network device, wherein the request comprises a session identifier, a user equipment identifier, and security requirement indication information, and the security requirement indication information is used to indicate a user equipment security requirement and/or a service security requirement;
the policy module is configured to determine a user plane protection mechanism based on the request and at least one of UE registration information fed back by a unified data manager UDM, subscription service data fed back by the UDM, and a service security requirement fed back by an application function AF, wherein the user plane protection mechanism is used to indicate whether encryption, integrity protection, or both encryption and integrity protection are required for user plane data transmitted between the user equipment and the network device;
the sending module is configured to: when the network device is an access network AN device, send the user plane protection mechanism to the AN device, wherein the AN device is configured to determine a security protection algorithm based on the user plane protection mechanism, and generate a first user plane protection key based on the security protection algorithm, and the AN device is further configured to send the security protection algorithm to the user equipment, so that the user equipment generates a second user plane protection key based on the security protection algorithm; and
the sending module is further configured to: when the network device is a core network CN device, send the user plane protection mechanism to an algorithm network element, wherein the algorithm network element is configured to determine a security protection algorithm based on the user plane protection mechanism, generate a first user plane protection key based on the security protection algorithm, and send the first user plane protection key to the CN device, and the algorithm network element is further configured to send the security protection algorithm to the user equipment, so that the user equipment generates a second user plane protection key based on the security protection algorithm.

18. The policy function network element according to claim 17, wherein
the request further comprises at least one of a service identifier, a user equipment service identifier, a data network name DNN, and a user equipment security capability.

19. The policy function network element according to claim 17 or 18, wherein
the request is an attach request, the attach request is initiated by the user equipment to an authentication server function AUSF, and the attach request is used to perform bidirectional authentication between the network device and the AUSF, and is further used to trigger the policy function network element to determine the user plane protection mechanism; or
the request is a session request, the session request is initiated by the user equipment to a session management function SMF, or is initiated by an access and mobility management function AMF to the SMF, and the session request is used to create a session between the network device and the SMF, and is further used to trigger the policy function network element to determine the user plane protection mechanism; or
the request is a policy request, the policy request is initiated by the SMF to the policy function network element, and the policy request is used to trigger the policy function network element to determine the user plane protection mechanism.

20. The policy function network element according to any one of claims 17 to 19, wherein the user plane protection mechanism is further used to indicate at least one of a security protection algorithm, a key length, and a key update period that need to be used for the user plane data transmitted between the user equipment and the network device.

21. The policy function network element according to any one of claims 17 to 20, wherein the user plane protection mechanism is further used to indicate a list of security protection algorithms, with priorities, that may be used for the user plane data transmitted between the user equipment and the network device.

22. The policy function network element according to any one of claims 17 to 21, wherein the policy function network element comprises one of a policy control function PCF, the authentication server function AUSF, the access and mobility management function AMF, the session management function SMF, and the AN device.

23. The policy function network element according to any one of claims 17 to 22, wherein
the CN device is a user plane function UPF; and
the algorithm network element comprises at least one of the PCF, the AUSF, the AMF, the SMF, and the AN device.

24. A communications system, comprising user equipment, a policy function network element, a network device, a unified data manager UDM, an application function AF, and an algorithm network element, wherein the policy function network element is connected to the user equipment and the network device, the policy function network element is further connected to the UDM and the AF, and the algorithm network element is connected to the policy function network element and the network device, wherein
the policy function network element is configured to receive a request for communication between the user equipment and the network device, wherein the request comprises a session identifier, a user equipment identifier, and security requirement indication information, and the security requirement indication information is used to indicate a user equipment security requirement and/or a service security requirement;
the policy function network element is further configured to determine a user plane protection mechanism based on the request and at least one of UE registration information fed back by the UDM, subscription service data fed back by the UDM, and a service security requirement fed back by the AF, wherein the user plane protection mechanism is used to indicate whether encryption, integrity protection, or both encryption and integrity protection are required for user plane data transmitted between the user equipment and the network device;
when the network device is an access network AN device, the policy function network element is further configured to send the user plane protection mechanism to the AN device, wherein the AN device is configured to determine a security protection algorithm based on the user plane protection mechanism, the AN device is further configured to generate a first user plane protection key based on the security protection algorithm and send the security protection algorithm to the user equipment, and the user equipment is configured to generate a second user plane protection key based on the security protection algorithm;
when the network device is a core network CN device, the policy function network element is configured to send the user plane protection mechanism to the algorithm network element, wherein the algorithm network element is further configured to determine a security protection algorithm based on the user plane protection mechanism, the algorithm network element is further configured to generate a first user plane protection key based on the security protection algorithm, send the first user plane protection key to the CN device, and send the security protection algorithm to the user equipment, and the user equipment is configured to generate a second user plane protection key based on the security protection algorithm; and
the UDM is configured to store the UE registration information, and is further configured to store the subscription service data, and the AF is configured to store the service security requirement.

25. The system according to claim 24, wherein
the request further comprises at least one of a service identifier, a user equipment service identifier, a data network name DNN, and a user equipment security capability.

26. The system according to claim 24 or 25, wherein the system further comprises one or more of an authentication server function AUSF, a session management function SMF, and an access and mobility management function AMF; and
the request is an attach request, the attach request is initiated by the user equipment to the AUSF, and the attach request is used to perform bidirectional authentication between the network device and the AUSF, and is further used to trigger the policy function network element to determine the user plane protection mechanism; or
the request is a session request, the session request is initiated by the user equipment to the SMF, or is initiated by the AMF to the SMF, and the session request is used to create a session between the network device and the SMF, and is further used to trigger the policy function network element to determine the user plane protection mechanism; or
the request is a policy request, the policy request is initiated by the SMF to the policy function network element, and the policy request is used to trigger the policy function network element to determine the user plane protection mechanism.

27. The system according to any one of claims 24 to 26, wherein the user plane protection mechanism is further used to indicate at least one of a security protection algorithm, a key length, and a key update period that need to be used for the user plane data transmitted between the user equipment and the network device.

28. The system according to any one of claims 24 to 27, wherein the user plane protection mechanism is further used to indicate a list of security protection algorithms, with priorities, that may be used for the user plane data transmitted between the user equipment and the network device.

29. The system according to any one of claims 24 to 28, wherein the policy function network element is one of a policy control function PCF, the authentication server function AUSF, the access and mobility management function AMF, the session management function SMF, and the AN device.

30. The system according to any one of claims 24 to 29, wherein
the CN device is a user plane function UPF; and
the algorithm network element comprises at least one of the PCF, the AUSF, the AMF, the SMF, and the AN device.

31. The system according to any one of claims 24 to 30, wherein
that the AN device is configured to determine a security protection algorithm based on the user plane protection mechanism comprises:
if the user plane protection mechanism comprises no security protection algorithm, the AN device is configured to determine the security protection algorithm based on at least one of the user plane protection mechanism, the user equipment security capability, and an algorithm priority list supported by the AN device; or
if the user plane protection mechanism comprises a security protection algorithm, the AN device is configured to directly obtain the security protection algorithm in the user plane protection mechanism.

32. The system according to any one of claims 24 to 30, wherein
that the algorithm network element is configured to determine a security protection algorithm based on the user plane protection mechanism comprises:
if the user plane protection mechanism comprises no security protection algorithm, the algorithm network element is configured to determine the security protection algorithm based on at least one of the user plane protection mechanism, the user equipment security capability, and an algorithm priority list supported by the CN device; or
if the user plane protection mechanism comprises a security protection algorithm, the algorithm network element is configured to directly obtain the security protection algorithm in the user plane protection mechanism.

33. The system according to any one of claims 26 to 32, wherein
when the network device is an AN device, that the AN device is configured to generate a first user plane protection key based on the security protection algorithm comprises:
first user plane protection key = KDF(K_AN, UP algorithm ID), wherein K_AN is a base station key derived, after authentication succeeds, by the AMF based on a base key obtained after the authentication or a key derived again after the authentication, and the AN device is configured to obtain K_AN from the AMF; or
when the network device is a CN device, that the algorithm network element is configured to generate a first user plane protection key based on the security protection algorithm comprises:
first user plane protection key = KDF(K_algorithm network element, UP algorithm ID), wherein K_algorithm network element is a base station key derived, after authentication succeeds, by the AMF or the AUSF based on a base key obtained after the authentication or a key derived again after the authentication, and the algorithm network element is configured to obtain K_algorithm network element from the AMF or the AUSF, wherein
UP algorithm ID is an identifier of an encryption algorithm or an identifier of an integrity protection algorithm, and KDF is a key derivation function.

34. The system according to claims 24 to 32, wherein the SMF is further configured to determine that the user plane data is carried on a quality of service flow QoS flow transport channel; and
if a quality of service flow identifier QoS flow ID corresponding to the QoS flow transport channel exists, and a QoS flow corresponding to the QoS flow ID meets a user plane protection mechanism or a QoS requirement or both a user plane protection mechanism and a QoS requirement, the SMF is configured to select the QoS flow transport channel to transmit the user plane data; otherwise, the SMF is configured to newly create a QoS flow transport channel, and generate a QoS flow ID corresponding to the QoS flow transport channel; or
if a QoS flow ID corresponding to the QoS flow transport channel exists, and a QoS flow corresponding to the QoS flow ID meets a user plane protection mechanism, the SMF is configured to select the QoS flow transport channel to transmit the user plane data; otherwise, the SMF is configured to newly create a QoS flow transport channel, and generate a QoS flow ID corresponding to the QoS flow transport channel, wherein
the QoS requirement is a requirement for a quality of service parameter in a communications network.

35. The system according to any one of claims 24 to 32, wherein the SMF is further configured to determine that the user plane data is carried on a data radio bearer DRB transport channel; and
if a data radio bearer identifier DRB ID corresponding to the DRB transport channel exists, and a DRB corresponding to the DRB ID meets a user plane protection mechanism or a QoS requirement or both a user plane protection mechanism and a QoS requirement, the SMF is configured to select the DRB transport channel to transmit the user data; otherwise, the SMF is configured to newly create a DRB transport channel, and generate a DRB ID corresponding to the DRB transport channel; or
if a DRB ID corresponding to the DRB transport channel exists, and a DRB corresponding to the DRB ID meets a user plane protection mechanism, the SMF is configured to select the DRB transport channel to transmit the user data; otherwise, the SMF is configured to newly create a DRB transport channel, and generate a DRB ID corresponding to the DRB transport channel, wherein
there is a mapping relationship between the DRB ID and the user plane protection mechanism.

36. The system according to any one of claims 24 to 32, wherein the SMF is configured to determine that the user plane data is carried on a session session transport channel; and
if a session identifier session ID corresponding to the session transport channel exists, and a session corresponding to the session ID meets a user plane protection mechanism or a QoS requirement or both a user plane protection mechanism and a QoS requirement, the SMF is configured to select the session transport channel to transmit the user data; otherwise, the SMF is configured to newly create a session transport channel, and generate a session ID corresponding to the session transport channel; or
if a session ID corresponding to the session transport channel exists, and a session corresponding to the session ID meets a user plane protection mechanism, the SMF is configured to select the session transport channel to transmit the user data; otherwise, the SMF is configured to newly create a session transport channel, and generate a session ID corresponding to the session transport channel, wherein
there is a mapping relationship between the session ID and the user plane protection mechanism.

37. The system according to any one of claims 34 to 36, wherein the determining a user plane protection mechanism further comprises:
establishing a mapping from the session ID and the QoS flow ID to the DRB ID, so that QoS flows with a same user plane protection mechanism are mapped to a same DRB.

38. The system according to any one of claims 34 to 37, wherein when the network device is an AN device, that the AN device is configured to generate a first user plane protection key based on the security protection algorithm comprises:
first user plane protection key = KDF(K_AN, UP algorithm ID); or
first user plane protection key = KDF(K_AN, UP algorithm ID, flow ID); or
first user plane protection key = KDF(K_AN, UP algorithm ID, session ID); or
first user plane protection key = KDF(K_AN, UP algorithm ID, DRB ID).

39. The system according to any one of claims 34 to 37, wherein when the network device is a CN device, that the algorithm network element is configured to generate a first user plane protection key based on the security protection algorithm comprises:
first user plane protection key = KDF(K_algorithm network element, UP algorithm ID); or
first user plane protection key = KDF(K_algorithm network element, UP algorithm ID, flow ID); or
first user plane protection key = KDF(K_algorithm network element, UP algorithm ID, session ID); or first user plane protection key = KDF(K algorithm network element, UP algorithm ID, DRB ID).

40. A key configuration method, comprising:
sending, by user equipment, a request, wherein the request comprises a user equipment identifier;
receiving, by the user equipment, a response, wherein the response carries a security protection algorithm, the security protection algorithm is determined by using a user plane protection mechanism, the user plane protection mechanism is determined by a policy function network element based on the request and at least one of UE registration information fed back by a unified data manager UDM, subscription service data fed back by the UDM, and a service security requirement fed back by an application function AF, and the user plane protection mechanism is used to indicate whether encryption, integrity protection, or both encryption and integrity protection are required for user plane data transmitted between the user equipment and a network device; and
determining, by the user equipment, a user plane protection key based on the security protection algorithm, wherein the user plane protection key is used to perform security protection on the user plane data transmitted between the user equipment and the network device.

41. The method according to claim 40, wherein
the request further comprises at least one of a service identifier, a user equipment service identifier, a data network name DNN, and a user equipment security capability.

42. The method according to claim 40 or 41, wherein
the request is an attach request, the attach request is initiated by the user equipment to an authentication server function AUSF, and the attach request is used to perform bidirectional authentication between the network device and the AUSF, and is further used to trigger the policy function network element to determine the user plane protection mechanism; or
the request is a session request, the session request is initiated by the user equipment to a session management function SMF, or is initiated by an access and mobility management function AMF to the SMF, and the session request is used to create a session between the network device and the SMF, and is further used to trigger the policy function network element to determine the user plane protection mechanism; or
the request is a policy request, the policy request is initiated by the SMF to the policy function network element, and the policy request is used to trigger the policy function network element to determine the user plane protection mechanism.

43. The method according to any one of claims 40 to 42, wherein
the user plane protection mechanism is further used to indicate at least one of a security protection algorithm, a key length, and a key update period that need to be used for the user plane data transmitted between the user equipment and the network device.

44. The method according to any one of claims 40 to 43, wherein
the user plane protection mechanism is further used to indicate a list of security protection algorithms, with priorities, that may be used for the user plane data transmitted between the user equipment and the network device.

45. The method according to any one of claims 40 to 44, wherein
the policy function network element comprises one of a policy control function PCF, the authentication server function AUSF, the access and mobility management function AMF, the session management function SMF, and an AN device.

46. The method according to any one of claims 40 to 45, wherein
the determining, by the user equipment, a user plane protection key based on the security protection algorithm comprises:
user plane protection key = KDF(K_AN, UP algorithm ID), wherein K_AN is a base station key derived, after authentication succeeds, by the AMF based on a base key obtained after the authentication or a key derived again after the authentication, and the AN device obtains K_AN from the AMF; or
when the network device is a CN device, the generating a first user plane protection key based on the security protection algorithm comprises:
user plane protection key = KDF(K_algorithm network element, UP algorithm ID), wherein K algorithm network element is a base station key derived, after authentication succeeds, by the user equipment based on a base key obtained after the authentication or a key derived again after the authentication, wherein
UP algorithm ID is an identifier of an encryption algorithm or an identifier of an integrity protection algorithm, and KDF is a key derivation function.

47. The method according to any one of claims 40 to 46, wherein
the network device is an access network AN device or a user plane function UPF.

48. A key configuration method, comprising:
receiving, by a user plane function, a response, wherein the response carries a security protection algorithm, the security protection algorithm is determined by using a user plane protection mechanism, the user plane protection mechanism is determined by a policy function network element based on the request and at least one of UE registration information fed back by a unified data manager UDM, subscription service data fed back by the UDM, and a service security requirement fed back by an application function AF, and the user plane protection mechanism is used to indicate whether encryption, integrity protection, or both encryption and integrity protection are required for user plane data transmitted between user equipment and the user plane function; and
determining, by the user plane function, a user plane protection key based on the security protection algorithm, wherein the user plane protection key is used to perform security protection on the user plane data transmitted between the user equipment and the user plane function.

49. The method according to claim 48, wherein the user plane protection mechanism is further used to indicate at least one of a security protection algorithm, a key length, and a key update period that need to be used for the user plane data transmitted between the user equipment and the network device.

50. The method according to claim 48 or 49, wherein the user plane protection mechanism is further used to indicate a list of security protection algorithms, with priorities, that may be used for the user plane data transmitted between the user equipment and the network device.

51. The method according to any one of claims 48 to 50, wherein the policy function network element comprises one of a policy control function PCF, an authentication server function AUSF, an access and mobility management function AMF, a session management function SMF, and an AN device.

52. A key configuration method, comprising:
receiving, by an access network device, a user plane protection mechanism, wherein the user plane protection mechanism is determined by a policy function network element based on the request and at least one of UE registration information fed back by a unified data manager UDM, subscription service data fed back by the UDM, and a service security requirement fed back by an application function AF, and the user plane protection mechanism is used to indicate whether encryption, integrity protection, or both encryption and integrity protection are required for user plane data transmitted between the user equipment and a network device;
determining, by the access network device, a security protection algorithm based on the user plane protection mechanism, and generating a first user plane protection key based on the security protection algorithm; and
sending, by the access network device, the security protection algorithm to the user equipment, so that the user equipment generates a second user plane protection key based on the security protection algorithm.

53. The method according to claim 52, wherein the user plane protection mechanism is further used to indicate at least one of a security protection algorithm, a key length, and a key update period that need to be used for the user plane data transmitted between the user equipment and the network device.

54. The method according to claim 52 or 53, wherein the user plane protection mechanism is further used to indicate a list of security protection algorithms, with priorities, that may be used for the user plane data transmitted between the user equipment and the network device.

55. The method according to any one of claims 52 to 54, wherein the policy function network element comprises one of a policy control function PCF, an authentication server function AUSF, an access and mobility management function AMF, a session management function SMF, and an AN device.

56. The method according to any one of claims 52 to 55, wherein
that the access network device is configured to determine a security protection algorithm based on the user plane protection mechanism comprises:
if the user plane protection mechanism comprises no security protection algorithm, determining the security protection algorithm based on at least one of the user plane protection mechanism and an algorithm priority list supported by the access network device; or if the user plane protection mechanism comprises a security protection algorithm, directly obtaining the security protection algorithm in the user plane protection mechanism.

57. The method according to any one of claims 52 to 56, wherein
the generating a first user plane protection key based on the security protection algorithm comprises:
first user plane protection key = KDF(K_AN, UP algorithm ID), wherein K_AN is a base station key derived, after authentication succeeds, by the AMF based on a base key obtained after the authentication or a key derived again after the authentication, and the access network device obtains K_AN from the AMF, wherein
UP algorithm ID is an identifier of an encryption algorithm or an identifier of an integrity protection algorithm, and KDF is a key derivation function.

58. A key configuration method, comprising:
receiving, by a session management function, a request for communication between user equipment and a network device, wherein the request comprises a session identifier, a user equipment identifier, and security requirement indication information, and the security requirement indication information is used to indicate a user equipment security requirement and/or a service security requirement;
determining, by the session management function, a user plane protection mechanism based on the request and at least one of UE registration information fed back by a unified data manager UDM, subscription service data fed back by the UDM, and a service security requirement fed back by an application function AF, wherein the user plane protection mechanism is used to indicate whether encryption, integrity protection, or both encryption and integrity protection are required for user plane data transmitted between the user equipment and the network device; and
when the network device is an access network AN device, sending, by the session management function, the user plane protection mechanism to the AN device, wherein the AN device is configured to determine a security protection algorithm based on the user plane protection mechanism, and generate a first user plane protection key based on the security protection algorithm, and the AN device is further configured to send the security protection algorithm to the user equipment, so that the user equipment generates a second user plane protection key based on the security protection algorithm; or
when the network device is a core network CN device, sending, by the session management function, the user plane protection mechanism to an algorithm network element, wherein the algorithm network element is configured to determine a security protection algorithm based on the user plane protection mechanism, generate a first user plane protection key based on the security protection algorithm, and send the first user plane protection key to the CN device, and the algorithm network element is further configured to send the security protection algorithm to the user equipment, so that the user equipment generates a second user plane protection key based on the security protection algorithm.

59. The method according to claim 58, wherein
the request further comprises at least one of a service identifier, a user equipment service identifier, a data network name DNN, and a user equipment security capability.

60. The method according to claim 58 or 59, wherein
the request is an attach request, the attach request is initiated by the user equipment to an authentication server function AUSF, and the attach request is used to perform bidirectional authentication between the network device and the AUSF, and is further used to trigger the policy function network element to determine the user plane protection mechanism; or
the request is a session request, the session request is initiated by the user equipment to a session management function SMF, or is initiated by an access and mobility management function AMF to the SMF, and the session request is used to create a session between the network device and the SMF, and is further used to trigger the policy function network element to determine the user plane protection mechanism; or
the request is a policy request, the policy request is initiated by the SMF to the policy function network element, and the policy request is used to trigger the policy function network element to determine the user plane protection mechanism.

61. The method according to any one of claims 58 to 60, wherein the user plane protection mechanism is further used to indicate at least one of a security protection algorithm, a key length, and a key update period that need to be used for the user plane data transmitted between the user equipment and the network device.

62. The method according to any one of claims 58 to 61, wherein the user plane protection mechanism is further used to indicate a list of security protection algorithms, with priorities, that may be used for the user plane data transmitted between the user equipment and the network device.

63. The method according to any one of claims 58 to 62, comprising: determining, by the session management function, that the user plane data is carried on a quality of service flow QoS flow transport channel; and
if a quality of service flow identifier QoS flow ID corresponding to the QoS flow transport channel exists, and a QoS flow corresponding to the QoS flow ID meets a user plane protection mechanism or a QoS requirement or both a user plane protection mechanism and a QoS requirement, selecting the QoS flow transport channel to transmit the user plane data; otherwise, newly creating a QoS flow transport channel, and generating a QoS flow ID corresponding to the QoS flow transport channel; or if a QoS flow ID corresponding to the QoS flow transport channel exists, and a QoS flow corresponding to the QoS flow ID meets a user plane protection mechanism, selecting the QoS flow transport channel to transmit the user plane data; otherwise, newly creating a QoS flow transport channel, and generating a QoS flow ID corresponding to the QoS flow transport channel, wherein
the QoS requirement is a requirement for a quality of service parameter in a communications network.

64. The method according to any one of claims 58 to 62, comprising: determining, by the session management function, that the user plane data is carried on a data radio bearer DRB transport channel; and
if a data radio bearer identifier DRB ID corresponding to the DRB transport channel exists, and a DRB corresponding to the DRB ID meets a user plane protection mechanism or a QoS requirement or both a user plane protection mechanism and a QoS requirement, selecting the DRB transport channel to transmit the user data; otherwise, newly creating a DRB transport channel, and generating a DRB ID corresponding to the DRB transport channel; or if a DRB ID corresponding to the DRB transport channel exists, and a DRB corresponding to the DRB ID meets a user plane protection mechanism, selecting the DRB transport channel to transmit the user data; otherwise, newly creating a DRB transport channel, and generating a DRB ID corresponding to the DRB transport channel, wherein
there is a mapping relationship between the DRB ID and the user plane protection mechanism.

65. The method according to any one of claims 58 to 62, comprising: determining, by the session management function, that the user plane data is carried on a session session transport channel; and
if a session identifier session ID corresponding to the session transport channel exists, and a session corresponding to the session ID meets a user plane protection mechanism or a QoS requirement or both a user plane protection mechanism and a QoS requirement, selecting the session transport channel to transmit the user data; otherwise, newly creating a session transport channel, and generating a session ID corresponding to the session transport channel; or if a session ID corresponding to the session transport channel exists, and a session corresponding to the session ID meets a user plane protection mechanism, selecting the session transport channel to transmit the user data; otherwise, newly creating a session transport channel, and generating a session ID corresponding to the session transport channel, wherein
there is a mapping relationship between the session ID and the user plane protection mechanism.

66. A readable non-volatile storage medium for storing a computer instruction, comprising a computer instruction, wherein the computer instruction is executed to implement the method described in any one of claims 1 to 16.

67. A computer program product, wherein when the computer program product is run on a computer, the method described in any one of claims 1 to 16 is implemented.
